Europäisches Patentamt

European Patent Office

Office européen des brevets

(11) Publication number: **0 689 122 A1**

# EUROPEAN PATENT APPLICATION
## published in accordance with Art. 158(3) EPC

(21) Application number: 95906501.2

(22) Date of filing: **20.01.95**

(86) International application number:
**PCT/JP95/00062**

(87) International publication number:
**WO 95/20187 (27.07.95 95/32)**

(51) Int. Cl.⁶: **G06F 3/02**

(30) Priority: **24.01.94 JP 5974/94**

(43) Date of publication of application:
**27.12.95 Bulletin 95/52**

(84) Designated Contracting States:
**DE FR GB**

(71) Applicant: **MATSUSHITA ELECTRIC INDUSTRIAL CO., LTD.**
**1006, Ohaza Kadoma**
**Kadoma-shi,**
**Osaka 571 (JP)**

(72) Inventor: **MURAI, Katsumi**
**Nishi 2-919,**
**6 Banchi, Sotojimachou**
**Moriguchishi,**
**Osaka 570 (JP)**
Inventor: **HASHIMOTO, Kenji**

**Shoushin-Ryo,**
**24-2, Fujinokidai 3-chome**
**Nara-shi,**
**Nara 630 (JP)**
Inventor: **SAWAI, Tsurugi**
**5-13, Katayamatyou 3-chome,**
**Nagataku**
**Koube-shi,**
**Hyougo 653 (JP)**
Inventor: **HORIOKA, Atsushi**
**1-18-808, Oomiyatyou 3-chome**
**Nara-shi,**
**Nara 630 (JP)**

(74) Representative: **Grünecker, Kinkeldey,**
**Stockmair & Schwanhäusser**
**Anwaltssozietät**
**Maximilianstrasse 58**
**D-80538 München (DE)**

(54) **DATA INPUT PROCESSOR**

(57) A data input processor which facilitates data entry. As shown in the figure, a keyboard (16) with keys (1) is displayed on a screen (10). When a finger touches or comes very close to one of the keys, the image of the key is reversed on the screen (10). Accordingly, an operator can confirm which key he or she is going to depress on the screen, and thus the operator can strike the object key (1) and input data in a word processor with confidence. Therefore, an input error can be reduced and the input operation can be made easily.

Fig. 7

I was□
ⒶⒷⒸ②

| P | T | W |
|---|---|---|
| G | J | M |
| A | D |  |
| Q | · | # |

10

4
sensing circuit

11
15
sensing circuit

1 3 1 3
3 2 3 2 3
1 1 1
3 2 3 2 3
2 2

A/D converter

9

key scan circuit

C P U

display circuit

5

6

8

7 memory circuit

2

## TECHNICAL FIELD

The present invention relates to an input processing system for characters and pattern information, or more in particular to an information input processing system capable of being input even with a single hand and a coordinate input system.

## BACKGROUND ART

In recent years, the extended use of personal computers has made many documents electronic data. In spite of this, every person cannot operate the keyboard. Especially, there are not so many people who can enter data at high speed with blind touch. One of the reason for this is that the key arrangement on the current keyboard has no special meaning and lacks the logical connection and therefore difficult to remember. Also, the recent trend is toward a directly-operated interface such as a mouse. In extreme cases, information can be entered or accessed without using the keyboard. Nevertheless, the latter method using the mouse or the like has its advantages and disadvantages. The pen input system which is widely proposed, on the other hand, poses the problem of entry speed and has yet to form a mainstream.

It is therefore necessary to review the keyboard system. First, the number of keys on the keyboard which is too many is required to be reduced by any means. For this purpose, it is necessary to express a code by a combination of a plurality of keys and to assign a plurality of codes to each key. When a plurality of codes are assigned to each key, however, each key becomes difficult to remember. Novice users learn the keys while searching for characters on keytops. A complicated system, however, poses an obstacle to such a process and makes difficult early transfer to blind touch. Further, users operating the keyboard on the job try to learn the key layout earnestly, while the home or entertainment users are less motivated to learn the key layout.

On the other hand, the keyboard is an optimum means for character entry. The mouse is not suited to pattern input to which the tablet is most suitable. For entering information in simplistic fashion, the button system with keys is an optimum means. Further, the tablet, which cannot easily transmit reaction directly to the operator by physical depression like the keyboard, requires a separate mechanism such as a switch.

In view of this, there is a demand for an input device easily operable by the novice users, which gives the feeling of a mechanical operation like the keyboard as a pointing device such as a tablet without considerable increase in hardware scale. A pointing device requires a positional selection.

Even when a mechanism is provided for positional selection by depressing a tablet, the particular position selected is not identified when a plurality of fingers are placed on the tablet. A superior operability is desired as when selection is made by applying a force with fingers placed at the actually-selected positions (keys) on the keyboard.

Accordingly, an object of the present invention is to provide an information input processing system, in which in view of the above-mentioned problems of the conventional systems, the keys on the keyboard or the positional information are proposed to the user before normal key operation thereby to assist in blind touch and reduce the error in key operation, or to permit the operation with a single hand, thus making it possible to enter input data comfortably in all scenes.

Another object of the invention is to provide an information input system, in which taking advantage of the fact that the touch degree of fingers applied to the tablet is proportional to the finger pressure, the finger position is detected from the touch information for detecting the finger coordinate position, and at the same time the change in finger touch degree with a force applied beyond a predetermined setting is detected by the same sensor, whereby both positional information and selection information are input.

## DISCLOSURE OF THE INVENTION

The present invention is such information input apparatus comprising:

a plurality of switch circuits;

an array of keys for opening and closing the switch circuits through transmission of forces;

a plurality of sensors for detecting direct contact or proximity of a finger to all or a part of the keys;

a signal processing means for receiving and processing data outputs from the sensors and switch circuits;

a first display means for displaying as a corresponding information code the direct contact or proximity of the finger to the specific key detected by the sensors; and

a second display means for displaying, in a manner different from that of the first display means, a corresponding specific information code when the switch circuit is closed by pressing the specific key.

As described above, according to the invention, when the user attempts to enter input data in the keyboard, the key intended can be displayed and transmitted in the surround of the character string being entered using the peripheral visual sense without directly viewing the key tops by simply watching the display screen. The display itself is guide means different from the information input. The psychological fear that a given key, once depressed, may be impossible to restore is removed and the character about to be struck at the time of normal key entry is fed back in display beforehand to prevent an erroneous key entry. Also, according to the invention, the keys can be clicked by four fingers including the forefinger, the middle finger, the third finger and the little finger, and by making the thumb approach a plurality of thumb proximity sensors under the respective keys, one of the sensors can be designated. The movement of the thumb under the remaining four fingers is physiologically natural in a range where no unreasonable force is exerted on muscles. In addition, no fatigue occurs since the thumb position is entered with a proximity sensor requiring no force and the other keys are struck at the same time as the thumb sensor in a reasonable range including the 10-keys.

According to the invention, a proximity sensor is provided on the tablet surface, and when the operator depresses the tablet surface, it is assumed that the change in proximity or touch area due to the finger distortion is detected and a specific position is detected. Also, the position is assumed to be pointed when a finger touches lightly. In this configuration, when the operator moves the finger on the tablet, the cursor is moved and selection accomplished by depressing with the finger in the same position. For detection of the coordinate which is the center of the finger touch position, for example, the touch position on the tablet is detected, and whether a setting is exceeded by the area is checked during the process of finding the center point. Also, if a plurality of sensors are prepared for detecting a plurality of finger positions, it is possible to check which finger is pressurized. In this way, an operation similar to keyboard input can be accomplished with a minimum increase in hardware.

And the present invention is a coordinate data input apparatus comprising:

stripes of resistors mounted on a tablet;

a current applying means for applying to the striped resistors a current including alternate current components;

an insulator layer for insulating the striped resistors; and

a current measuring means for measuring a current running across the striped resistors, in which

a coordinate data along a major axis of the striped resistors is given by measuring with the current measuring means a change in the current caused by that the alternate current components of the applied current by-passes a part of the striped resistor and flows through an earth capacitance of an object which moves towards the insulator layer, and

a coordinate data along a minor axis of the striped resistors is given by measuring a change in the current applied to a specific one of the striped resistors or a difference of the current between two adjacent striped resistors.

Thus coordinate data along a major axis of the striped resistors is obtained as well as the coordinate data along a minor axis .

## BRIEF DESCRIPTION OF THE DRAWINGS

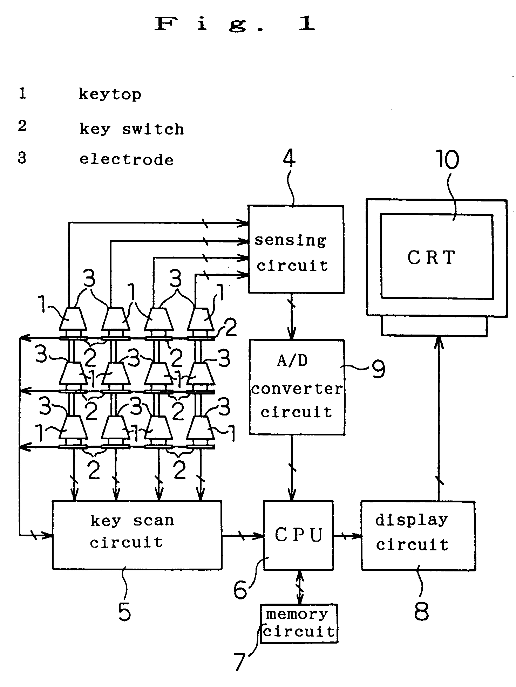

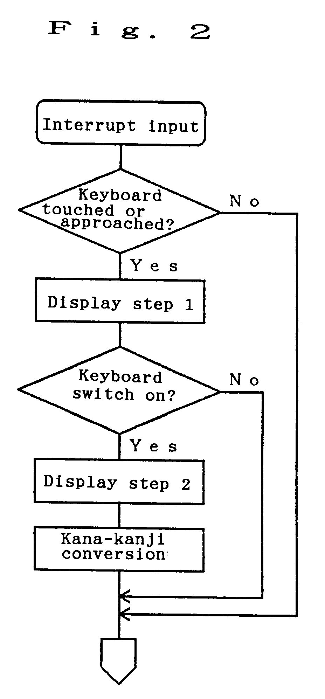

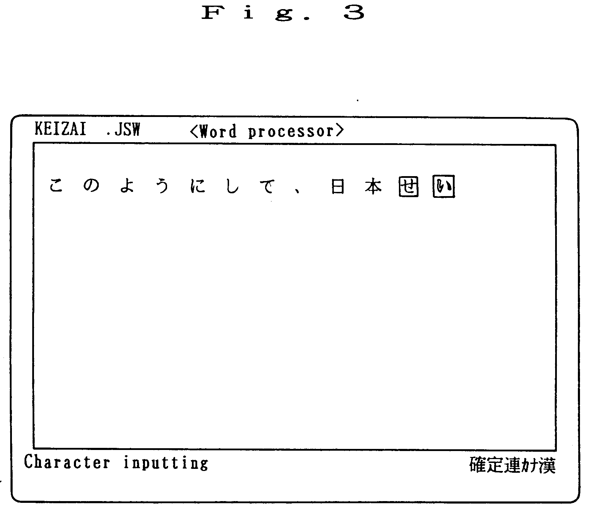

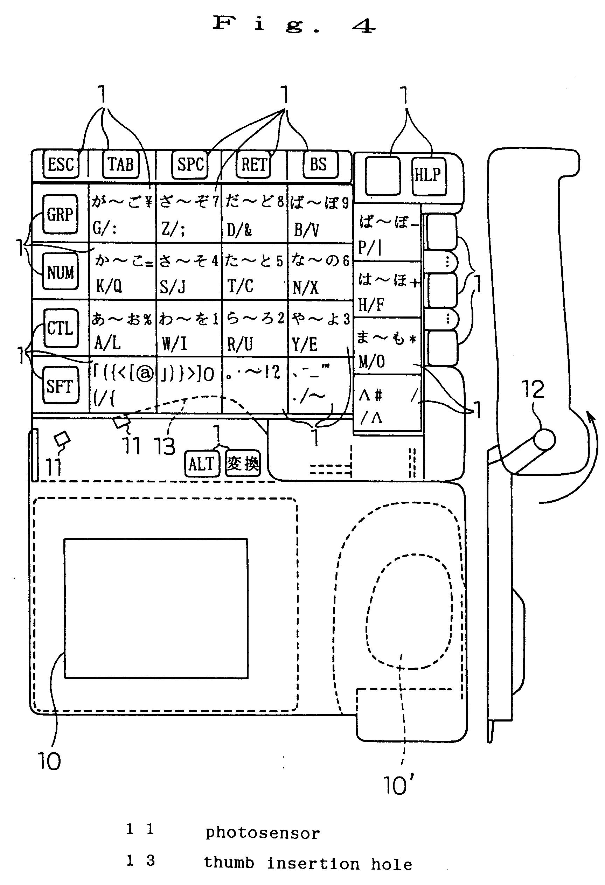

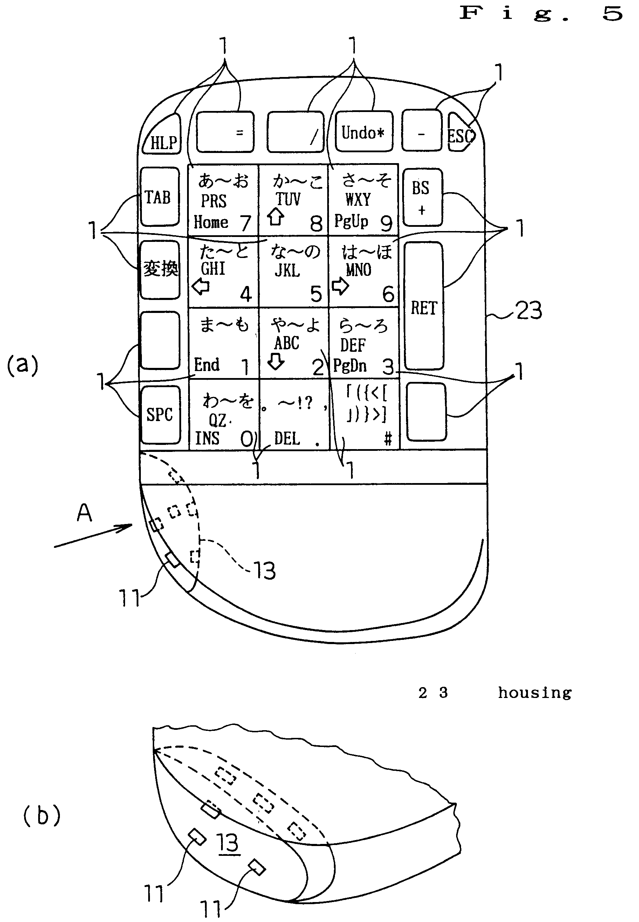

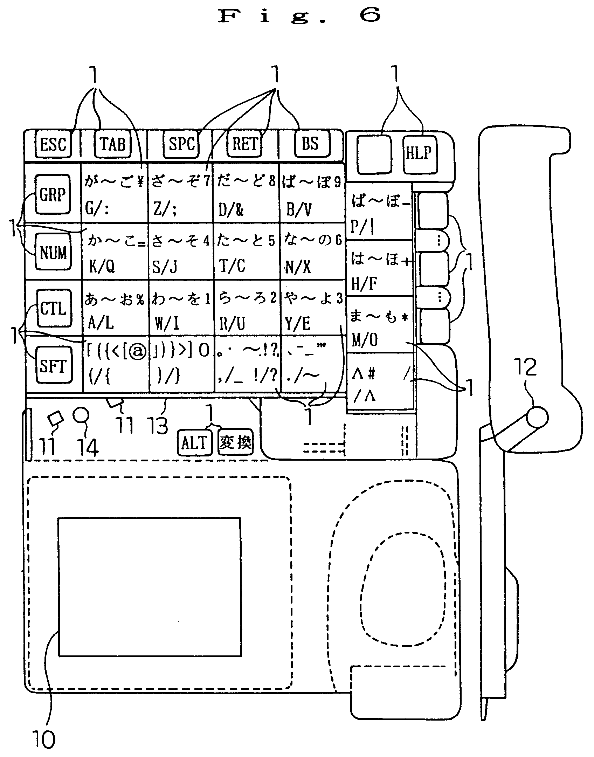

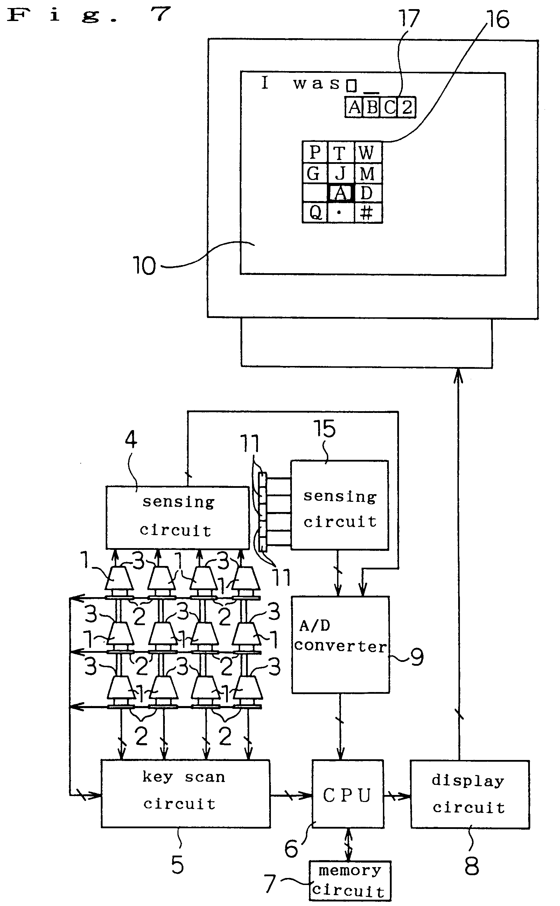

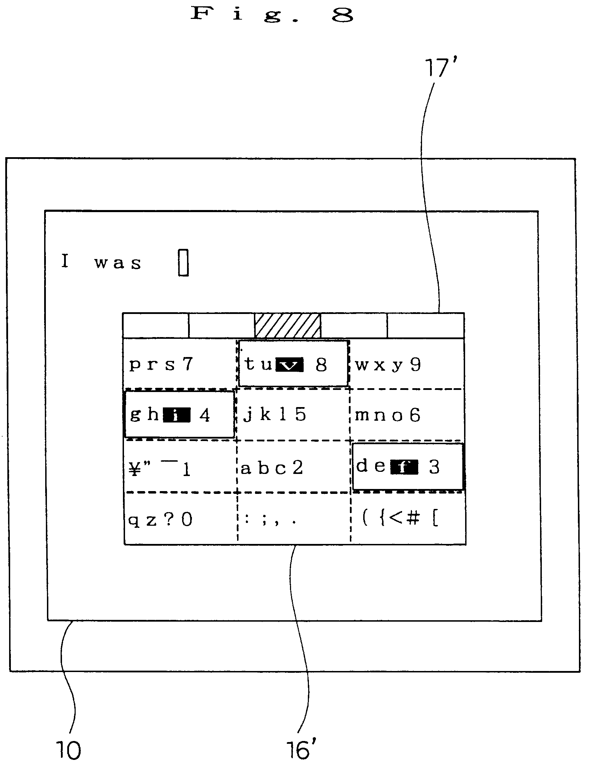

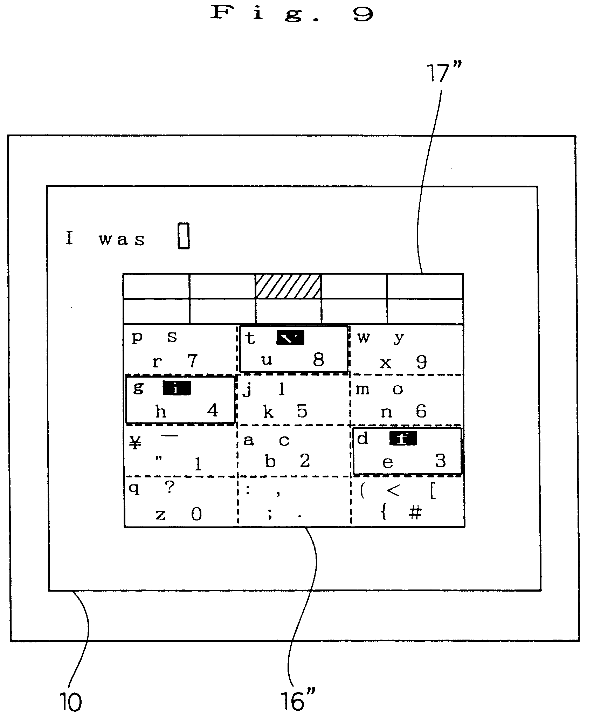

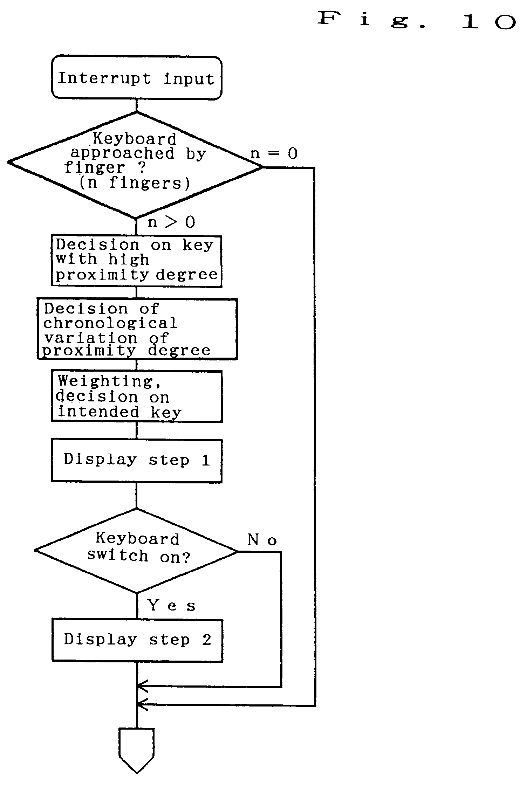

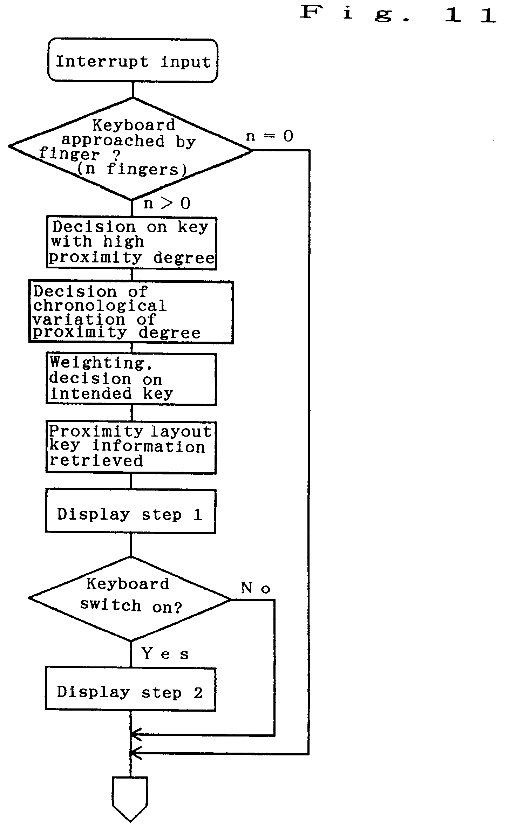

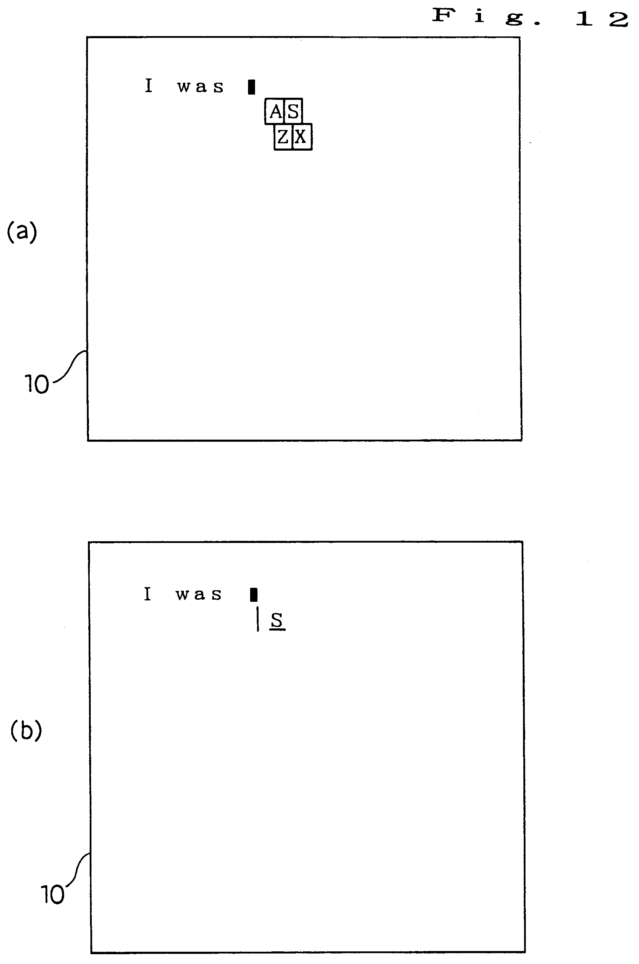

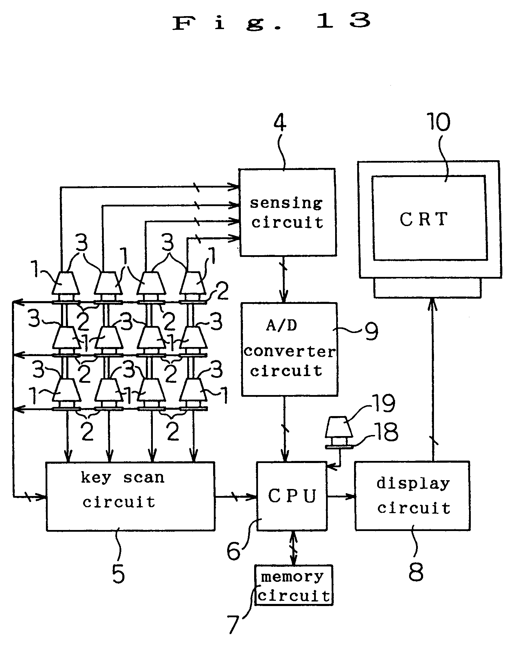

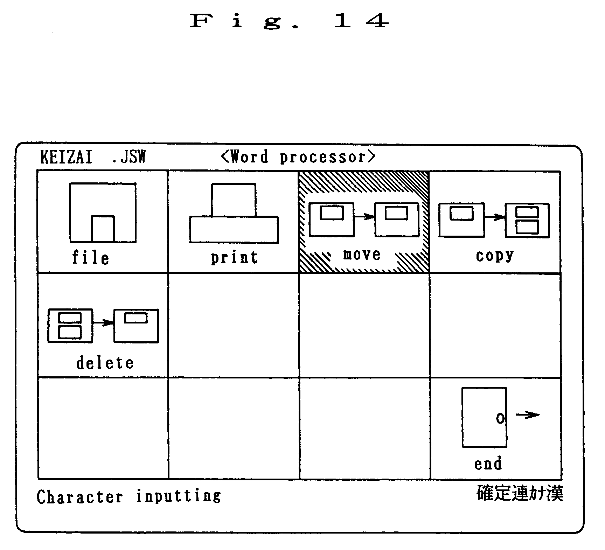

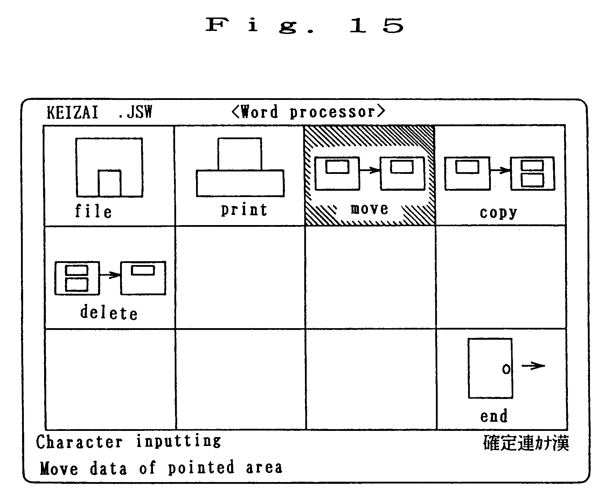

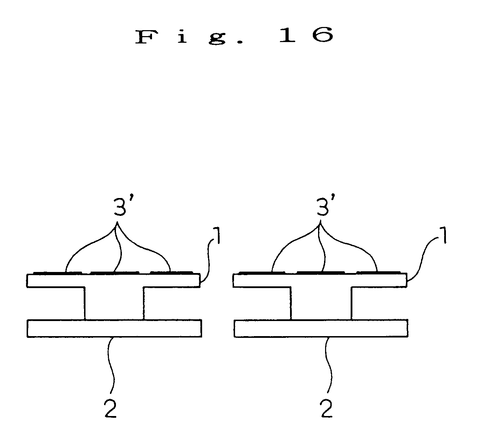

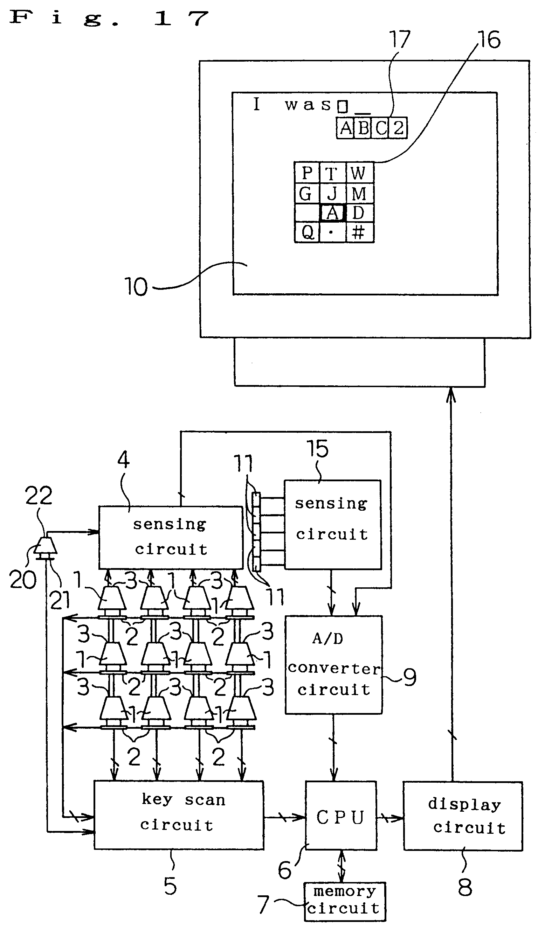

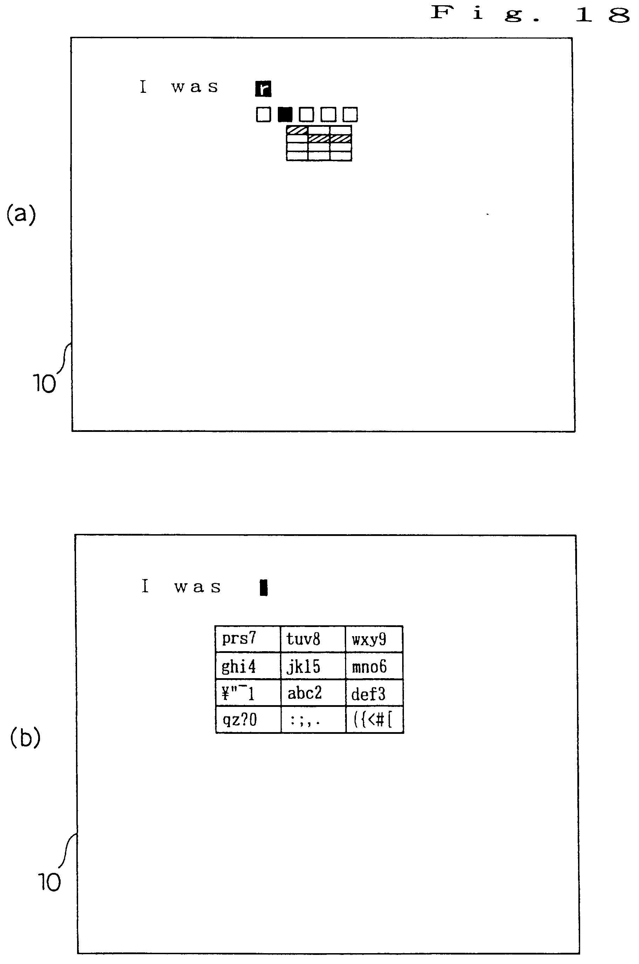

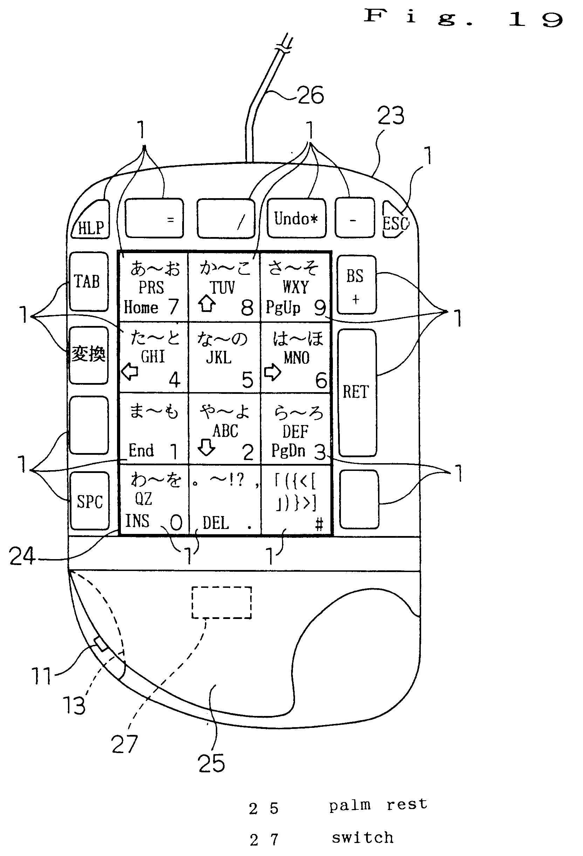

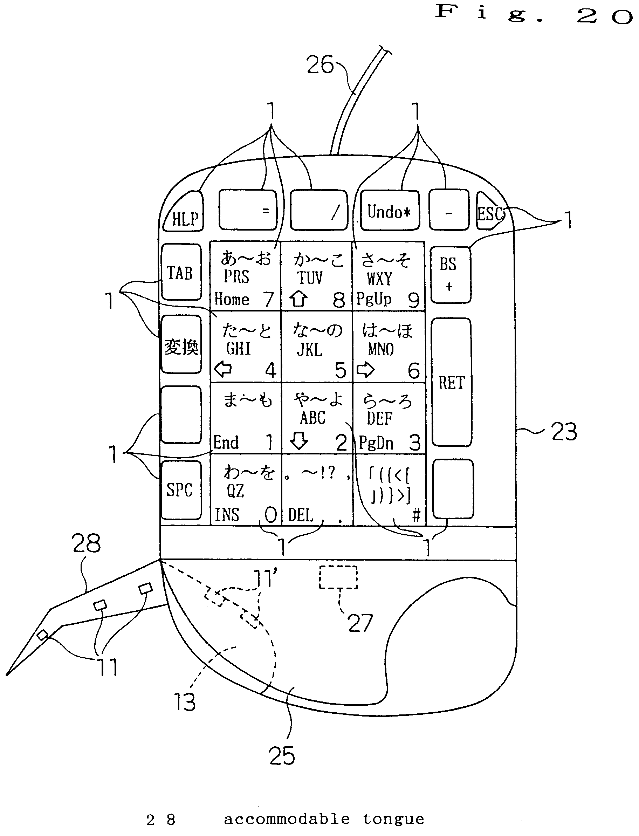

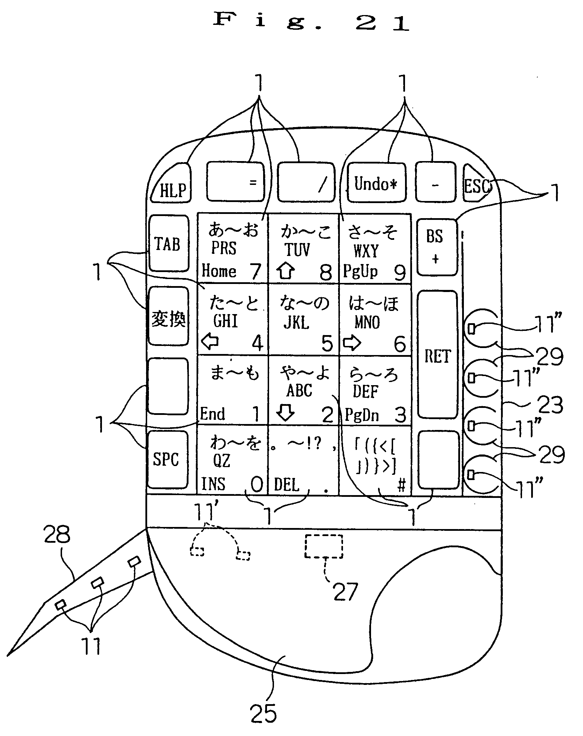

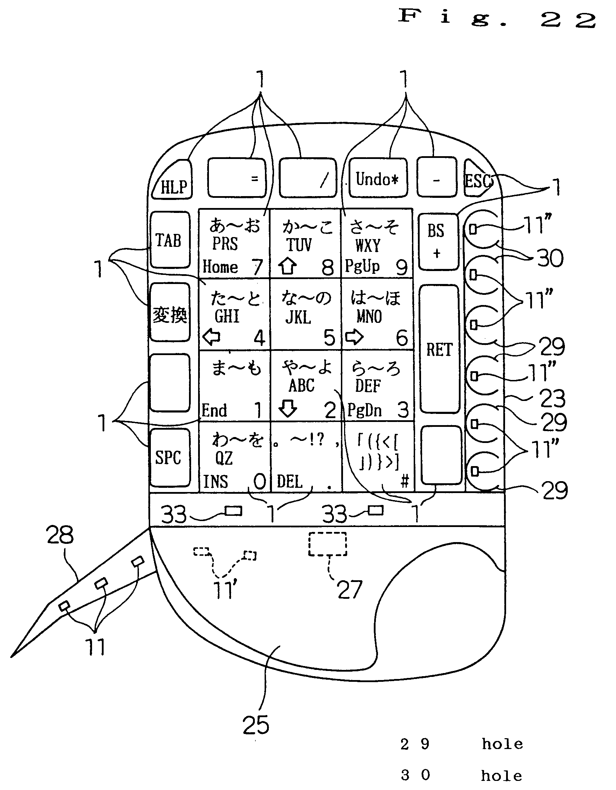

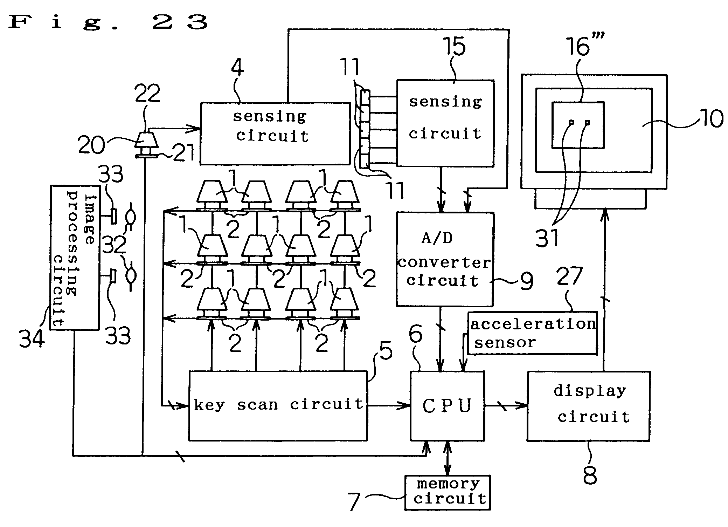

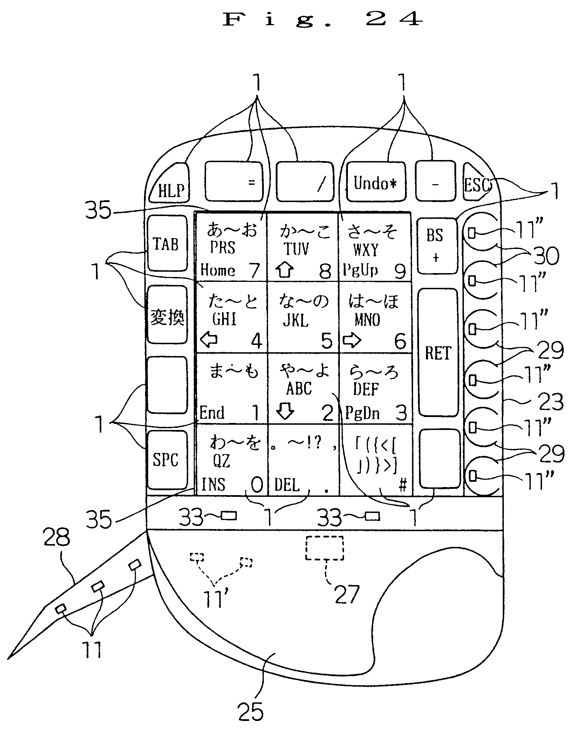

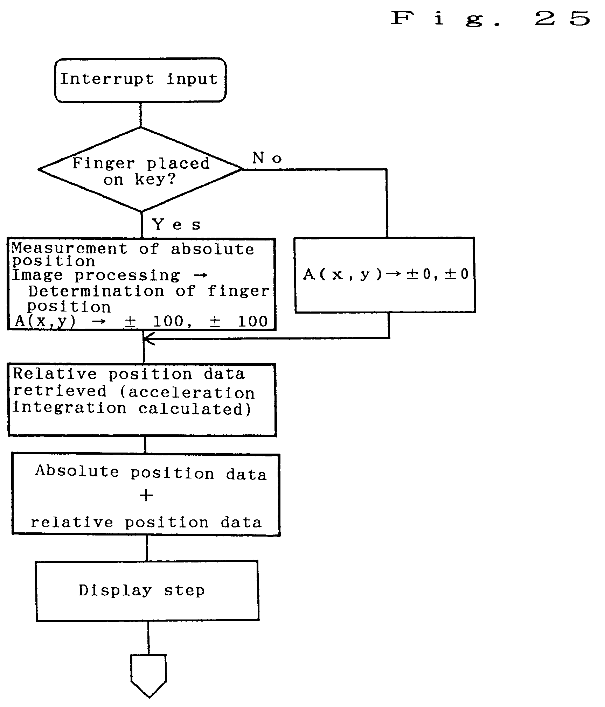

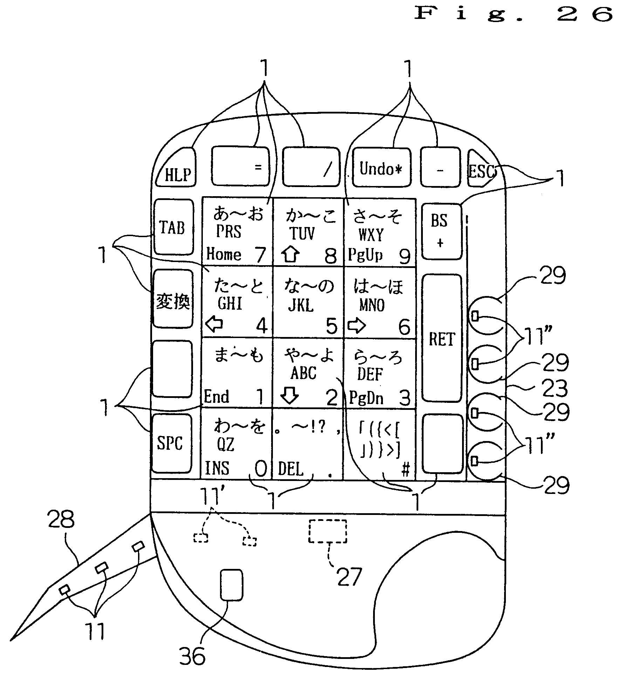

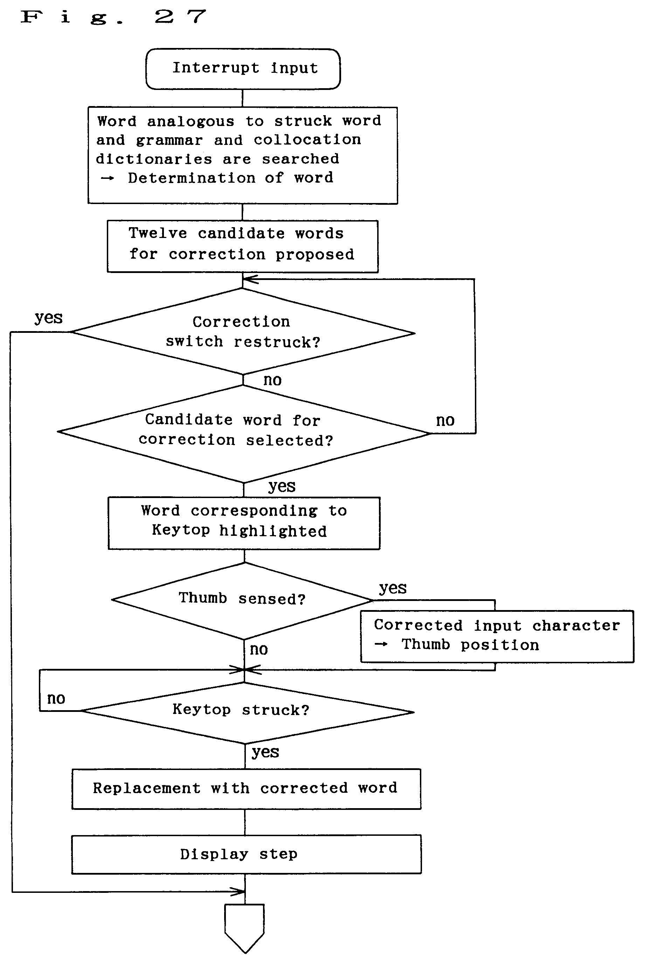

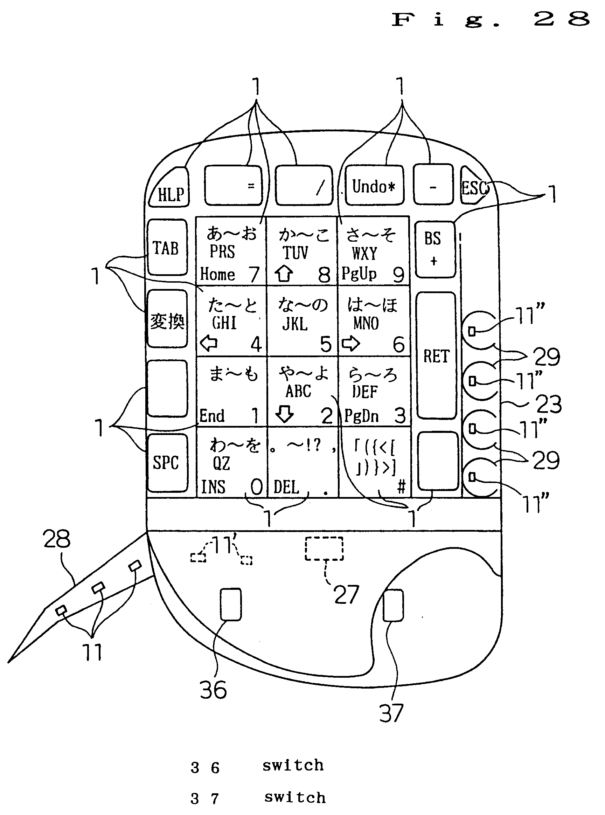

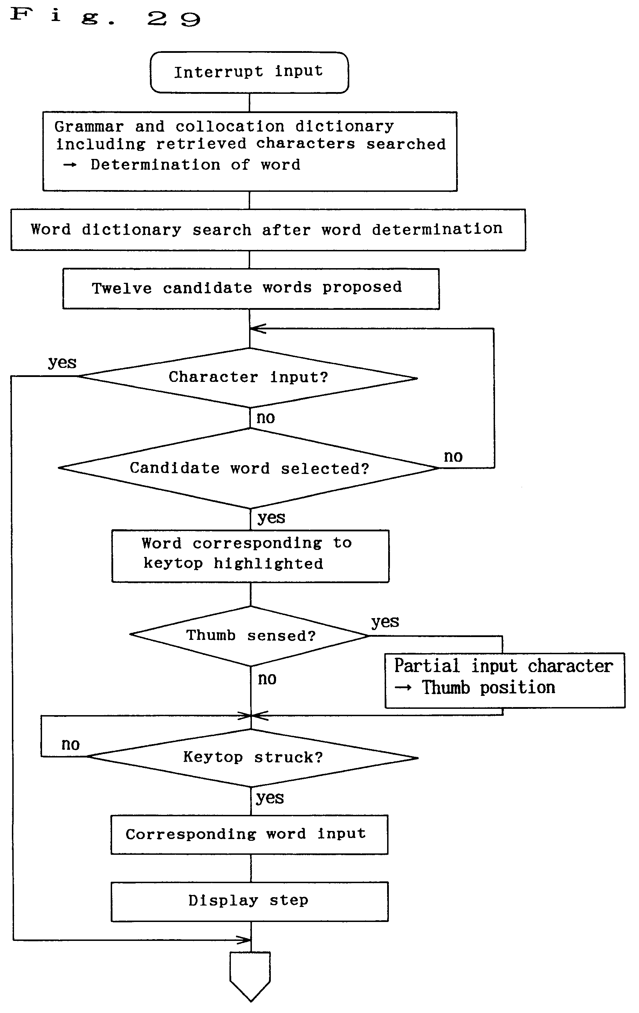

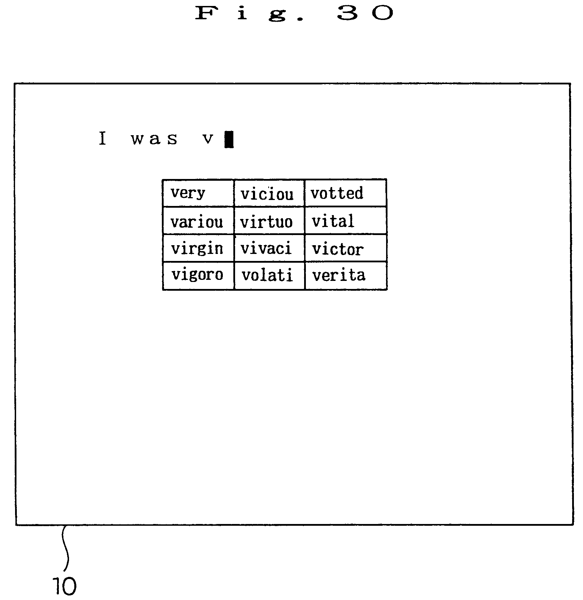

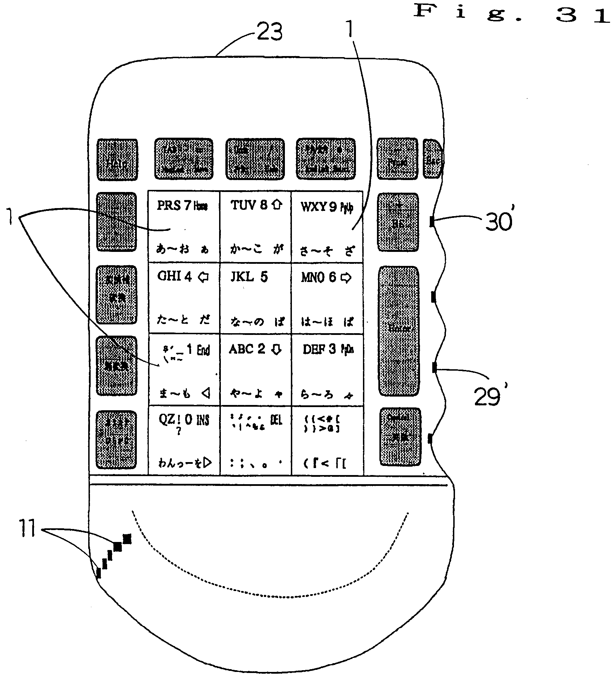

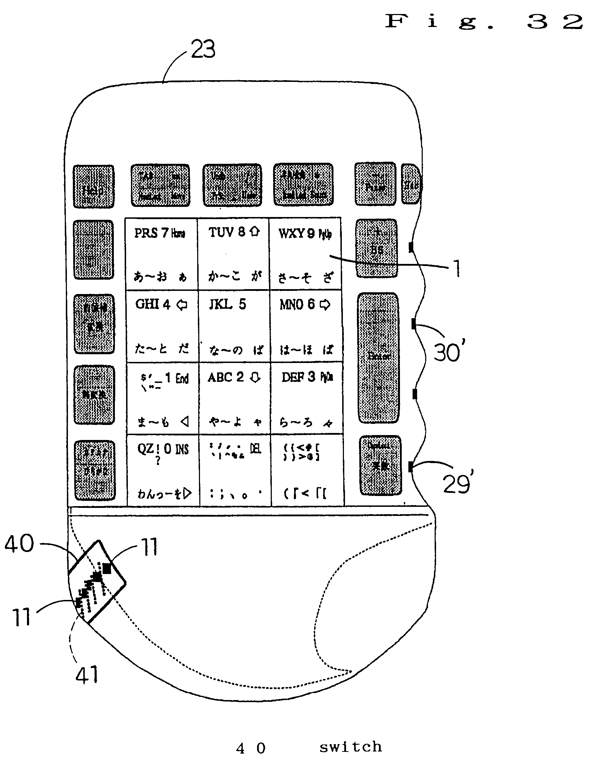

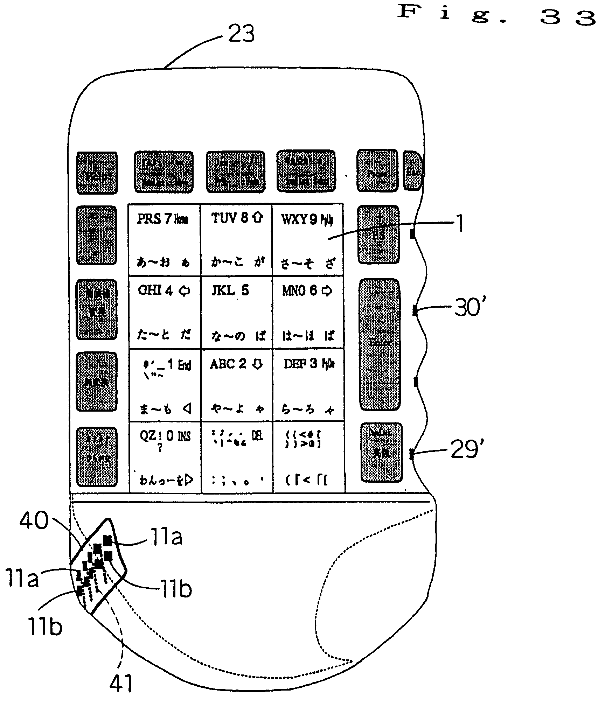

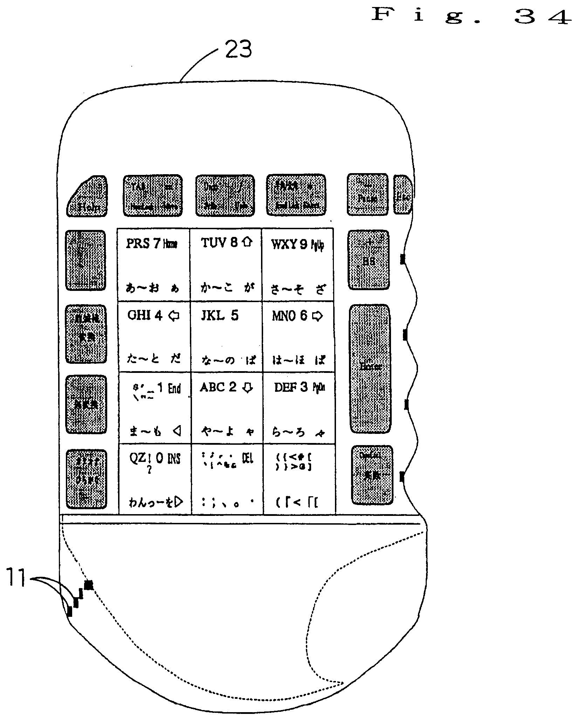

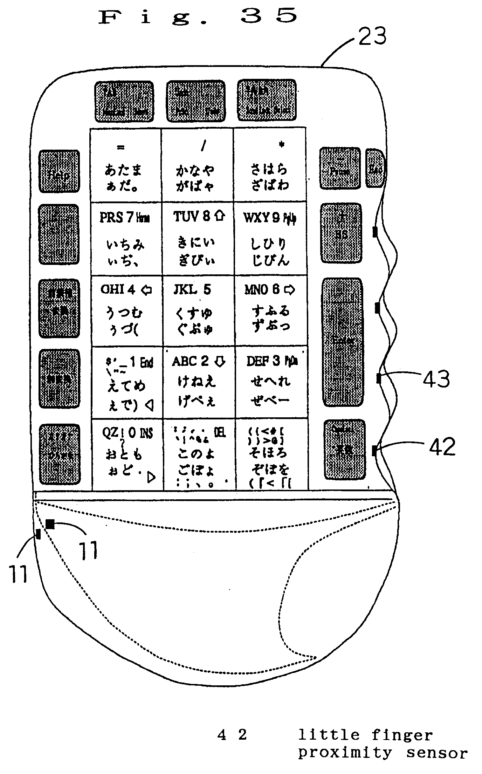

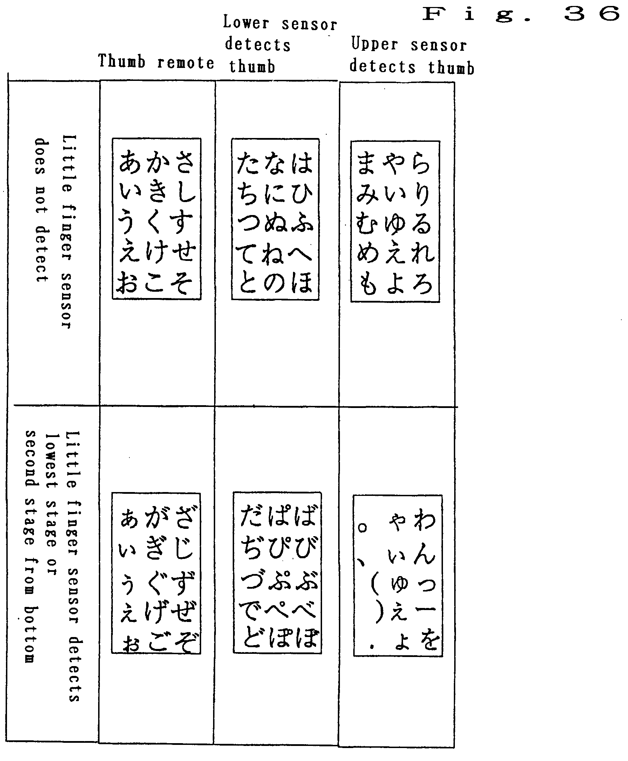

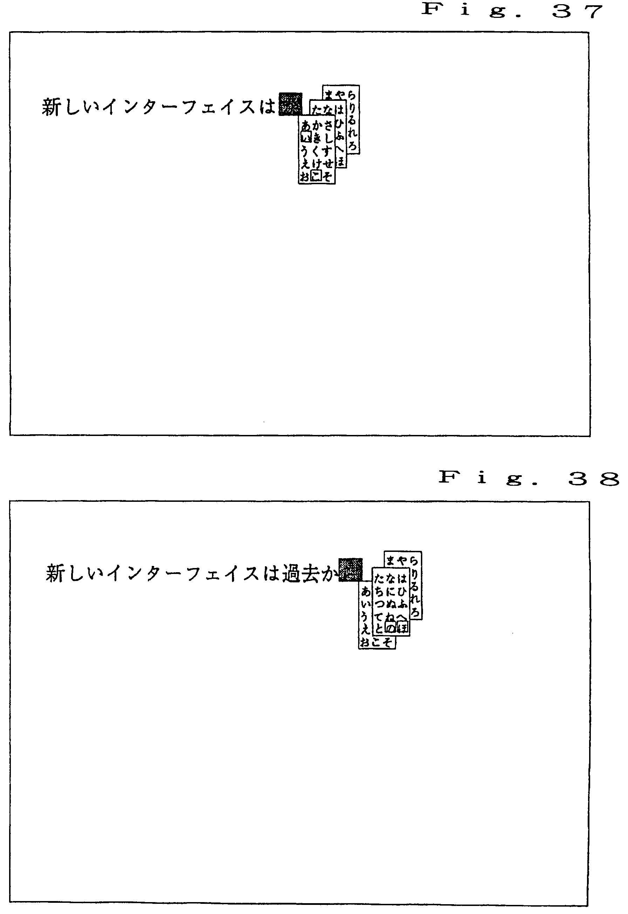

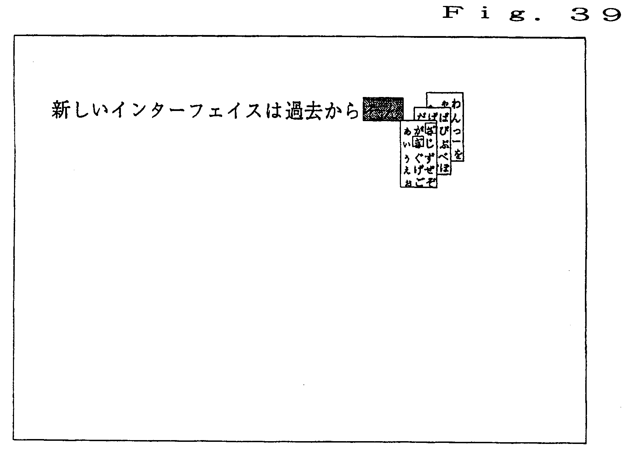

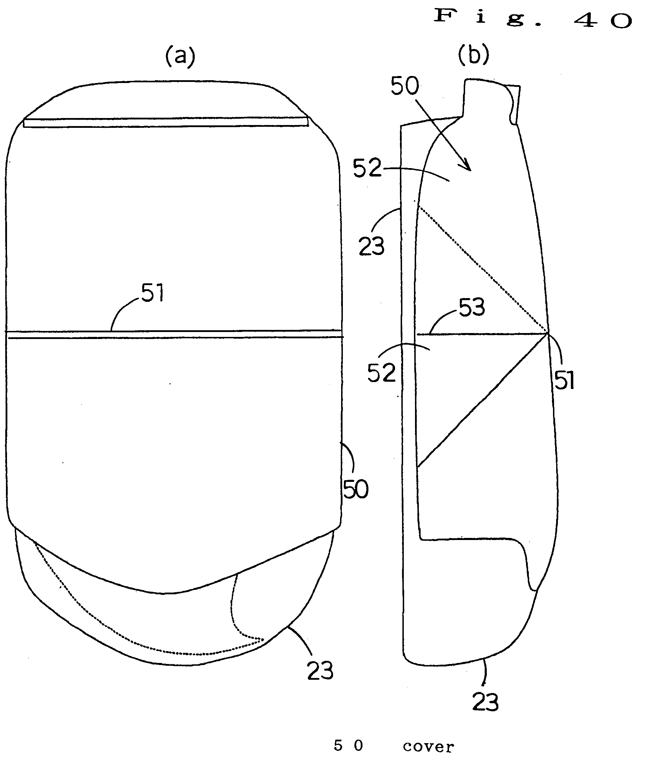

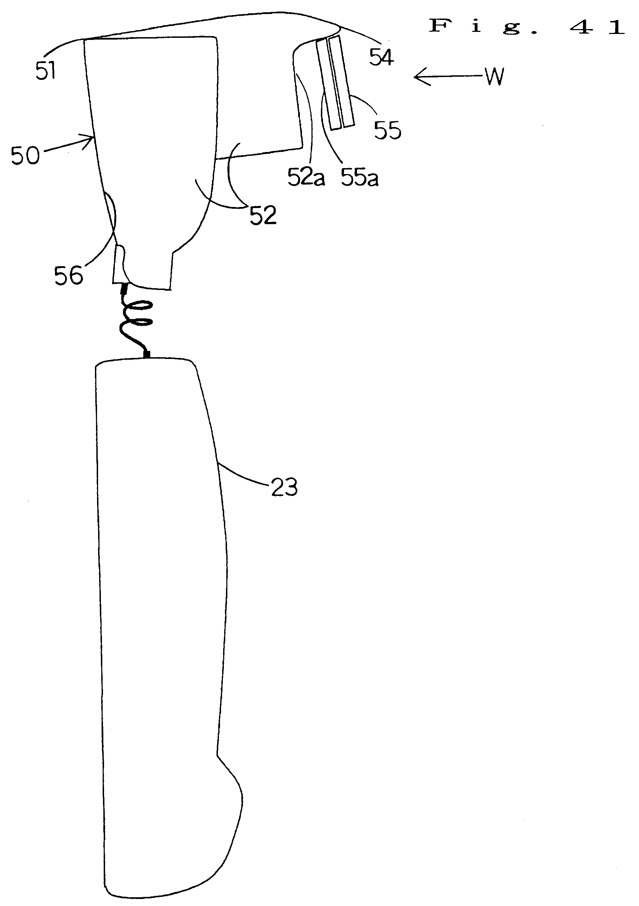

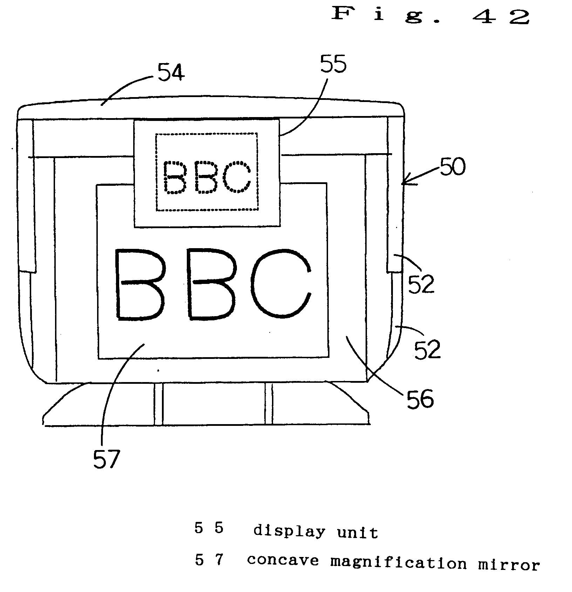

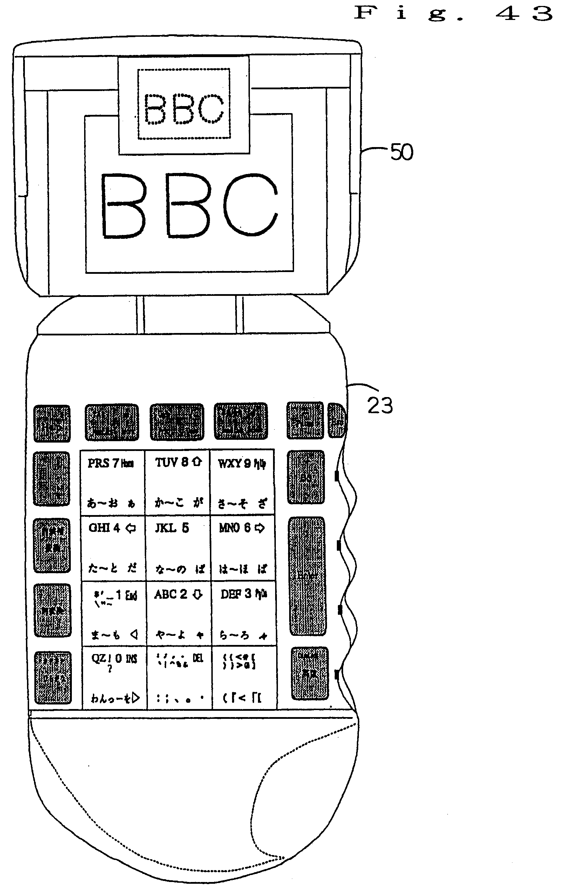

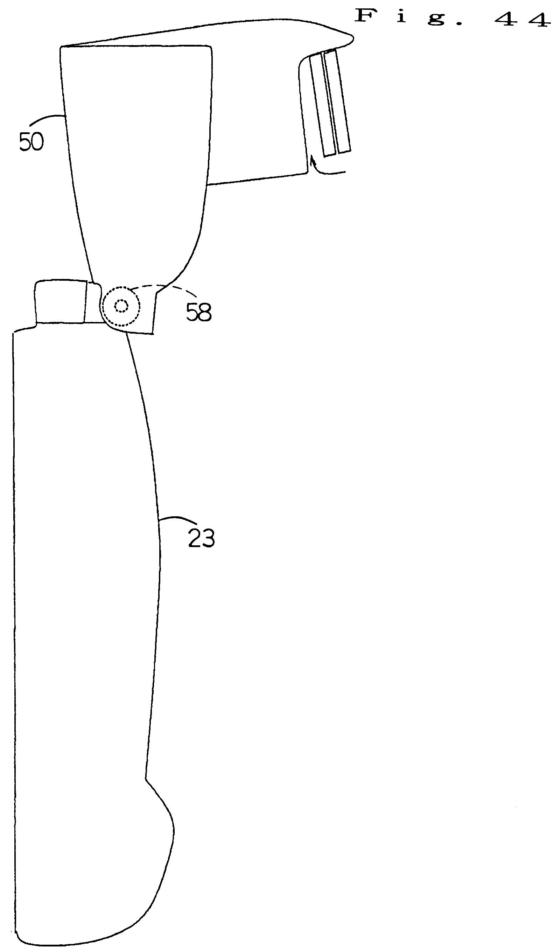

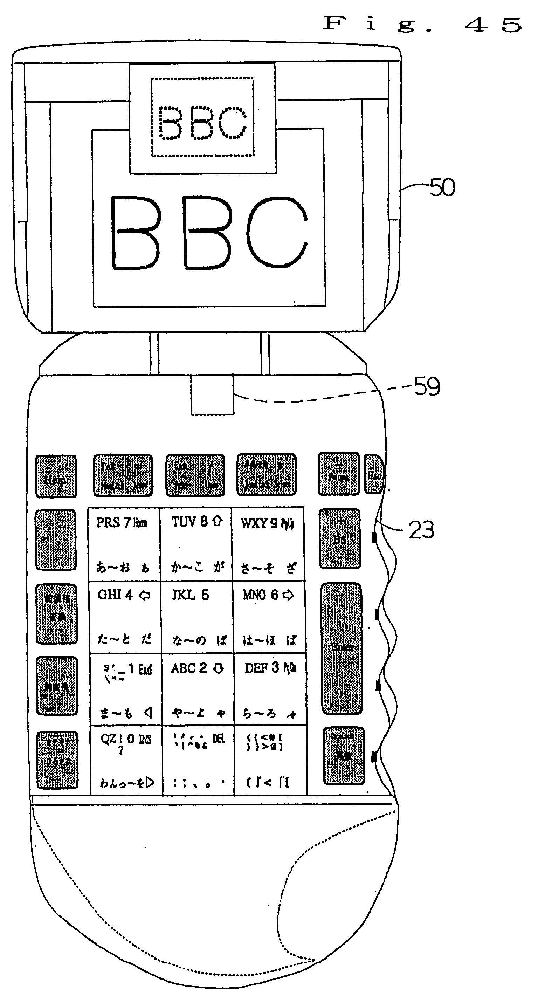

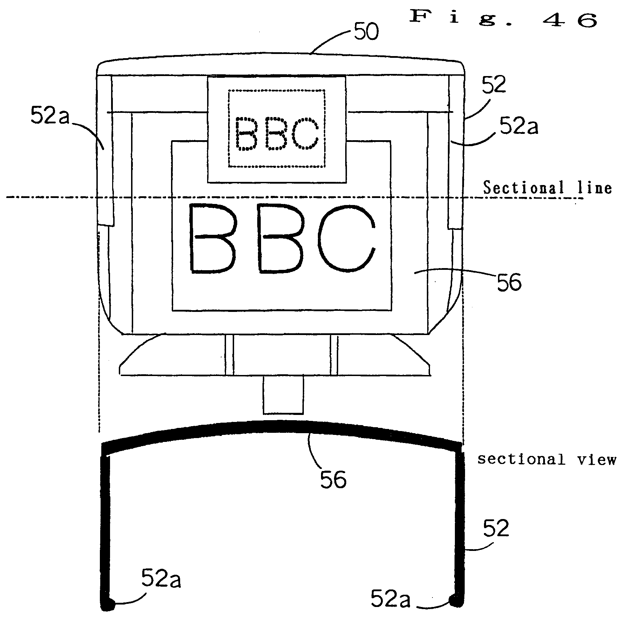

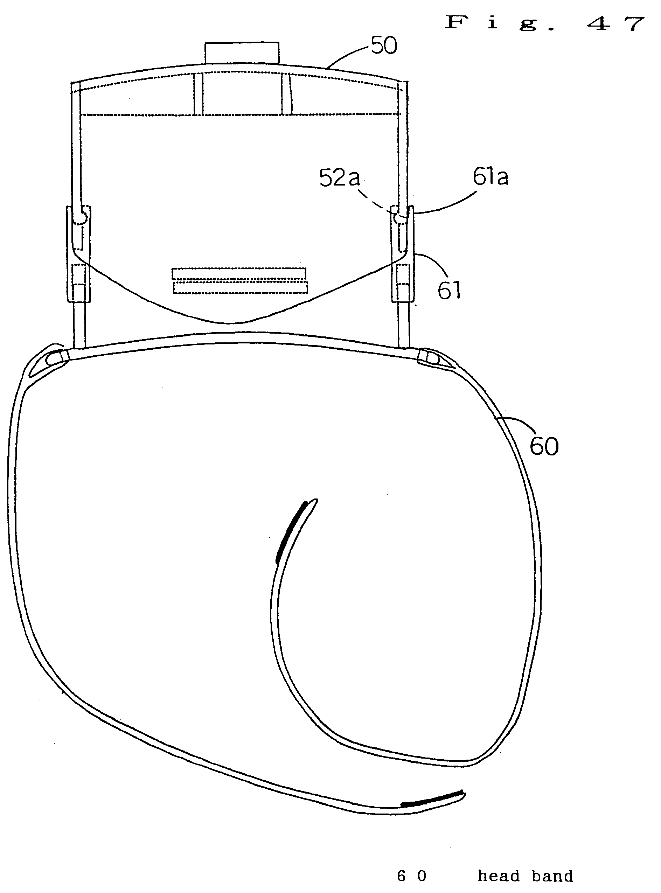

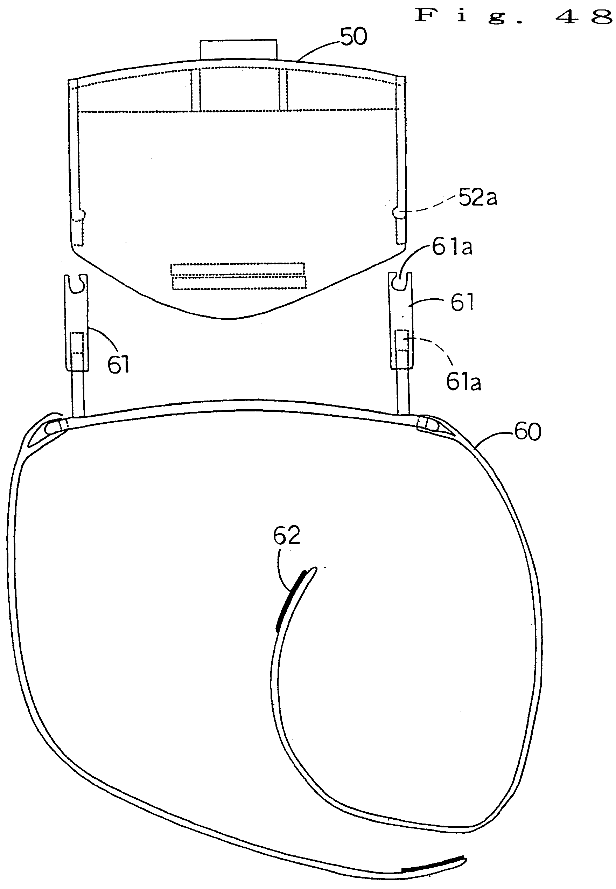

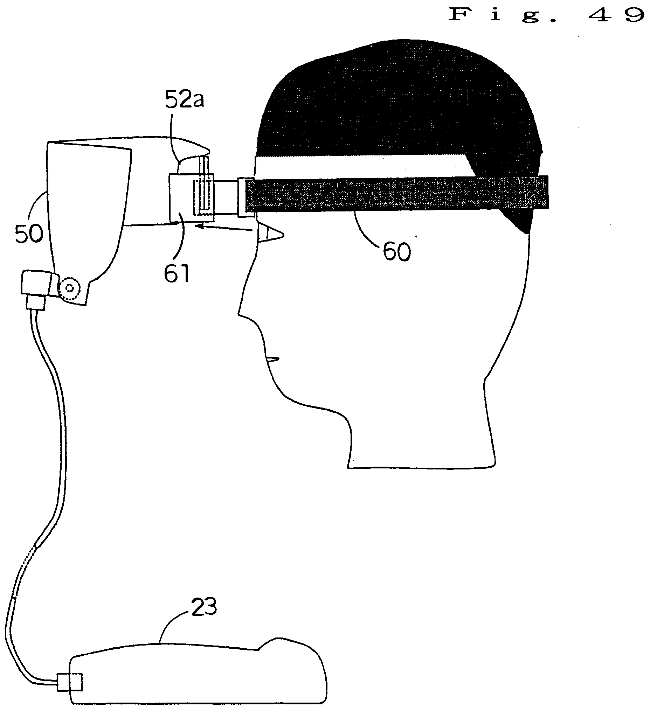

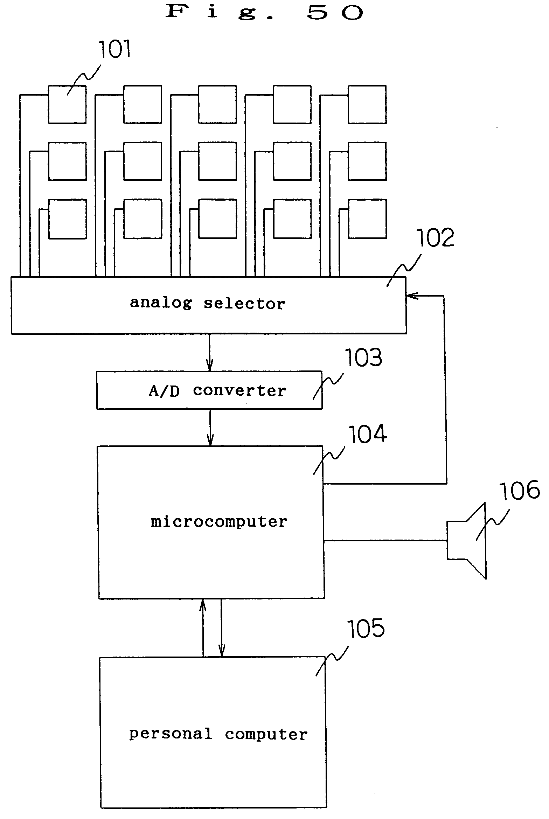

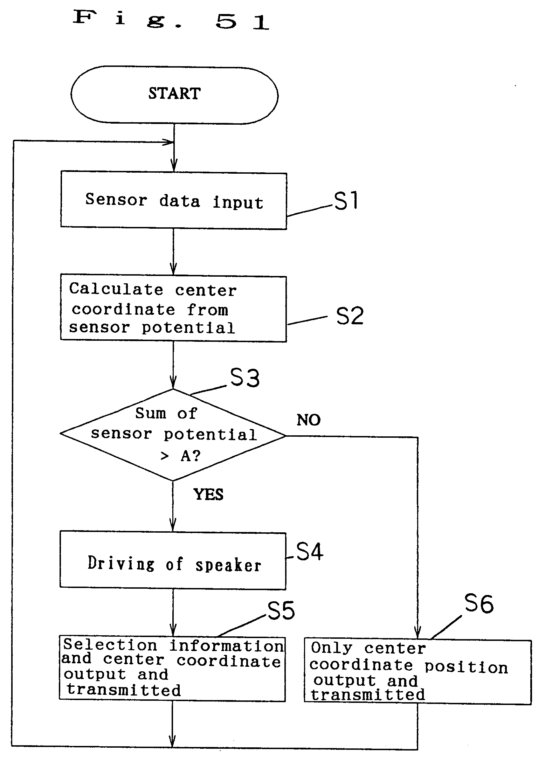

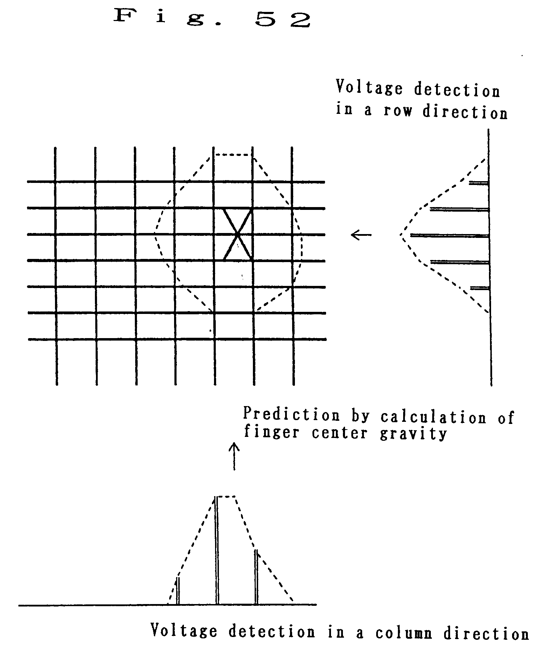

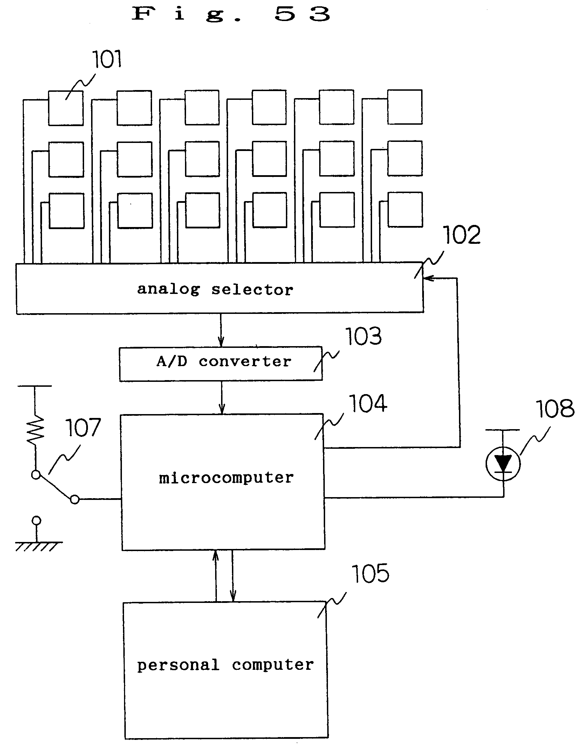

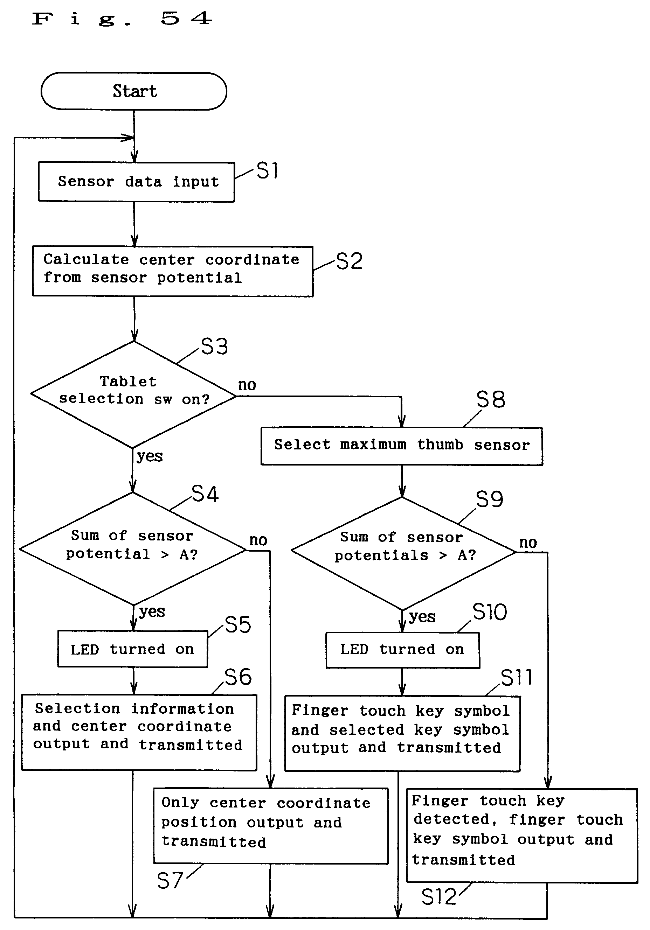

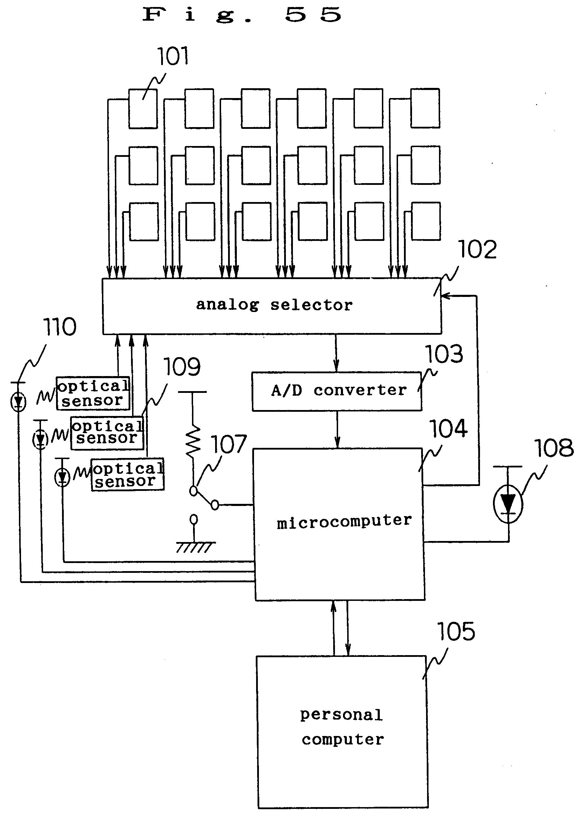

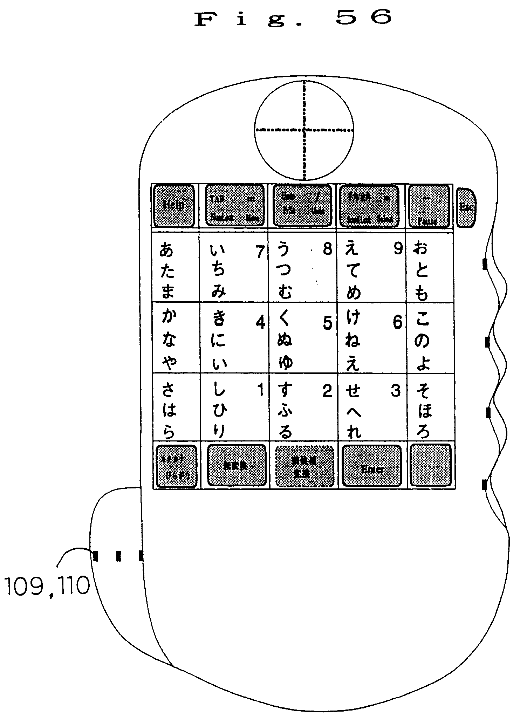

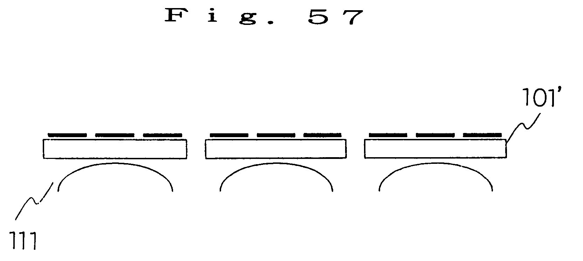

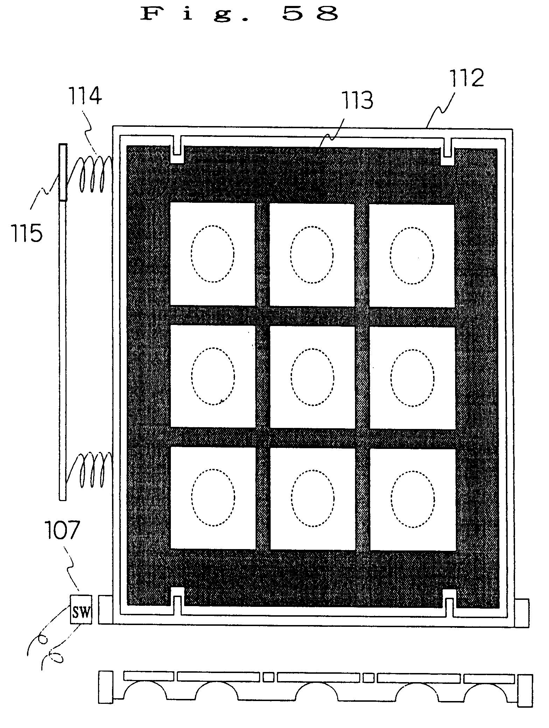

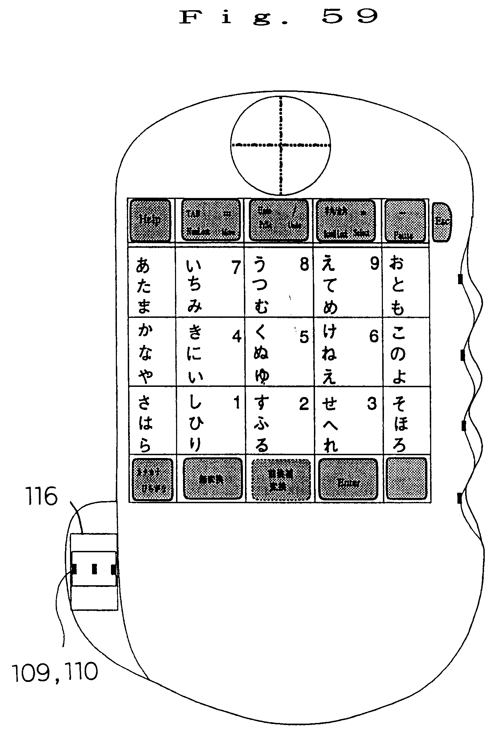

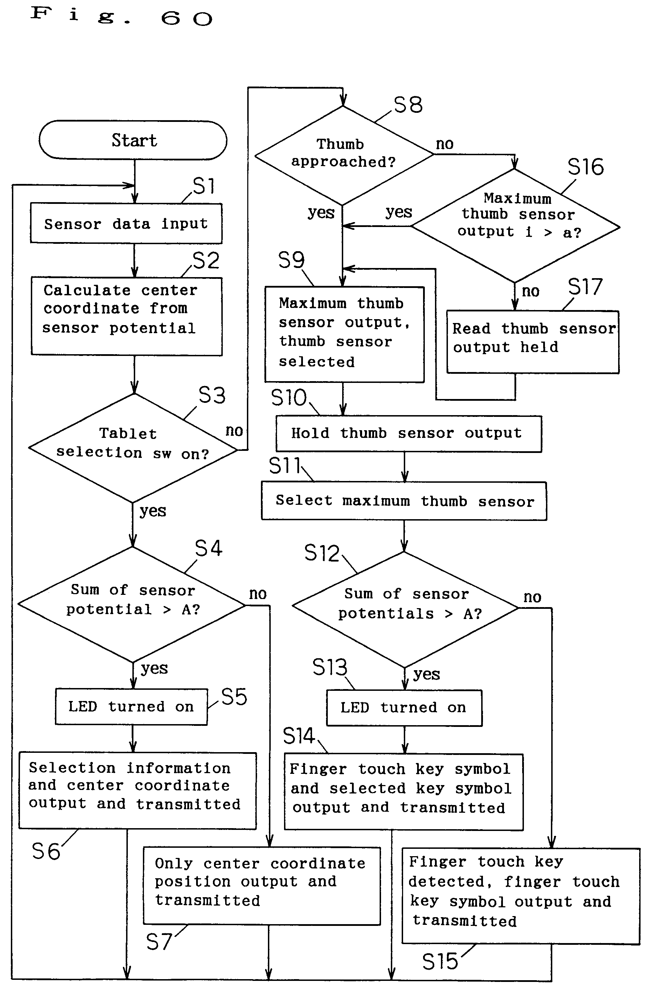

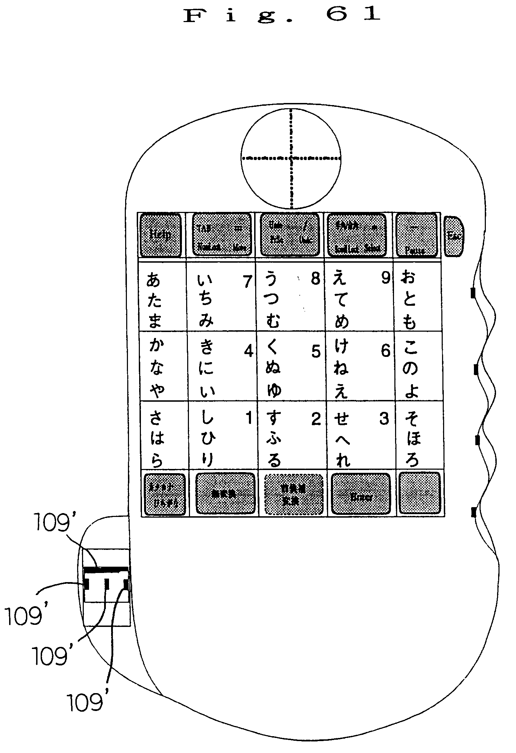

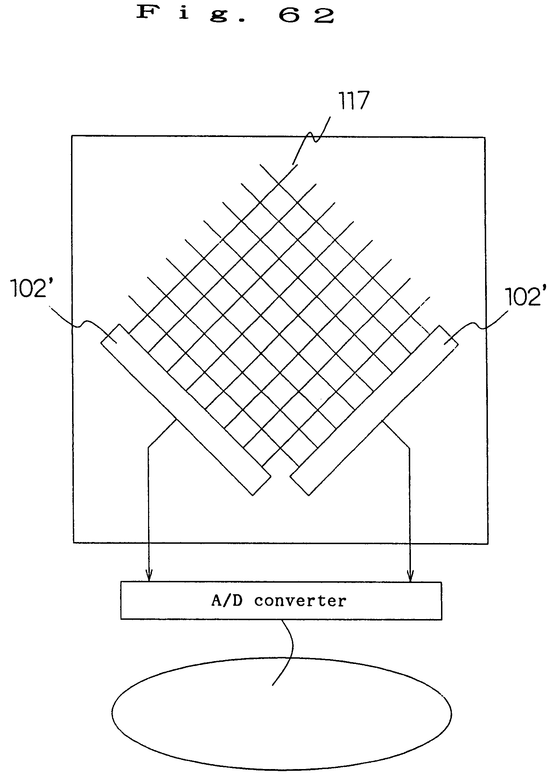

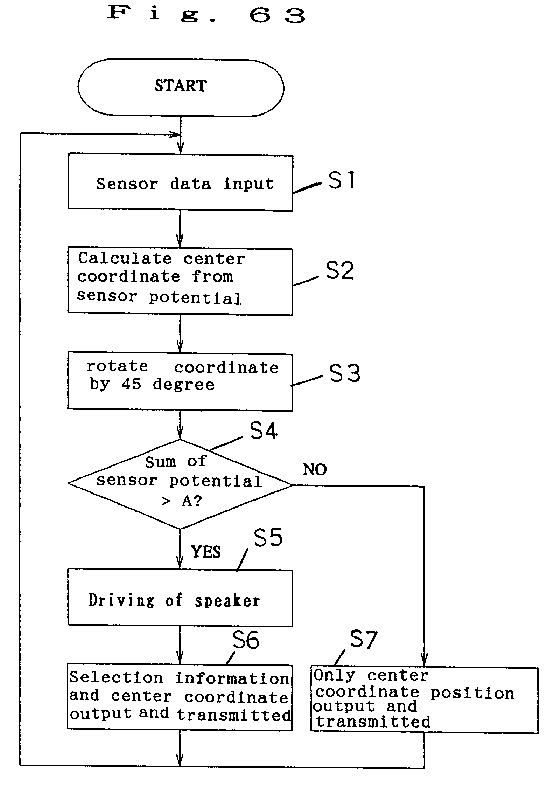

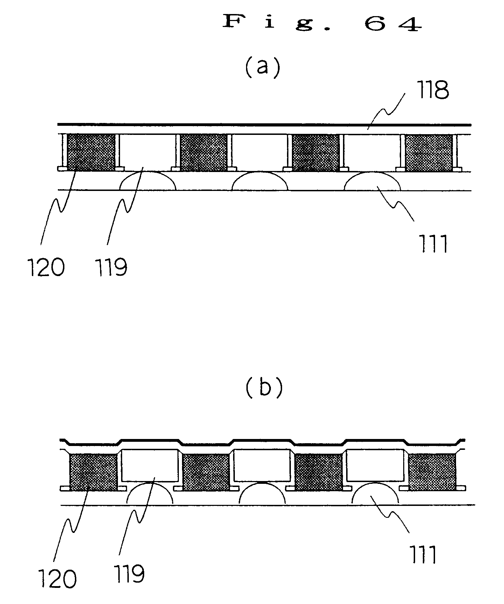

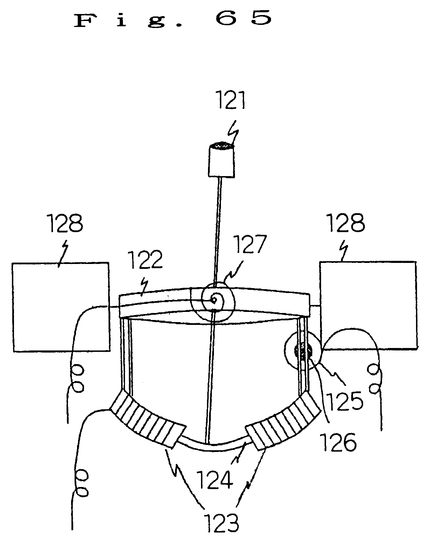

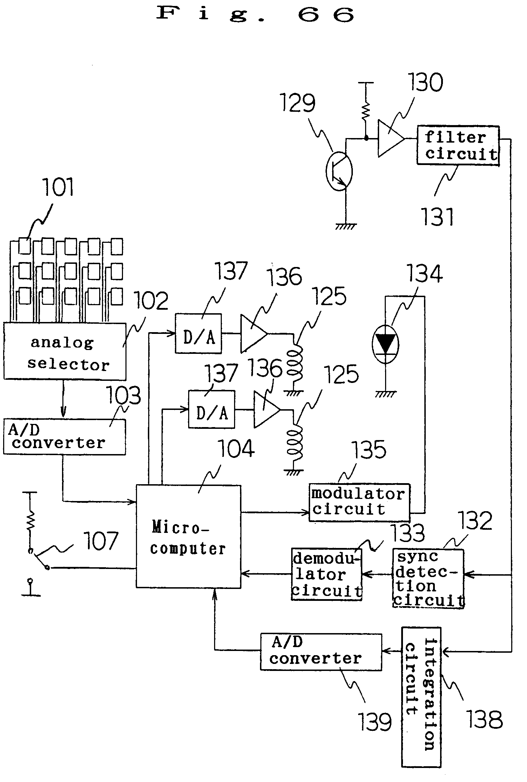

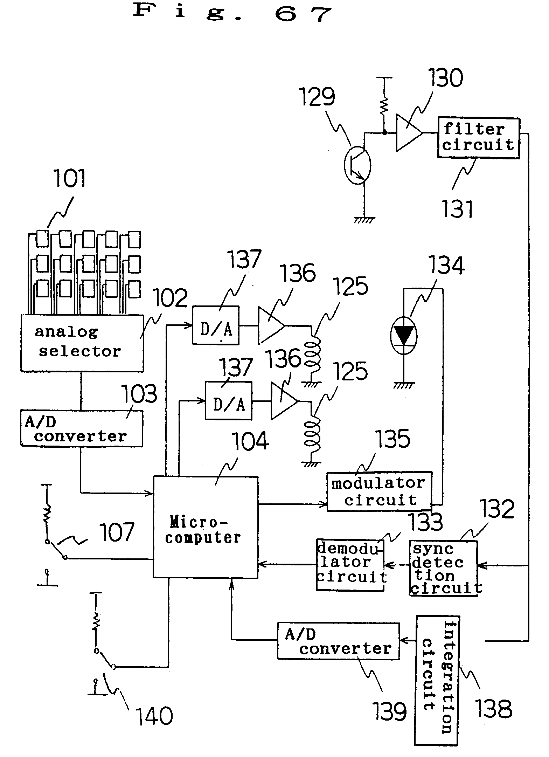

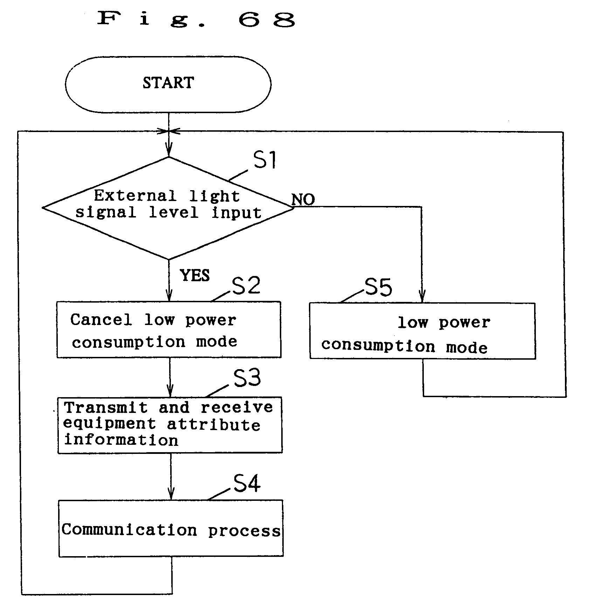

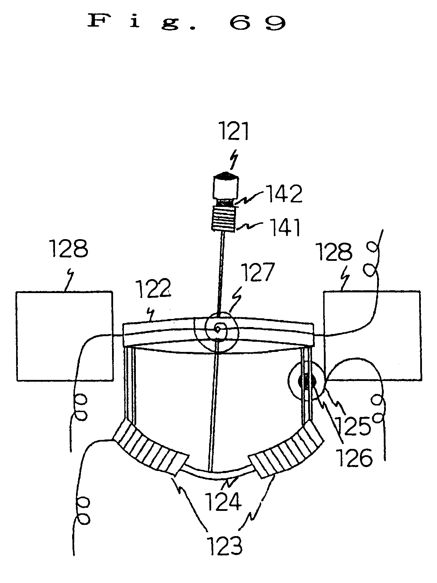

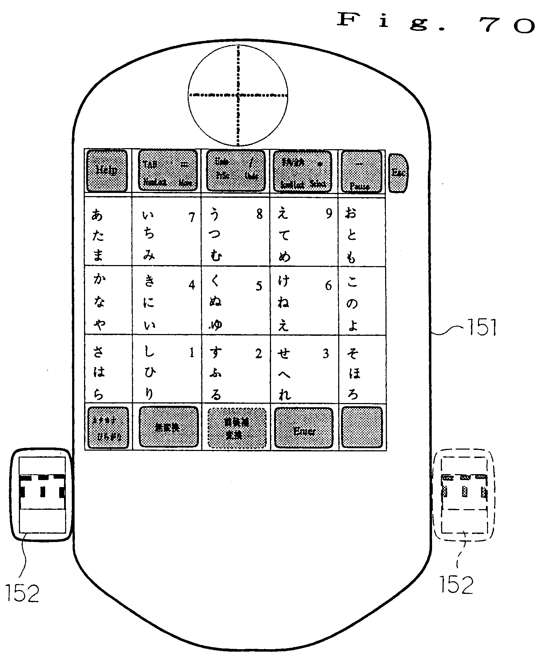

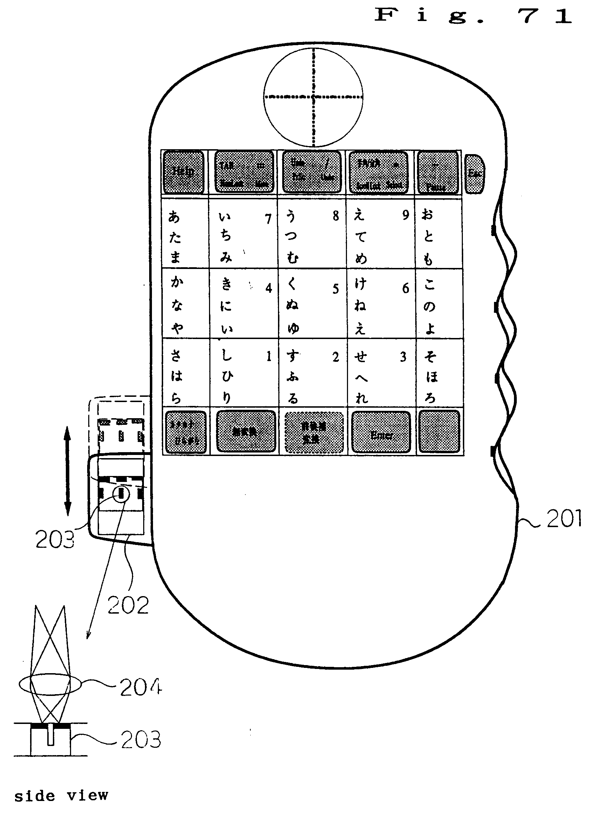

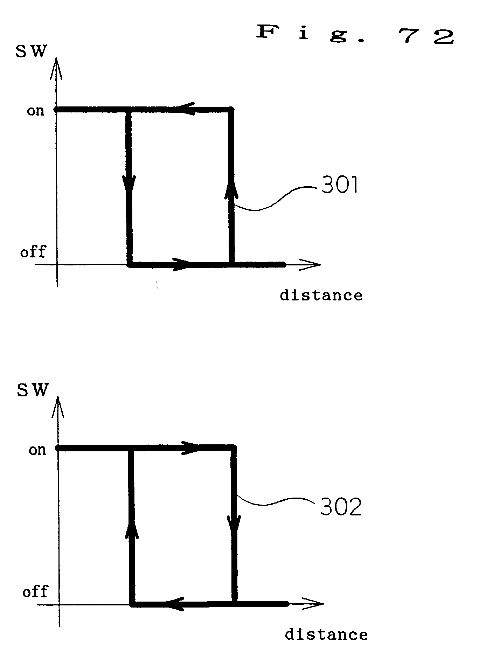

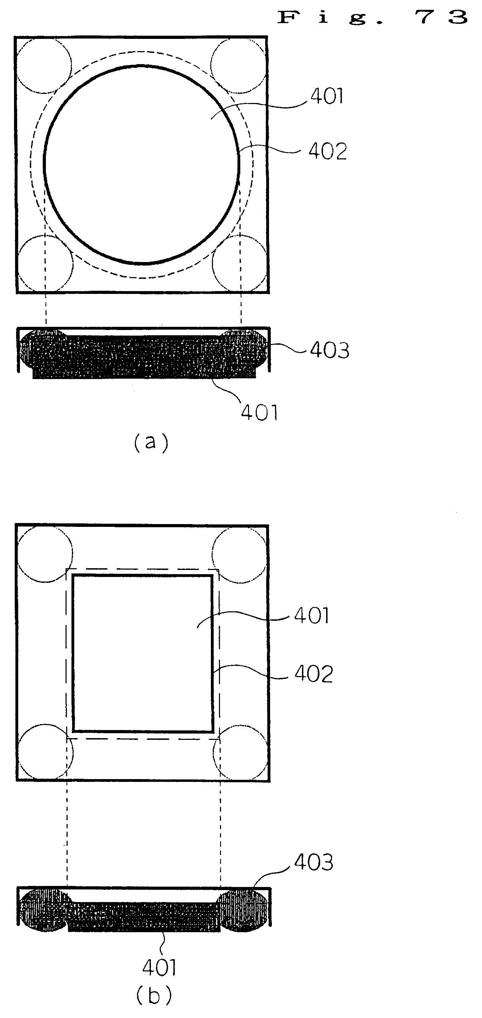

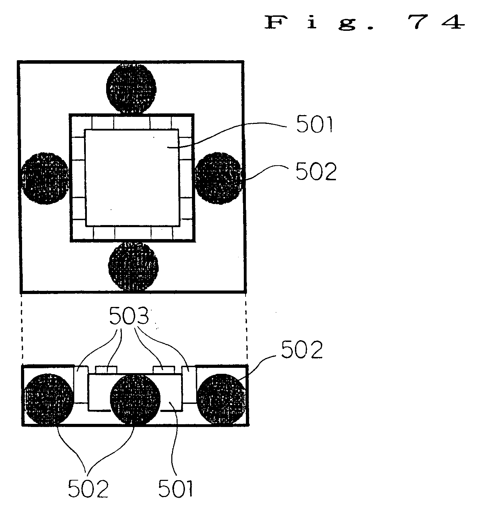

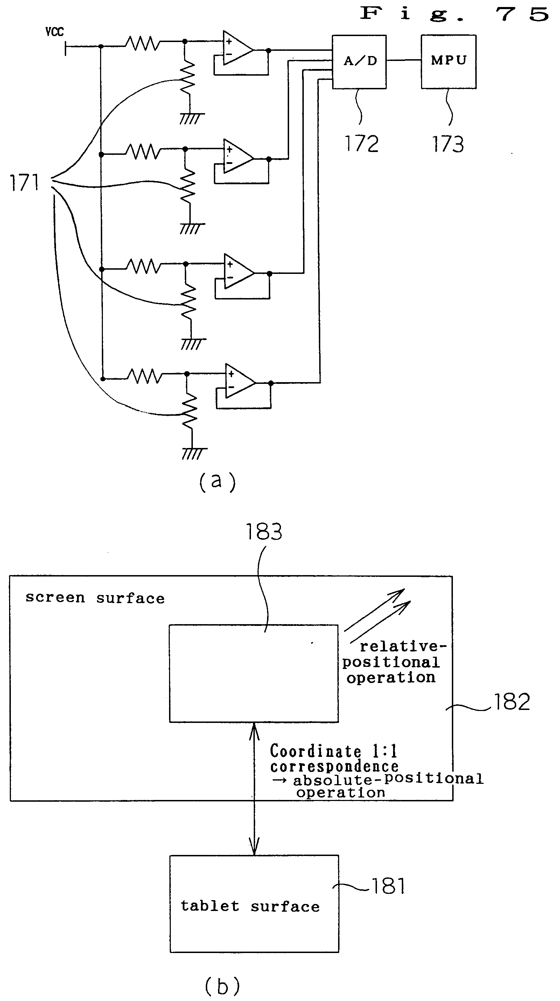

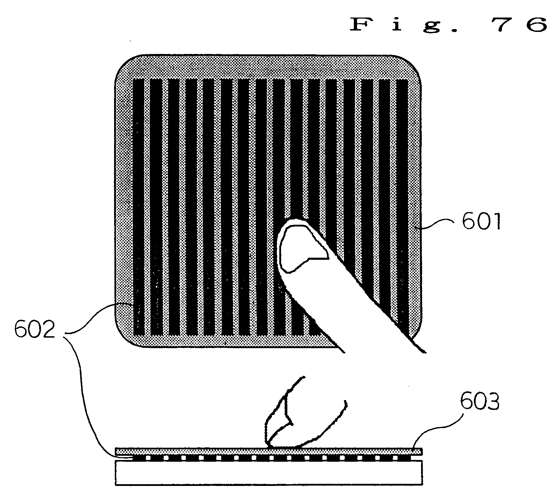

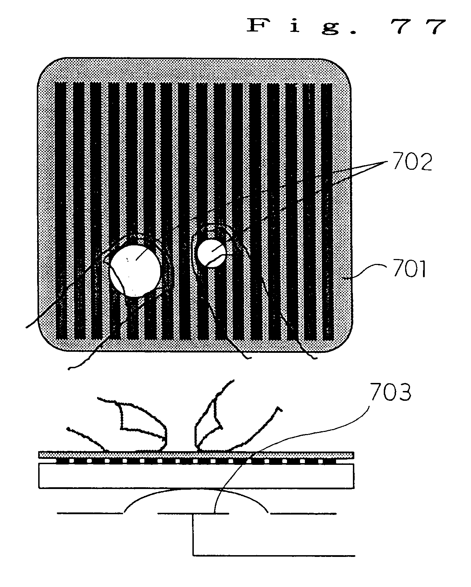

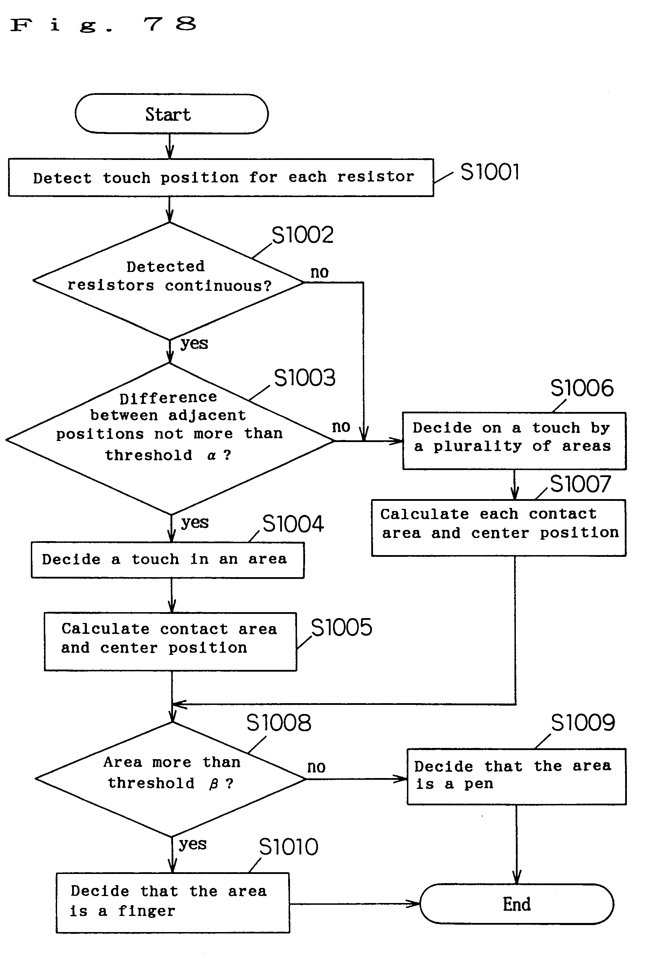

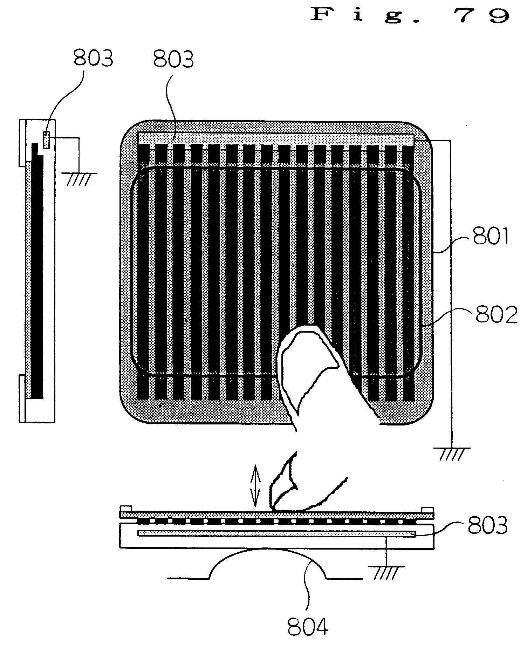

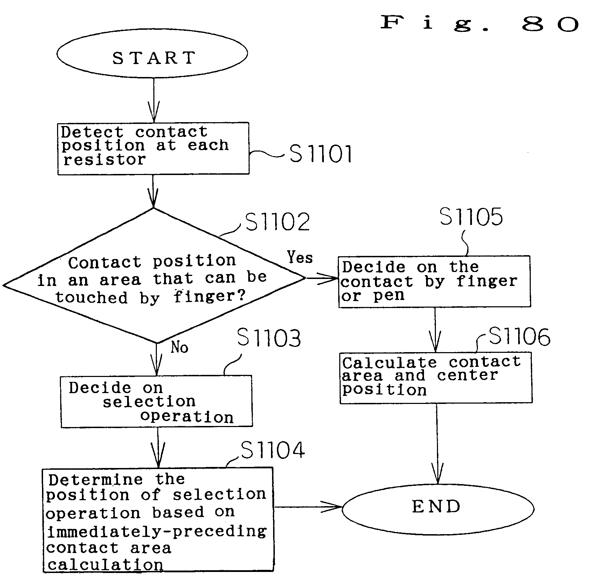

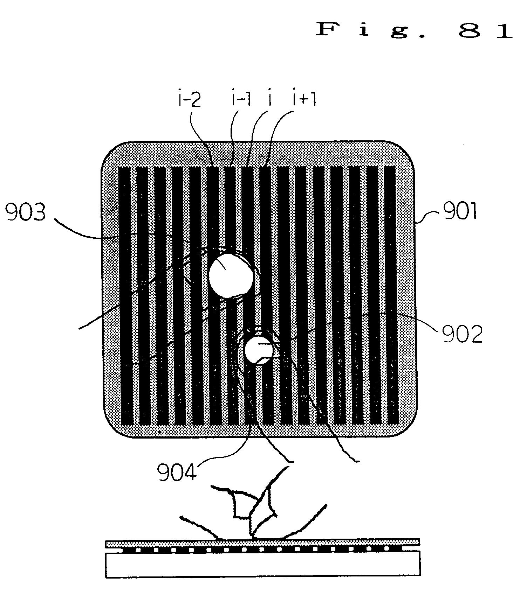

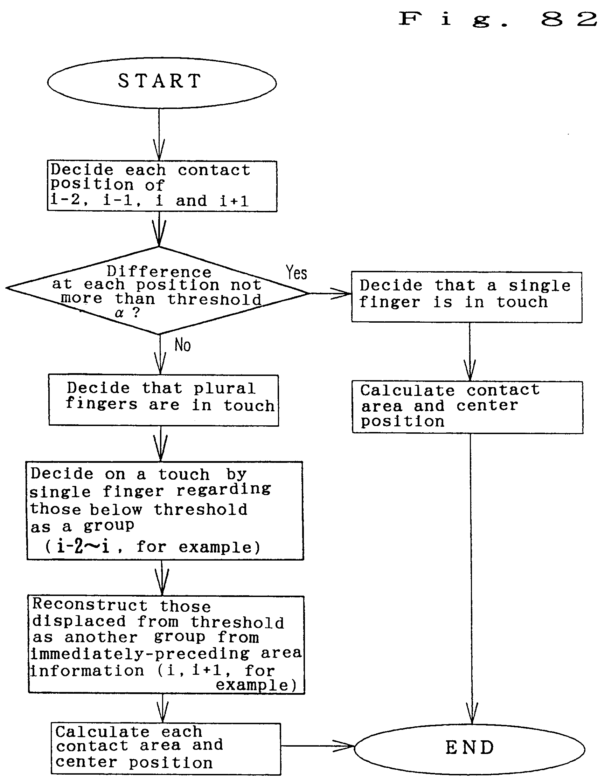

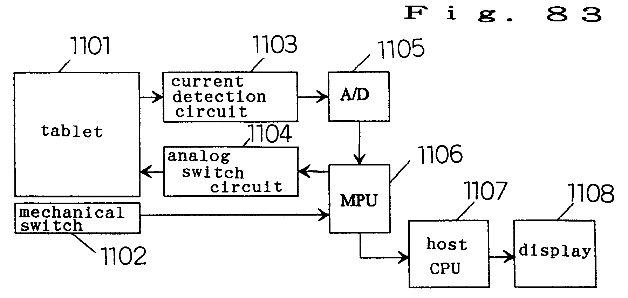

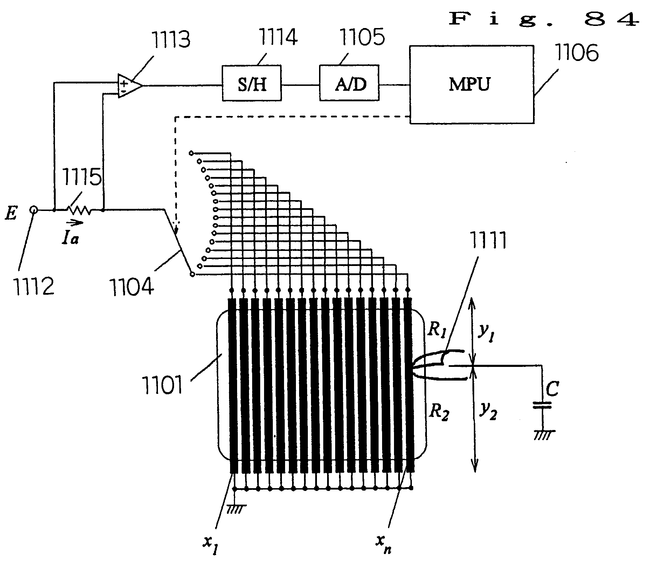

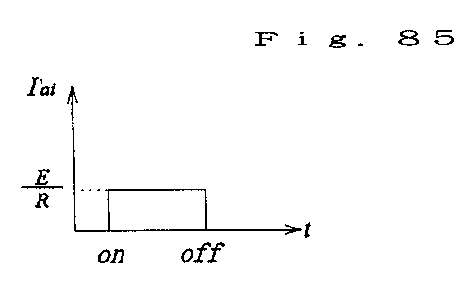

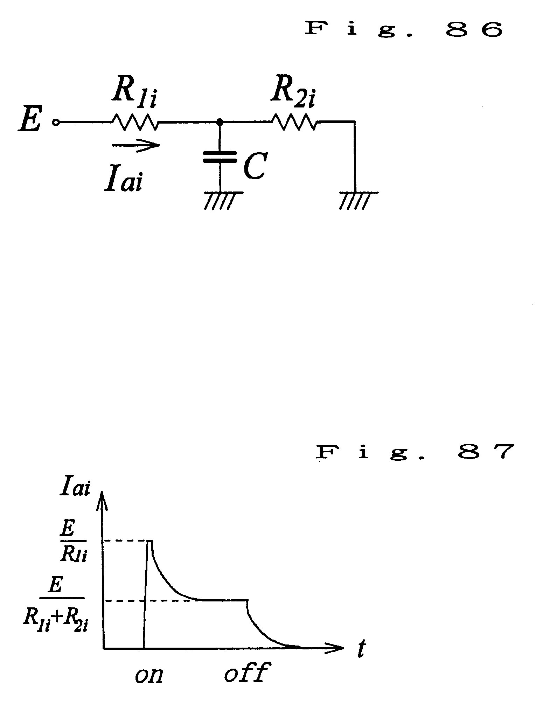

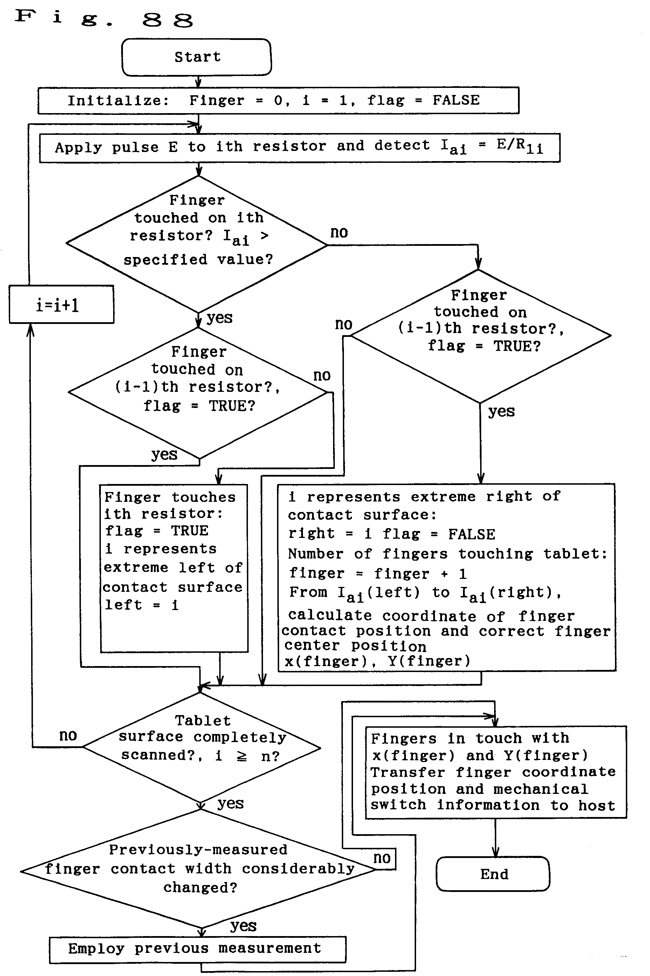

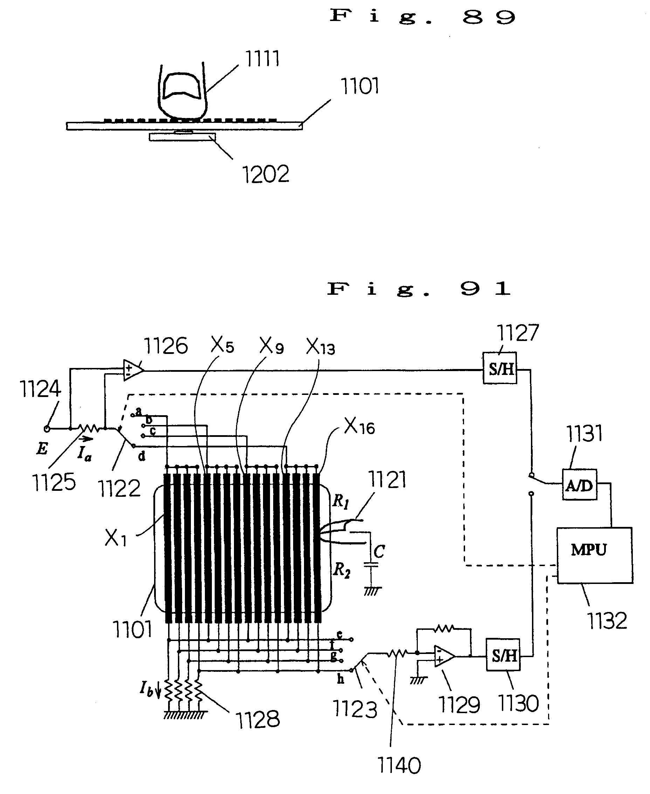

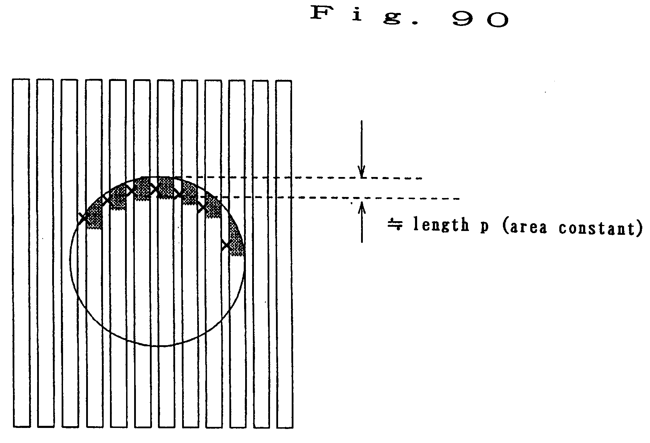

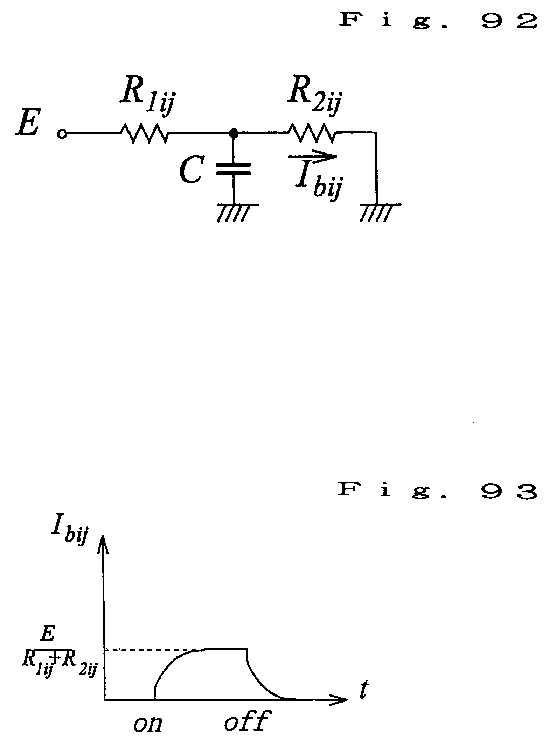

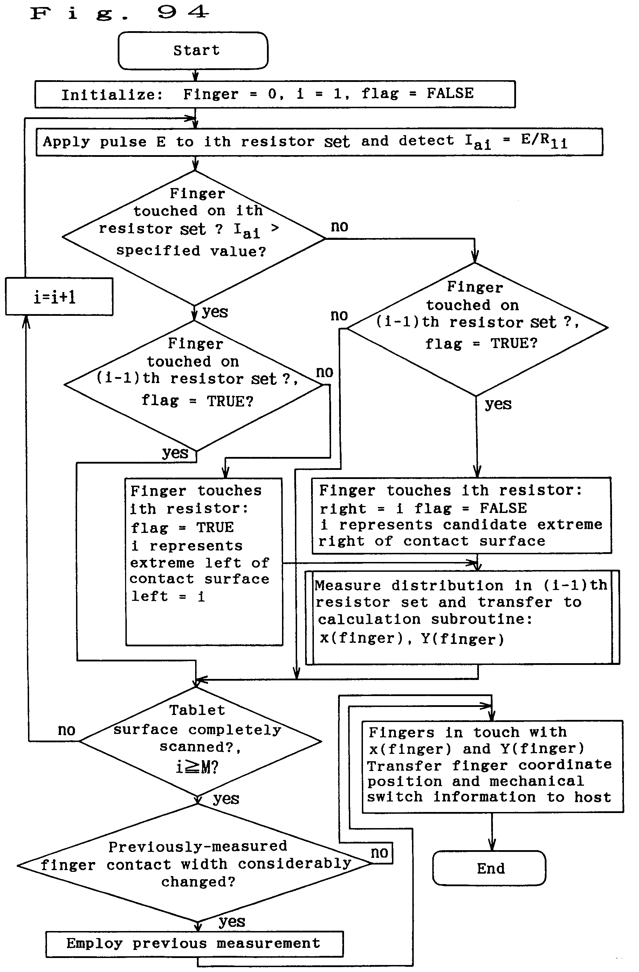

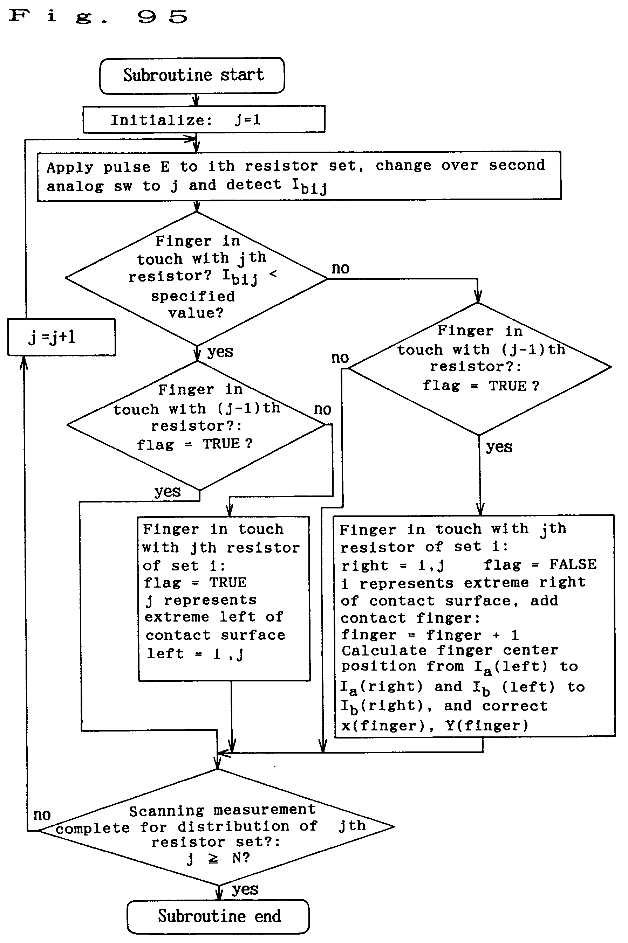

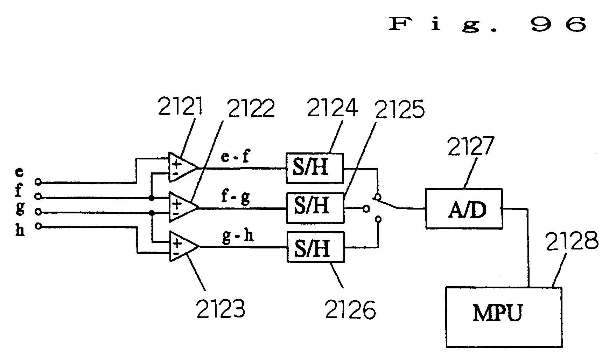

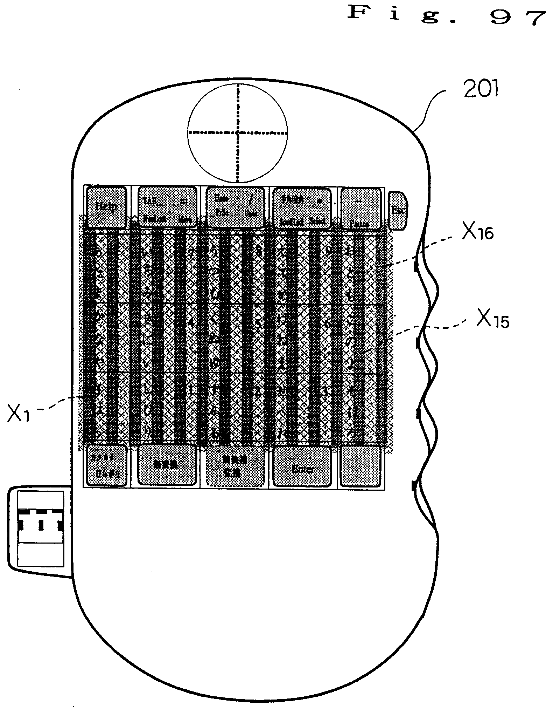

Fig.1 is a diagram showing the function blocks of an information input processing system according to an embodiment of the present invention, Fig.2 shows the process sequence for a microcomputer of the information input processing system according to an embodiment of the invention, Fig.3 shows a word-processing display screen of an information input processing system according to an embodiment of the invention, Fig.4 is a full view of an information input processing system according to an embodiment of the invention, Fig.5 is a full view of an information input processing system according to an embodiment of the invention, Fig.6 is a full view of an information input processing system according to an embodiment of the invention, Fig.7 is a diagram showing the function blocks of an information input processing system according to an embodiment of the invention, Fig.8 shows a word-processing display screen of an information input processing system according to an embodiment of the invention, Fig.9 shows a word-processing display screen of an information input processing system according to an embodiment of the invention, Fig.10 shows the process sequence for a microcomputer of an information input processing system according to an embodiment of the invention, Fig.11 shows the process sequence for a microcomputer of an information input processing system according to an embodiment of the invention, Fig.12 shows a word-processing display screen of an information input processing system according to an embodiment of the invention, Fig.13 is a diagram showing the function blocks of an information input processing system according to an embodiment of the invention, Fig.14 shows a word-processing display screen of an information input processing system according to an embodiment of the invention, Fig.15 shows a word-processing display screen of an information input processing system according to an embodiment of the invention, Fig.16 shows a part of the keyboard of an information input processing system according to an embodiment of the invention, Fig.17 is a diagram showing the function blocks of an information input processing system according to an embodiment of the invention, Fig.18 shows a word-processing display screen of an information input processing system described in Claim according to the invention, Fig.19 is a full view of an information input processing system according to an embodiment of the invention, Fig.20 is a full view of an information input processing system according to an embodiment of the invention, Fig.21 is a full view of an information input processing system according to an embodiment of the invention, Fig.22 is a full view of an information input processing system according to an embodiment of the invention, Fig.23 is a diagram showing the function blocks of an information input processing system according to an embodiment of the invention, Fig.24 is a full view of an information input processing system according to an embodiment of the invention, Fig.25 shows the process sequence for a microcomputer of an information processing system according to an embodiment of the invention, Fig.26 is a full view of an information input processing system according to an embodiment of the invention, Fig.27 shows the process sequence for a microcomputer of an information input processing system according to an embodiment of the invention, Fig.28 is a full view of an information input processing system according to an embodiment of the invention, Fig.29 shows the process sequence for a microcomputer of an information input processing system according to an embodiment of the invention, Fig.30 shows a word-processing display screen of an information input processing system as described in Claim of the invention, Fig.31 is a full view of an information input processing system according to an embodiment of the invention, Fig.32 is a full view of an information input processing system according to an embodiment of the invention, Fig.33 is a full view of an information input processing system according to an embodiment of the invention, Fig.34 is a full view of an information input processing system according to an embodiment of the invention, Fig.35 is a full view of an information input processing system according to an embodiment of the invention, Fig.36 is a diagram showing the relation between the fingers and information symbols according to an embodiment of the invention, Fig.37 is a diagram showing the display screen according to a 36th embodiment of the embodiment, Fig.38 is a diagram showing the display screen according to the 36th embodiment of the invention, Fig.39 is a diagram showing the display screen according to the 36th embodiment of the invention, Fig.40 is a plane view and a side view of a cover according to an embodiment of the invention, Fig.41 is a side view of a cover and a housing according to the same embodiment of the invention, Fig.42 is a front view of the cover in bent form according to an embodiment of the invention, Fig.43 is a plane view of the cover, the keyboard and the housing according to an embodiment of the invention, Fig.44 is a side view of the cover and the housing according to an embodiment of the invention, Fig.45 is a plane view of the cover, the keyboard and the housing according to an embodiment of the invention, Fig.46 is a front view and a sectional view of the cover according to an embodiment of the invention, Fig.47 is a plane view of a cover and a head band according to an embodiment of the invention, Fig.48 is a plane view of the cover and the head band according to an embodiment of the invention, Fig.49 is a side view of the cover and the head band according to an embodiment of the invention, Fig.50 is a diagram showing the function blocks of an information input processing system according to an embodiment of the invention, Fig.51 is a flowchart showing the process sequence for a microcomputer of an information input processing system according to an embodiment of the invention, Fig.52 shows an example method for determining the coordinate of the finger center for an information input processing system according to an embodiment of the invention, Fig.53 is a diagram showing the function blocks of an information input processing system according to an embodiment of the invention, Fig.54 is a flowchart showing the process sequence for a microcomputer of an information input processing system according to an embodiment of the invention, Fig.55 is a full view of the housing of an information input processing system according to an embodiment of the invention, Fig.56 is a sectional view of a sensor of an information input processing system according to an embodiment of the invention, Fig.57 is a diagram for explaining the principle of a mechanism of an information input processing system according to an embodiment of the invention, Fig.58 is a diagram for explaining the mechanism of an information input processing system according to an embodiment of the invention, Fig.59 is an external appearance of the housing of an information input processing system according to an embodiment of the invention, Fig.60 is a flowchart showing the process sequence for a microcomputer of an information input processing system according to an embodiment of the invention, Fig.61 is a diagram showing the function blocks of an information input processing system according to an embodiment of the invention, Fig.62 is a diagram showing the function blocks of an information input processing system according to an embodiment of the invention, Fig.63 is a diagram for explaining the operation of an information input processing system according to an embodiment of the invention, Fig.64a is a sectional view of the sensor of an information input processing system according to an embodiment of the invention, Fig.64b is a sectional view of the sensor in another condition, Fig.65 is a diagram for explaining the mechanism of a light transmitter-receiver of an information input processing system according to the invention, Fig.66 is a diagram showing the function blocks of an information input processing system according to an embodiment of the invention, Fig.67 is a diagram showing the function blocks of an information input processing system according to an embodiment of the invention, Fig.68 is a flowchart showing the process sequence for a microcomputer of an information input processing system as described in Claim of the invention, Fig.69 is a diagram for explaining the mechanism of the light transmitter-receiver of an information input processing system according to the invention, Fig.70 is a diagram showing a full view of a single-hand-operated keyboard as an example of an information input processing system according to the invention, Fig.71 is a diagram showing a full view of a single-hand-operated keyboard and a thumb light sensor, Fig.72 is a diagram illustrating the hysterisis relation to be held between the on/off state of a switch and the distance between the thumb and the sensor, Figs.73a and 73b show a configuration example of a pointing device for detecting the operation of a tabular movable object, Fig.74 is a diagram showing the configuration of another embodiment of the pointing device capable of operation in relative positions by a pressure-sensing rubber, Fig.75a is a diagram showing the configuration of a detection circuit for a pressure-sensing rubber ball, Fig.75b is a diagram for explaining the operation thereof, Fig.76 is a diagram showing the configuration of an embodiment of a pad, Fig.77 is a diagram illustrating the distinction between the pen tip and the finger tip and the priority order of selection utilizing the touch area of the pad according to an embodiment of the invention, Fig.78 is a flowchart showing a method of detection in Fig.77, Fig.79 is a diagram illustrating the operation of pad selection according to an embodiment, Fig.80 is a flowchart showing a method of detection in Fig.79, Fig.81 is a diagram showing the case in which the same resistor of the pad is shared by two fingers or more, Fig.82 is a flowchart showing a method of detection in Fig.81, Fig.83 is a block diagram showing another embodiment of the coordinate input means according to the invention, Fig.84 is a diagram showing an embodiment of the method for detecting the touch position of the operator's finger or the like with a tablet 1101, Fig.85 is a diagram showing the chronological change of current $I_{ai}$, Fig.86 is a diagram showing an equivalent circuit according to the same embodiment, Fig.87 is a diagram showing the chronological change of current $I_{ai}$, Fig.88 is a flowchart showing a method of detection according to the same embodiment, Fig.89 is a side view of a tablet, Fig.90 is a diagram for explaining a predetermined amount p, Fig.91 is a configuration diagram for explaining a method of detecting the touch position of the operator's finger or the like according to another embodiment, Fig.92 is a diagram showing an equivalent circuit of the same embodiment, Fig.93 is a diagram showing the chronological change of current $I_{bij}$, Figs.94 and 95 are flowcharts showing specific operations of the same embodiment, Fig.96 is a block diagram of the coordinate input means according to another embodiment of the invention, and Fig.97 is a diagram showing an information input processing system having not only the keyboard function but also the tablet function capable of coordinate input.

BEST MODE FOR CARRYING OUT THE INVENTION

Embodiments of the invention will be described in detail below with reference to the drawings.

Fig.1 is a function block diagram showing an information input processing system according to an embodiment of the invention. In Fig.1, numeral 1 designates a keytop, numeral 2 a key switch, numeral 3 an electrode, numeral 4 a sensing circuit for amplifying the potential induced to the electrode, numeral 5 a key scan circuit, numeral 6 a microcomputer, numeral 7 a memory circuit, numeral 8 a display circuit, numeral 9 an A/D converter, and numeral 10 a display. Now, assuming that a finger touches or approaches a specific keytop, an inductive potential is generated in a corresponding electrode 3. Though described in simplified form in the drawing, the potential of the keytops (12 keytops in the case of the shown drawing) is amplified by the sensing circuit 4, and after being time-division-multiplexed, is applied to the A/D converter 9. By comparing the outputs thus applied with each other, the microcomputer can specify the key that has been touched or most closely approached by the finger, These operations can be carried out by the normal microcomputer process (such as the word processing) and time-division processing. Fig.2 shows a part of the process sequence for a microcomputer, that is, a part of the word processing operation in Japanese. This process representing an interrupt handling decides and displays (display step 1) at regular time intervals whether the finger has touched or approached a keytop, and when the keytop 1 is struck by the finger, turns on a switch 2, thereby deciding whether an actual key entry is made from the keyboard (display step 2). Thus the process performs two display steps. The display step 2 is similar to the character input display in the conventional word-processing operation. In the display step 1, the character being entered by the operator is displayed at the tail end of an established sentence (In Japanese, the process called "establishing" is required for converting kana to kanji characters) prior to actual character input (display step 2). The operator watches the established sentence with his central viewfield and the character in the display step 1 with the peripheral viewfield. Fig.3 shows a display screen for word processing in Japanese, in which the character

" い "

in touch with the user's finger is displayed in reverse with a different color at the tail end of the sentence being entered. This display itself provides a guide different from the information input and disappears when the finger is detached. The immediately preceding section displays an unestablished character

" せ ".

This example represents the input in Japanese, in which case a converter is displayed specifically for conversion into kanji character (the last character but one), while this display is not required in other languages such as English.

Fig.4 is a top plane view and a side view showing the outline of an information input processing system according to another embodiment of the invention. In Fig.4, numeral 1 designates keytops, numeral 10 a display, numeral 11 a photosensor, numeral 12 a hinge and numeral 13 a thumb insertion hole formed under the keytop. Though not visible in this diagram, three more photosensors 11 are mounted in the thumb insertion hole 13. The operator places the palm of his right hand in the right recess 10' of the display 10 and moves his thumb in the insertion hole 13, thereby selecting by approaching the thumb to one of the five photosensors 11 arranged in arcuate form. Each keytop corresponds to five characters. The five photosensors detect the position of the thumb. The thumb is recognized to exist at the position of the photosensor 11 with highest output, thereby selecting one of the five characters.

Now, another embodiment is shown in Fig.5. In Fig.5a, numeral 1 designates a keytop, numeral 13 a thumb insertion hole under the keytop, and numeral 11 a photosensor. The operator inserts his thumb into the thumb insertion hole 13 sideway, and strikes the keytop 1 with the remaining four fingers. Fig.5b is a perspective view as viewed from the direction of arrow A in Fig.5a. Of the six photosensors 11, three are arranged on the bottom of the insertion hole 13, and the remaining three on the deep side surface of the insertion hole 13.

Now, another embodiment will be described with reference to Fig.6. In Fig.6, numeral 14 designates a protrusion and numeral 11 a photosensor. The operator touches the protrusion 14 and thus can recognize the position of the photosensor 11 each time he moves this thumb.

Another embodiment will be explained with reference to Fig.7. In Fig.7, numeral 15 designates a sensing circuit for sensing the approach of a finger, numeral 16 a screen area corresponding to the physical position of the keytop 1 displayed on the display, and numeral 17 a screen area for displaying the information symbols assigned to a given keytop 1 in a lateral series. The approach of the finger to the electrode 3 on the keytop 1 is transmitted from the sensing circuit 15 through an A/D converter 9 to a CPU 6. Numeral 11 designates a photosensor for detecting the approach of the thumb. The operator enters a character by combining the thumb position with the type of the keytop. When a specific one of the electrodes 3 is touched or approached by the finger, the portion of the keytop layout screen area 16 corresponding to the specific key is brightly displayed. In the drawing under consideration, the portion "A" is touched by the finger and brightly displayed. This indicates that the finger is placed on the keytop on the third row from top and the second column from left of the central keytop in Fig.5. In similar fashion, it indicates which character is intended for selection, "A", "B", "C" or "2". Also, the characters "A", "B", "C" and "2" are displayed in the screen area 17, at the top of which a bar-shaped bright marker moves in correspondence with the thumb position so that the character to be selected is displayed brightly. In this case, the marker is indicated above "B", and therefore a corresponding switch 2 is closed and the actual character "B" is input when the operator strongly strikes the keytop touched or approached by his finger under the same condition. Further, the software of the word processor is executed and the input characters (I was) are displayed on the display 10 with the cursor arranged at the next place to "was" indicating that a character is being input. The coordinate information of the cursor is retrieved by the computer 6 at regular intervals of time, and the cursor is sequentially moved in accordance with the character input in such a manner as to position the screen areas 16 and 17 right under and around the character input cursor for the screen.

Another embodiment is shown in Fig.8. In Fig.8, numeral 10 designates a display screen, numeral 16' a screen corresponding to the physical layout of the keytops displayed on the display, and numeral 17' a display screen corresponding to the physical position of the thumb. In this diagram, four assigned characters are displayed at the places corresponding to the physical positions of the keytops, which are combined with the thumb position respectively to select one of the four characters at the time of striking the . Further, the display section 17' indicates in a different color that the thumb is at the third sensor position from left. At the same time, in order to indicate that the forefinger approaches the second row (ghi4) on the left column, the middle finger approaches the top (tuv8) on the middle column and the third finger approaches the third row (def3) on the right column on each keytop, a bright frame is displayed at each display position. Furthermore, the places of characters "I", "V" and "F" are brightly displayed in enlarged reverse display in combination with the thumb sensors thereby to present the characters selected.

Now, another embodiment is shown in Fig.9. In Fig.9, numeral 10 shows a display screen, numeral 16'' a screen corresponding to the physical layout of the keytops displayed on the display, and numeral 17'' a display screen corresponding to the physical position of the thumb. In this diagram, the four characters assigned to the keytops are staggered in the form of footprints, and as in Fig.8, are combined with the thumb position respectively thereby to select one of the four characters at the time of striking the key. In this way, the staggered display can display the data in horizontal direction in a shorter form.

Another embodiment will be explained with reference to Fig.10

Fig.10 shows a part of the process sequence for a microcomputer executing the word-processing software. The circuit of Fig.1 assumes that a plurality of fingers approach a plurality of keytops. This process is initiated by a timer interrupt by the microcomputer 6. In the case where each keyboard has received a sensing input higher than a specified value, i.e., in face of a finger approach, the output value of the sensing circuit which is larger than the other outputs applied to the A/D converter 9 is listed up as the one having a larger degree of proximity. Also, the chronological variation of the degree of proximity to the adjacent keytops and the direction of movement are determined, and the weighting calculation is made based on the physical position or comparison is made with the signal output under steady condition, after which a key intended to be struck is identified and displayed. The weighted data represents such data that the finger placed at the home position key, for example, is not much expected to move and the finger structure is such that any attempt to move the middle finger tends to move the forefinger or an attempt to move the third finger tends to move the little finger. The events related to such a phenomenon are also stored in memory as weighted data in advance, which are appropriately modified by learning. The changing degree of proximity (degree of touch) of a plurality of approaching electrodes and the degree of proximity of a finger to the electrodes being approached from a far and high point are determined, whereby a character of the key expected to be reached is displayed as a candidate under the cursor in the screen. This display permits the operator to visually determine the character of the key to be struck (intended character) a considerable time before touching the particular keytop. The character displayed naturally is not input in the word-processing software until the corresponding key is actually struck.

Now, another embodiment will be explained with reference to Figs.11, 12a and 12b. Fig.11 shows a part of the process sequence for a microcomputer in the process of execution of the word-processing software, assuming that a plurality of fingers approach a plurality of keytops in the circuit shown in Fig.1. This process is assumed to be initiated by the timer interrupt of the microcomputer 6 so that a plurality of fingers touch or approach a plurality of keytops. This process is basically similar to the process of Fig.10 and is adapted to display not only a single character decided to be most intended for striking, but in the case where a plurality of keytops are approached by the finger, to display also surrounding keytops. The information relating to the proximate arrangement of keys is stored in the memory 7 in advance, and when the characters around a key determined to be most intended is displayed on the screen. Fig.12a shows a screen for executing the word-processing software, which displays the approach of the fingers to the characters keys "A", "S", "Z" and "X" on the ASCII-type keyboard. More specifically, in the case under consideration, the finger is located at the boundary of these keytops. These characters are displayed in such a fashion that when the operator jogs his finger a little, the whole of these characters is also oscillated. Also, as a method of display in oscillated fashion, the physical relative positions are not displayed in a bit-mapped manner oscillating the display, but marks are attached to indicate the relative positions always in the case where the finger is out of position as shown in Fig.12b for displaying a character. More specifically, a longitudinal line is drawn to the left of "S" and a lateral line under "S" for display to inform the operator that the finger is at a position near to "A" and "X", thereby urging the operator to move this finger to the position where the marks disappear. In similar fashion, a color may be used instead of a mark to indicate a displacement.

Now, another embodiment will be described with reference to Figs.13 and 14. Fig.13 is a function block diagram, and Fig.14 a display screen in the process of executing the word-processing software. The circuit of Fig.13 is substantially identical to that of Fig.1, the only difference being that a switch 18 and a keytop 19 are added. This key is assigned for execution of a specific function, and when this key is pressed during execution of the word-processing software, the screen transfers from the word-processing screen to the icon screen shown in Fig.14. Each icon is displayed in positions corresponding to the physical positions in the horizontal and vertical directions of the keys. In the process, assuming that any finger touches or approaches the key, the brightness of a specific icon changes as shown in Fig.14, thereby indicating that a corresponding process is expected to be executed. If the key is pressed under this condition, the actual process is accessed and executed.

Now, another embodiment will be explained with reference to Fig.15. Fig.15 shows a display screen, which displays a descriptive statement of the icon changed in color in Fig.14. The explanation of function of an icon corresponding to the physical position of each keytop touched is thus displayed at the lower part of the screen.

Now, another embodiment will be explained with reference to Fig.16. In Fig.16 showing a side view of a part of the keyboard, numeral 1 designates a keytop, numeral 2 a switch and numeral 3' nine small electrodes arranged in three rows and three columns on each keytop. The output of each electrode is connected to sensing circuits 4 in Fig.1 respectively. When the upper part of the keytop is approached by a finger, a detailed positional information can be obtained and displayed. In other words, a given keytop 1 providing a mechanical switch has nine electrical switches in combination thereon and thereby is able to handle a greater amount of positional information.

Now, another embodiment will be explained in Figs.17, 18a and 18b. Fig.17 is a diagram showing the function blocks, and Figs.18a and 18b are display screens. In the circuit of Fig.17, numeral 20 designates a keytop, numeral 21 a HELP function switch, and numeral 22 an electrode of a proximity sensor. This circuit, which is substantially the same as the one shown in Fig.1, has added thereto the switch 21 for contributing the HELP function described above. This switch 21 is a display changeover switch. When this switch 21 is not approached or touched by a finger, as shown in Fig.18a, the position of the fingers approaching each keytop is displayed by a combination of bit maps of small points (hatched portions in the model keyboard display having three columns and four rows). Also, the thumb position is indicated by a solid black square mark ■ among all the marks arranged in lateral direction. When the finger approaches a proximity sensor 22, on the other hand, characters corresponding to the keytops respectively are displayed in large form as shown in Fig.18b (similar to Fig.8). More specifically, when he is not sure what is the character on the keytop, the operator makes his finger approach the proximity sensor 22 and a target keytop, and thus can know a corresponding character. In addition, the related descriptive statement is displayed when the keytop 20 is pressed further and the switch 21 is turned on. In this way, the HELP level is divided into two stages. This keytop 20 is mounted at the upper left part of the keyboard housing (for right-handed persons). This keytop 20 is located at a position difficult to reach by a single hand, and therefore it is always necessary to press it by the opposite hand (the left hand in the case under consideration). This layout induces the operator to blind touch at early time.

Now, another embodiment is explained with reference to Fig.19. In Fig.19, numeral 23 designates a housing for right-handed persons, and numeral 24 is a depression. This depression has a plurality of keytops mounted thereon. Another set of keytops is arranged in such positions as to surround the depression 24. Numeral 25 designates a palm rest with the upper left side thereof raised and the right side thereof recessed in the figure . Numeral 11 designates one of photosensors, numeral 13 a thumb insertion hole, and numeral 26 an electric wire for communication to the host computer and supplying power. The operator places the recess of the palm of his right hand on the raised portion of the palm rest 25 and touches keytops on the depression 24 by his forefinger, middle finger and third finger respectively, with the thumb inserted in the thumb insertion hole 13. An acceleration sensor 27 is mounted in the lower part of the housing in the palm rest 25 for realizing the mouse function. In other words, the operator can input either by way of the keyboard or pointing.

Now, another embodiment will be described with reference to Fig.20. In Fig.20, numeral 28 designates an accommodable tongue, on which a photosensor 11 is arranged for detecting the touch or approach of the thumb. The thumb thus can be detected by the photosensor 11 as well as by photosensors 11' mounted in the thumb insertion hole 13. These photosensors 11, 11' are arranged in arcuate form following the movement of the thumb. Numeral 27 designates an acceleration sensor mounted in the housing 23. When the housing 23 is moved, the acceleration sensor 27 detects the acceleration, and the result of detection is transmitted to an external CPU, thus functioning as a mouse. The operator places his right hand on the palm rest 25, and moves his thumb in arcuate form along the insertion hole 13 or the tongue 18. As a result, the positional information of the thumb is obtained by the photosensors 11, 11'.

Now, another embodiment will be explained with reference to Fig.21. In Fig.21, numeral 29 designates a plurality of holes arranged along the periphery of the housing, in each of which a photosensor 11" is arranged. In the case where the little finger of the operator approaches a hole 29, it is detected and as in the case of the thumb, the information symbol corresponding to the keytop 1 can be modified. More specifically, according to this embodiment, these photosensors 11" are made to correspond to the normal keyboard shift or control keys. On the display screen, the position where the little finger is sensed is indicated by a mark corresponding to the position of the hole.

Now, another embodiment will be explained with reference to Figs.22 and 23. Fig.22 is a plane view, and Fig.23 is a diagram showing the function blocks. In these diagrams, numeral 25 designates a palm rest, numeral 29 first holes, numeral 30 second holes, and numeral 31 a display cursor. Numeral 16''' designates a display area corresponding to the physical position of keytops. CCD imaging devices 33 are built in the palm rest 25, so that an object on the keytops 1 can be imaged through a lens 32. The second holes 30 are located at a position higher than the first holes 29, and therefore cannot be reached by the little finger with the palm placed on the palm rest 25. The operator therefore has no choice but to use his third finger to insert any of his fingers at all into any of the second holes 30, and only the forefinger and the middle finger can touch the keytops 1. Numeral 34 designates an image processing circuit for processing signals from the CCD imaging devices 33. When the third finger is inserted in a hole 30, the image processing circuit 34 is energized so that the coordinate position of the finger on the keytops 1 is determined by trigonometrical survey (range finger method). If two fingers touch or approach the keytops 1, the coordinates of two points are determined. Assuming that the the two points represent the head and the tail end of a portion of a sentence to be deleted, for example, the CPU 6 retrieves these points as the range designating information while at the same time display the information in reverse display on the display 10. Alternatively, if the two points are to represent a figure, on the other hand, the type of the figure such as the circle is selected by the thumb position, the circle center by the forefinger, and the radius of the circle by the middle finger. In this way,a circle can be specified. As another alternative, in the case where the designation of a single point is sufficient for the above-mentioned purpose, the middle finger is inserted in a hole 30 with the thumb approached to the thumb sensor for specifying the figure.

Now, another embodiment is described with reference to Fig.24. In Fig.24, numeral 35 designates a depression inclined with respect the housing 23. Keytops 1 are arranged on the depression. The depth of the depression is deeper rightward and downward with the keytops are mounted inclined positions. This construction with this side and the right side of the depression formed deeper naturally fits the shape of the hand and contributes to reduce the fatigue of the operator.

Another embodiment is explained with reference to Figs.25 and 23.

Fig.25 is a flowchart for controlling the position of a display pointer of the display 10 by summing the absolute coordinate position (fine positional coordinate) (finger positions on the keytops) and the relative coordinate position (coarse positional coordinate)(relative position of the housing) determined in the circuit shown in the block diagram of Fig.23. More specifically, the operator designates a position designation mode to the CPU by pressing a predetermined switch on the housing 23 and thus enters the interrupt process shown in Fig.25. The CPU 6 receives the absolute coordinate position of the finger on the keytop 1 determined from the CCD imaging device 33 and the image processing circuit 34 and the relative position coordinate of the housing 23 from the acceleration sensor 27, and applies the sum thereof providing coordinate information to the host computer, which information is displayed as mouse pointer information on the display 10. The display includes a rectangular display area corresponding to the whole of the keytops as the relative position information due to only the acceleration sensor. For this reason, in the case where the operator places his finger on a keytop and moves the housing 23, the particular rectangle is moved together with the mouse pointer therein. Further movement of the finger without moving the housing 23 results in only the mouse pointer being displayed moving in the rectangle while the rectangle remains stationary. The operator moves the housing for coarse coordinate designation and the finger in the depression for fine coordinate designation. According to this embodiment, the relative coordinate is detected by the use of an acceleration sensor. Instead, optical means may be used for the same purpose. In such a method, the movement of an image obtained by imaging the desk top surface may be processed in an image processing circuit to determine the image movement. If the operator lifts the housing, the image may be enlarged or blurs, in which case the coordinate is not calculated. In other words, the system can be handled with a sense similar to a mechanical mouse.

Now, another embodiment will be explained with reference to Figs.26 and 27. In Fig.26 showing a full view, numeral 36 designates a switch. Fig.27 showing a flowchart, on the other hand, represents a part of the process for character input during the execution of the word-processing software. When the operator presses a correction switch with a palm while entering a character (the switch 36 located to the left in the raised portion of the palm rest according to the embodiment), the process is started. The CPU, deciding that a word (or a partial character string of a word) already entered is erroneous, refers to a character dictionary for words near to the word in entry and at the same time searches grammar and collocation dictionaries or the like for predicting and listing up candidate words. A total of 12 candidate words (or partial character strings of a word) including 4 in rows and 3 in columns of keyboard are displayed. Each key corresponds to a word on display, so that the word associated with a key approached by the finger is highlighted. In the case where the operator has found a word to be corrected and entered, the particular word can be corrected and entered by the operator pressing (striking) the corresponding key further. Suppose a candidate cannot be found, this process is terminated by pressing the correction switch 36 again. Also, in the case where the entire word on display is not correct but only a part of the word, the particular part is input by specifying a word or a partial character string of the candidate words on display by touching or approaching the corresponding key with the finger, while at the same time touching or approaching the thumb proximity sensors with a sliding thumb. A part of the specified candidate word or partial character string is selected by color reversal or other methods. Upon selection of a desired portion, the corresponding key is struck thereby to input only the desired character string in the candidate. In this way, a correct character string is input. Though not described in the flowchart to avoid complication, candidate words following the partial character string entered at this time point is further displayed on the screen. Subsequently, the operator continues to input words or partial character strings in similar fashion.

Now, another embodiment will be explained with reference to Figs.28, 29 and 30. Fig.28 shows a full view, in which numeral 37 designates a candidate word selection switch. Fig.29 is a flowchart representing a part of the process for character input during the execution of the word-processing software. When the operator enters characters as in the normal case of character input, the process is started. The CPU receives the same characters and refers to a character dictionary making up words and at the same time searches grammar and collocation dictionaries, so that each whole word is complemented and predicted thus presenting candidate words. A total of 12 words (or partial character strings of a word) including four in rows and three in columns of keys are thus displayed as candidate words. The operator presses a candidate word selection switch (the switch 37 arranged to the left of the recess of the palm rest according to the embodiment under consideration) to transfer to the candidate word selection mode. Since each key corresponds to a word on display, the candidate word corresponding to a specific key touched or approached by the finger is highlighted. In the case where the operator has found a word to be entered, the required word can be input by pressing the corresponding key.

In the case where only a part of the word on display coincides with the desired word, on the other hand, in order to input the particular part, a word or a partial character string is specified out of the candidates on display by touching or approaching a corresponding key with the finger, while at the same time making the thumb touch or approach by sliding over the thumb proximity sensors. The candidate word or the part of the partial character string thus specified is selected by color reversal or the like method. Upon selection of the desired part in this way, the corresponding key is struck thereby to enter only the desired character string among the candidates. By doing so, a correct partial character string is input. At this time point, candidate words having the partial character string entered are displayed further on the screen, and the operator continues to input a word or a partial character string. A candidate screen on display for the input process described above is shown in Fig.30. The character "v" is a character string being entered, under which 12 candidate words beginning with "v" are arranged and displayed in correspondence with the keys. The operator, when desiring the "victor", can easily enter the character string "victor" by pressing the right key on the third row from top. The process of normal character input of course is continued if the operator fails to press the candidate input switch 37.

Now, another embodiment will be explained with reference to Fig.31.

According to this embodiment, a plurality of sensors 11 for detecting the touch or approach of the thumb are provided at the upper left part on the operator's side of the housing 23. The sensors 11 are preferably positioned about 1 cm nearer to the root from the finger tip taking different lengths of the thumb of the like into consideration. Sensors 29' and 30' similar to those in the holes on the top side of Fig.26 are arranged in shallow depressions on the right side of the housing.

Now, another embodiment will be described with reference to Fig.32.

According to this embodiment, a rectangular switch 40 is arranged at the upper left part on this side of the housing 23, which switch is adapted to turn on by being pressed. The switch 40 is equipped with the function of a return key or the like, for example. A plurality of sensors 11 for detecting the touch or approach of the thumb are provided on the switch 40. Numeral 41 designates protrusions for notifying the thumb position by the feel of touch.

Now, another embodiment will be explained with reference to Fig.33.

According to this embodiment, a rectangular switch 40 is provided at the upper left side on this side of the housing 23, which switch is turned on by being pressed. This switch 40 is equipped with the function of a return key or the like, for example. A plurality of sensors 11 for detecting the touch or approach of the thumb are arranged on the switch 40. Each sensor 11 includes two child sensors a and b for detecting the thumb position. More specifically, there are arranged five sensors in each lateral direction and two sensors in each longitudinal direction of the thumb. This is in order to permit the sensors 11 to securely detect the presence of the thumb with variations of the hand position with respect to the housing 23 or against various lengths of the thumb. In view of the fact that the difference in length or relative position of the thumb occurs in the longitudinal direction of the thumb, two sensors are provided in longitudinal direction. As a result, the same thumb position is detected regardless of which one of the upper or lower child sensor 11a or 11b is touched. Numeral 41 designates protrusions for informing the operator of the thumb position by the feel of touch.

Now, another embodiment will be described with reference to Fig.34.

According to this embodiment, the number of thumb sensors 11 is smaller than the number of types of thumb position designation. As shown in Fig.34, there are provided four thumb sensors 11. Specifically, vowel "a" groups are designated when the finger is detached from all the sensors, vowel "i" groups are designated by use of the lowest sensor, vowel "u" groups by use of the second lowest sensor, vowel "e" groups by use of the third lowest sensor, and vowel "o" groups by the use of the top sensor. Though not illustrated, a single CCD or the like provides a sufficient thumb sensors by measuring the thumb position by an image input unit like CCD. In this way, the number of types of the thumb position designation is not necessarily coincident with the number of thumb sensors.

Now, another embodiment will be explained with reference to Fig.35.

According to this embodiment, the number of thumb position sensors is reduced while a little finger sensor provides a supporting function. More specifically, there are only two thumb position sensors. The operation mode is switched between three states, i.e., when the thumb is detached, when the thumb approaches the lower sensor or when the thumb approaches the upper sensor. Further, the little finger sensor enters the shift mode for entering sonants or the like when touching the lowest key 42 (to the right of the alphanumeric keys) and/or the key 43 ( to he lower right ENTER key) in the second stage from the bottom. Various related combinations are shown in Fig.36.

These screens are displayed in the same way as if three cards are turned over by the thumb. More specifically, the thumb is detached with the little finger not approaching the sensors 42 and 43 in Fig.37. Therefore, the "a", "ka" and "sa" groups can be entered, so that 3 x 5 characters corresponding to the keyboard layout are displayed at the uppermost part, and the characters touched or approached on the keys are displayed in distinction. In Fig.38, on the other hand, the thumb approaches the lower sensor with the little finger not approaching the sensors 42, 43, and therefore entry of the "ta", "na" and "ha" groups is made possible, and 3 x 5 characters corresponding to the keyboard layout are displayed at the top. Characters approaching or touching the sensors are displayed in distinction. Also, in Fig.39, the thumb is detached, with the little finger approaching the sensors 42 and 43. As a result, the "a", "ga" and "za"groups can be entered, so that 3 x 5 characters corresponding to the keyboard layout are displayed at the top, with the characters approaching or touching the keyboard being displayed in distinction.

A supermicrocomputer may of course be built in the back of the keyboard described above.

A cover according to an embodiment of the invention will be explained with reference to Figs.40 to 45. Fig.40 includes a plane view (40a) and a side view (40b) of a cover 50 mounted on the above-mentioned keyboard housing 23 in closed state. Fig.41, on the other hand, is a diagram showing the cover 50 removed from the housing 23. More specifically, the cover 50 is generally channel-shaped, and can be closed in such a way as to cover the housing 23. At the same time, the cover 50 can be freely demountable while remaining electrically connected with a cord (replaceable with a connector). The cover 50 is adapted to be bent inward at the central portion thereof. Numeral 51 designates a bent portion. Numeral 52 represents the side of the cover. The side 52 is cut off at a point thereof corresponding to the bent portion 51. Numeral 53 shows the cut portion. Consequently, as shown in Fig.41, when the cover 50 is bent inward, the respective sides portions 52 are partially overlaid one on another.

Further, the forward end (the upper right side in Fig.41) 54 of the cover 50 has mounted thereon a display unit 55 of liquid crystal type or the like in an openable fashion. When the display unit opens, the display unit 55 is suspended from the cover body. Various symbols or the like can be displayed on the inner side (the left side in Fig.41) 55a of the display unit 55. Fig.42 is a diagram showing the display unit 55 of Fig.41 as viewed from the direction of arrow W. Characters "BBC" are displayed on the display unit 55. These characters not visible directly in the rear view of Fig.42 (and therefore are indicated by dotted line). A concave magnification mirror (having a paraboloidal surface) 57 is mounted on the lower side (in Fig.41) 56 split by the bent portion 51 on the back side of the cover 50. As a consequence, with the cover 50 open, the screen displayed on the display unit 55 is projected in enlarged form on the concave magnification mirror 57. The angle of the respective members is designed to ensure such a magnification. The operator thus can view an enlarged image of "BBC" by the concave magnification mirror 57 as shown in Fig.42. Fig.43 shows the state in which the cover 50 is open from the housing 23.

In closing the cover 50, the display unit 55 is rotated inward into closed state, the bent portion is extended and covered on the housing 23. In the process, the display unit 55, etc. positioned inside are accommodated in the recesses of the keyboard surface.

Also, Fig.44 shows the state in which the cover 50 is rotatable by a hinge 58. Fig.45, on the other hand, shows the cover 50 connected by a connector 59 to the housing 23.

Now, another embodiment of the invention will be described with reference to Figs.46 to 49.

The upper part of Fig.46 shows a cover 50 and the lower part the same cover 50 cut away along a one-dot chain and viewed from above. As obvious from this sectional view, (cylindrical) expansions 52a are formed at the end on this side of the upper side surface 52 of the cover 50 (See Fig.41). Fig.48, on the other hand, shows the cover 50 and a head band 60 separated from each other. Also, Figs.47 and 49 are diagrams showing the state in which the cover 50 is mounted on the head band 60 through the expansions 52a. Fig.47 is a plane view and Fig.49 a side view.

In Figs.47 to 49, a tabular holder 61 is protruded from each of the right and left sides on the front of the head band 60. A cylindrical recess 61a into which the expansion 52 is to be inserted is formed at the forward end of each of the tabular holders 61. As a result, the cover 50 can be easily attached to the head band 60 by inserting the cylindrical expansions 52a of the cover 50 into the cylindrical recesses 61a of the tabular holder 61 from above as shown in Fig.49. Under this condition, the operator can set the display unit 52 at an easily visible position regardless of the orientation of the housing 23.

The tabular holder 61 of the head band 60 has two plates, one of which can be slidably inserted into the other. The distance between the cylindrical recess 61a at the forward end of the head band 60 and the eyes of the operator can thus be adjusted. Numeral 62 designates a surface fastener.

Also, in the aforementioned embodiment, it is of course possible to take off the cover and taking advantage of the connector on the housing 23 side, display data on a screen display unit of a common personal computer.

According to this invention, any object such as a ballpoint pen used for touching, approaching or pressuring is of course equivalent to a finger.

As obvious from the foregoing description, according to the invention, there are obtained the following advantages:

(1) Key input or position input is possible by a single hand.

(2) A feedback operation is effected in which a particular key is searched for without performing any operation of striking the key. The user therefore is free of any psychological burden.

(3) Even with a small number of keys, they can be assigned to a plurality of symbols easily.

(4) A compact cover with a display unit is provided.

As described above, according to the invention, the difficulty of operation of an information processing input system is considerably improved.

Now, another embodiment of the invention will be described in detail with reference to the drawings.

Fig.50 is a block diagram showing the functions of an information input processing system according to an embodiment of the invention. In Fig.50, numeral 101 designates electrodes formed on the tablet surface, numeral 102 an analog selector, numeral 103 an A/D converter, numeral 104 a one-chip microcomputer, numeral 106 a speaker and numeral 105 a personal computer acting as a host. Also, Fig.51 is a flowchart showing the processes for a microcomputer 104. Fig.52 shows the principle of a method for determining the central coordinate from the potential of each electrode sensor.

Now, in the case where a finger touches a plurality of specific electrodes 101, an inductive potential is generated in each corresponding electrode as a sensor. Although described in a fewer number for simplification in the drawing, a greater number of electrodes are actually used. The potential of each electrode is multiplexed in time division by an analog selector 102 and applied to the A/D converter 103 (step S1). The outputs thus retrieved are compared with each other, whereby the degree of finger touch can be checked for each electrode as a contact area ratio by the microcomputer. The finger is larger than the electrode, and therefore it follows that the electrodes are sampled spatially over the tablet surface. The coordinate of the finger center can be calculated in the same way as when determining the apex of a mountain (step S2). Assume that the sum of the outputs of the electrode sensors is proportional to the contact area. The act of strongly pressing the finger increases the contact area. When a given threshold value A is exceeded (step S3), the speaker 106 is sounded in order to inform the operator that the coordinate position where the finger is placed has been selected (step S4). Selection information having an equivalent meaning to the button click of the mouse, for example, is sent to the personal computer making up a host together with the central coordinate of the finger (step S5). If the finger pressure is less than the threshold A (step S3), on the other hand, only the coordinate position is sent (step S6).

Now, another embodiment will be described with reference to Figs.53 and 54. In Fig.53, numeral 107 designates a switch, and numeral 108 an LED. A tablet selection switch is added to the circuit of Fig.50 and the LED is used in place of the speaker. Also, the nine electrodes on the left side of the electrode set 101 are assigned to the keys 101a, and the nine electrodes on the right side of the electrode set 101 to the keys 101b. Fig.54 is a flowchart, in which if the tablet selection switch is on, as in Fig.51, the central coordinate of the finger or the selection information is sent (steps S1 to S7). If the table selection switch is off, on the other hand, the keyboard is assumed to have been selected, so that in the case where the sum of sensor potentials is more than A, a key is decided to which the central coordinate of the finger is to assigned, and the codes of the selection key and the key in touch with the finger are sent to the host personal computer (step S3, steps S8 to S11). Also, if the total sum is less than A, only the code of the key in touch with the finger is sent (step S12).

Now, another embodiment will be described with reference to Figs.55 and 56. In Fig.55, numeral 109 designates phototransistors, and numeral 110 an infrared ray LED. The phototransistors 109 receive the light from the infrared ray LED 110 and detects the position of the thumb. Fig.56 shows a housing packaged with the circuit of Fig.55. The position of the thumb is detected by an optical proximity sensor configured of the infrared ray LED 110 and the phototransistor 109 including the phototransistor 109 and the infrared ray LED 110 and mounted on the left side of the housing. This finger position is combined with the finger position on the tablet surface to selectively input a combination of key information .

Now, another embodiment will be explained with reference to Fig.57. In Fig.57, numeral 111 designates a plastic film. Each of the plastic films 111 is formed in a cup-shaped protrusion and bonded to the lower part of a keytop 101' having the electrode shown in Fig.50. When a force is applied to each keytop, the key presents a feeling of click. In this example, the click feeling is transmitted to the operator, and at the same time the pressure of the finger is influenced by the click and detected in the form of ups and downs. More specifically, the setting of touch degree assumes the same value as the critical value of finger pressure causing the click. Although this example uses a sensor with electrodes directly exposed, it is actually desirable to use a sensor of such a type that the capacitance variation against the ground due to the proximity of a finger without exposing any electrode is desirable. In such a case, a shield plate is further provided under each film 111 for a further increased capacitance against the ground as any electrode causing the click approaches the shield plate. This type of structure makes it possible to detect a signal of the setting of touch degree more easily by the secondary effect due to the film deformation.

Now, another embodiment will be explained with reference to Fig.58. In Fig.58, numeral 112 designates a slide mechanism for transmitting the force to a tablet selection switch 107. Also, numeral 113 designates a partition plate arranged at the boundary with the keys in such a manner that each of the four corners thereof coincides with the protrusion of the plastic film. The partition plate 113 also has four notches at the ends thereof acting in combination with the stopper of the slide mechanism 112. Further, the protrusion of the plastic film is also arranged under the portion of the tablet corresponding to each key. Numeral 114 designates a spring, and numeral 115 a spring support. When the slide mechanism 112 is pushed, the stoppers at the notches of the partition plate 113 move so that the partition plate 113 cannot be pressed any more. At the same time, the slide mechanism 112 presses the switch 107.

Now, another embodiment will be described with reference to Fig.59. In Fig.59, numeral 116 designates a slider mechanism. An optical proximity sensor comprising an infrared ray LED 110 and a phototransistor 109 mounted on the slider 116 is adapted to slide vertically along the side portion of the housing. Individual personal differences of the thumb are adjusted by this slide mechanism.

Now, another embodiment will be explained with reference to Fig.60. Fig.60 is a flowchart, in which in the case where the optical proximity sensors each configured of the phototransistor 109 and the infrared ray LED 110 approach the thumb (step S8), the sensor most approached by the finger is detected (steps S9 to S15). When the thumb goes away (step S8), the value once selected is held (steps S16 and S17).

Now, another embodiment will be explained with reference to Fig.61. In Fig.61, four proximity sensors 109' are included each comprising a phototransistor 109 and an infrared ray LED 110. Of the four proximity sensors 109', one is arranged extensively in lateral direction thereby to detect the movement of the forward end of the thumb, i.e., the vertical movement of the finger (in parallel to the paper). This sensor can give a shift of a key for discriminating the lower-case and upper-case letters of English, for example.

Now, another embodiment will be explained with reference to Figs.62 and 63. Fig.62 is a plane view, and Fig.63 a flowchart representing the operation. In Fig.62, numeral 117 designates a matrix electrode formed on the tablet. Each intersections of the matrix are insulated. In Fig.62, the outputs of the matrix electrode are multiplexed by an analog selector 102'. The center of the finger position is calculated along the directions i and j of the matrix, after which calculations are made to rotate the coordinate by 45 degree (steps S1 to S3) thereby to correct along X and Y directions. This is by reason of the fact that when fingers are placed on the tablet, they are unavoidably overlaid one on another in horizontal direction and therefore it is difficult to detect the touch of a plurality of fingers by matrix. The probability of fingers being overlaid one on another can be considerably reduced by the above-mentioned processing in diagonal direction.

Now, another embodiment will be explained with reference to Figs.64a and 64b. In Fig.64a, numeral 118 designates a proximity sensor film with capacitance-detecting electrodes wire-printed on the back side thereof, numeral 119 a plastic sheet corresponding to the keytops, and numeral 120 a partition plate having a hole at the portion thereof corresponding to the keytops and also a stopper at the lower part of each hole. A protrusion of the plastic film 111 is arranged at the lower part of each plastic sheet 119. Normally, each plastic film 111 is pressed down. When the plastic films 111 are pushed up as shown in Fig.63b , however, the plastic sheet 111 corresponding to each keytop 119 raises the sensor film.

Now, another embodiment will be described with reference to Figs.65 and 66. In Fig.65, numeral 121 designates a light transmitter-receiver unit, numeral 122 a support system rotatable in both vertically and horizontally, numeral 123 a lateral drive coil, numeral 124 a lateral rotating magnet, numeral 125 a vertical drive coil, numeral 126 a vertical rotating magnet, numeral 127 a hair-type spring, and numeral 128 a support member making up a part of the housing. In Fig.66, on the other hand, numeral 129 designates a photodiode, numeral 130 an amplifier, numeral 131 a filter circuit, numeral 132 a sync detection circuit, numeral 133 demodulator circuit, numeral 134 an infrared ray LED, numeral 135 a modulator circuit, numeral 136 a coil drive circuit, numeral 137 a D/A converter, numeral 138 an integration circuit and numeral 139 an A/D converter. The light transmitter-receiver unit 121 has built therein a photodiode 129 and an LED 134 for performing optical communications with a personal computer making up an external host computer. The light transmitter-receiver unit 121 is mounted on a support system of a rotating mechanism 122 like a gyro top, and therefore the D/A converter is finely vibrated (wobbled) by being supplied with data in such a manner as to maximize the light quantity of external infrared rays focused on the phototransistor 129. The signal level is detected by the integration circuit 138 which integrates signal data of very high frequencies and retrieves a signal level, which is converted into a digital value by the A/D converter 139 and applied to the microcomputer. The setting of the D/A converter providing a maximum signal data represents the directional data of the external light. Also, the data from the tablet 1 are multiplexed by an analog selector, and through the A/D converter 103, are applied to the microcomputer. The pointing information as absolute position information is thus supplied. Also, the directional data of the external light is synthesized as relative information, and through the modulation circuit 135 and the LED 134, applied to an external light-receiving element. In similar fashion, a signal from an external source is applied through the sync circuit 132 and the demodulation circuit 133 to the microcomputer 104. Normally, in infrared ray communications, a great number of LEDs are used to prevent signals from being interrupted by emitting light in many directions. By directing a light transmitter-receiver unit toward the direction of transmission and receiving as in the above-mentioned case, however, power consumption can be reduced while at the same time producing pointing information.

Now, another embodiment will be explained with reference to Fig.67. In Fig.67, numeral 140 designates a switch arranged at the lower part of the housing. This switch 140 is adapted to turn on when the housing is placed on the desk. As in the case where the mouse is raised in the air when it is liable to be displaced out of the mouse pad, the switch information is used for stopping the cursor on the screen or, when used as an air-borne mouse but not on the desk as a remote controller for TV, for detection of the reverse operation of the light transmitter-receiver unit as compared when it is operated on the desk.

Now, another embodiment is described with reference to Fig.68. This drawing is a flowchart for explaining the operation. When a light signal is received from an external source, a light transmitter-receiver unit begins to track the external light. In the process, such mutual communication attributes, that is, information on whether a television or a computer is used for communication or what is the memory capacity provided are exchanged (steps S1, S2, S3). This operation is maintained only as long as the optical communication is established, and is automatically reset by an interrupt from another device or an automatic power off when information exchange ceases for a predetermined length of time (steps S1, S5). Exchange of key information is also possible with a pointer on the desk or an air-borne mouse.

Now, another embodiment will be explained with reference to Fig.69. In Fig.69, numeral 141 designates a focus drive coil on which a light transmitter-receiver unit is mounted, and numeral 142 a focus moving magnet. This drive coil causes the phototransistor of the light-receiving unit to move back and forth thereby to detect the distance to an external light source.

As obvious from the foregoing embodiments, in an information input processing system according to the invention, the key input or position input is possible by a single hand. Also, the position input and the key striking operation can be realized with the same sensor.

The following is a description of another embodiment related to the embodiments described above with reference to Figs.56 or 61, and other drawings.

More specifically, Fig.70 is a diagram showing a full view of a single-hand-operated keyboard shown as an example of an information input processing system according to the invention.

A housing 151 of the single-hand-operated keyboard is laterally symmetric. A thumb light sensor 152, which is replaceable and so constructed as to have an electrical contact connectable on both right and left sides, can be operated by either right or left hand.

Also, Fig.71 is a diagram showing a full view of a single-hand-operated keyboard and a thumb light sensor. A housing 201 of the single-hand-operated keyboard has a slidable thumb sensor 202. Any person therefore can operate the keyboard smoothly by slide adjustment in accordance with his finger length. Each sensor 203 of the thumb light sensor 202 may be equipped with a focusing lens 204 for an improved sensitivity.

Fig.72 is an illustration of providing hysteresis between the on/off operations of the switch and the distance between the thumb and the sensor. When hysteresis is represented by 301, the distance by which the thumb departs away and turns off the switch is shorter than the distance by which the thumb approaches and turns on the switch, and therefore, the switch can be changed over rapidly. In the case where hysteresis is given by 302, the distance by which the thumb departs away and turns off the switch is longer than the distance by which the thumb approaches and turns on the switch, so that once the switch is turned on, therefore, the switch-on state can be held stably. In accordance with the user propensities, the hysteresis 301 or 302 can be selected.

Now, a pointing device will be described as an embodiment of the coordinate input system according to the invention.

Figs.73a and 73b show an example configuration of the pointing device for detecting the operation of a tabular movable object.

An opening 402 inside the case of a tabular movable object 401 has a circular structure, so that the force in X and Y directions can be detected even when the pen or the finger comes into contact with the opening. In similar fashion, a rectangular opening can attain a similar effect by performing a high-friction machining on the inner wall thereof. Pressure-sensing rubber balls 403 may be arranged inside the opening 402 and scratched by the finger or pen, or the tabular movable object is pressed down, whereby the direction and the distance covered can be indicated by the pressure-sensing rubber balls 403 and an electrical circuit for detecting the change thereof.

Fig.74 shows the configuration of another embodiment of a pointing device capable of operation in relative positions by means of pressure-sensing rubbers.

This embodiment includes a resistor-type touch panel 501 and pressure-sensing rubber balls 502 and dead-zone spacers 503 around the panel 501. The absolute-positional operation is performed by use of the touch panel, and the movement of the touch panel with respect to the pressure-sensing rubber balls is detected to perform the relative-positional operation.

Now, with reference to Fig.75a, the configuration of a detection circuit with pressure-sensing rubber balls used in Figs.73a, 73b and 74 will be explained.

In Fig.75a, the voltage changed under the pressure of four pressure-sensing rubber balls 171 is sampled by an A/D converter 172 and the amount and direction of change are detected by calculations at an MPU 173.

Fig.75b is a diagram for explaining the operation described with reference to Figs.73a, 73b and 74. The operation on a surface (say, 183) maintaining a coordinate system always fixed with respect to a tablet surface 181 and a screen surface 182 is assumed to be an absolute-positional operation. In contrast, the operation on a surface 183 whose movement causes a change in the coordinate system of the tablet surface 181 and the screen surface 182 is assumed to be a relative-positional operation. As a result, the coordinate information can be input much more readily than in the prior art.

Fig.76 is a diagram showing the configuration of a pad according to an embodiment. In Fig.76, a pad 601 is composed of a resistor 602 coated with an inorganic coating material containing a substance of high dielectric constant (such as titanium oxide powder) 603 or mixed by fusion in a film-like material.

Fig.77 is a diagram showing an embodiment of the invention in which the priority order of selection is determined using the contact area of the pad and the distinction between the pen tip and the finger tip. A method of detection for this particular case is shown as a flowchart in Fig.78.

Upon detection of the on-state of a switch 703 (S1001), the position having the largest area is selected in priority among the sizes of the areas 702 in touch with the finger tips on the pad 701, thereby making it possible to give a plurality of functions to the switch according to the position. More specifically, even when the same switch 703 is turned on, the positional information may be different. Whether the same finger or pen is touched is decided from whether the difference between the detection positions of adjacent resistors is not more than a threshold level $\alpha$, and it is thus decided whether a single or a plurality of fingers or pens are touched (S1003 to S1007). In the case where the contact area of only less than a threshold value $\beta$ can be detected, it is possible to decide that a pen-like object but not a finger tip is touched (S1008, S1009). In the case where a contact area more than $\beta$ is detected, on the other hand, it is decided that a finger tip is in touch (S1010). This configuration permits a decision on whether a touch is by the pen or by the finger.

Fig.79 is a diagram showing an embodiment for selection operation of the pad. A method of detection for this case is shown as a flowchart in Fig.80.

This embodiment relates to a pad 801, a contactable pad area 802, the ground 803 and a protruded metal plate 804. When the whole pad is pressed, the approach of a resistor to the ground is detected, and thus start of the selection operation is detected (S1101 to S1103), with the result that the feeling of click that the switch of the protruded metal plate 804 is turned on is fed back to the operator.

Fig.81 is a diagram showing an embodiment in which the same resistor of a pad is shared by two or more fingers. This is the case in which a resistor 904 is shared by two fingers at points 902 and 903 on the pad 901. A method of detection for this case is shown as a flowchart in Fig.82. With this configuration, even when two or more fingers share the same resistor of the pad, the contact area and the central position of each finger can be defined (S1206).

Now, a coordinate input system according to another embodiment of the invention will be explained with reference to Fig.83 and other drawings.

In these drawings, numeral 1101 designates a tablet to be touched by the fingers of the operator or the like (details described later). Numeral 1102 designates a mechanical switch arranged on the lower side of the tablet 1101, which is adapted to turn on when the operator applies pressure on the tablet 1101. Numeral 1103 designates a current detection circuit, and numeral 1104 an analog switch for switching the resistors on the tablet 1101 in accordance with a command from the MPU 1106. Numeral 1004 designates an A/D converter for converting the analog voltage detected by the tablet 1101 into a digital value. Numeral 1106 designates an MPU for receiving and processing a value obtained from the A/D converter 1004 while at the same time controlling the tablet 1101 (the method of control will be described later). Information from the mechanical switch 1102 is also received. Numeral 1107 designates a host CPU providing the computer body for performing such operations as moving the cursor in accordance with the input from the operator, and numeral 1108 a display for outputting the result of the processing operation in the host CPU 1107 as visual information.

Fig.84 is a diagram showing a method of detecting the contact position of the finger of the operator or the like using the tablet 1101 according to an embodiment.

Numeral 1101 designates a tablet, numeral 1104 an analog switch, numeral 1105 an A/D converter, numeral 1106 an MPU, numeral 1111 the operator's finger, numeral 1112 a terminal, numeral 1113 an operational amplifier, numeral 1114 a sample-and-hold circuit and numeral 1115 a current detecting resistor.

Band resistors x1~xn (each having the resistance R) are arranged along x (horizontal) axis on the tablet 1101. An end of each band (striped) resistor is connected to the ground, and the other end to the analog switch 1104. This analog change-over switch is for selecting only one of the band (striped) resistors in compliance with a command from the MPU 1106.

The ends of each band resistor on the tablet 1101 has an unused portion unable to be approached by the finger. This is by reason of the fact that it is necessary to avoid a measurement error which might be caused by a reduced time constant due to the band resistor and the capacitance of the contacted portion of the finger when a part of a band resistor near any of the ends thereof is touched by the finger.

First, explanation will be made about a method for detecting the finger position along y (vertical) axis when the operator's finger 1111 touches the resistor $x_n$ through an insulating material as shown.

The analog switch 1104 selects the band resistor x1, a potential E is applied to a terminal 1112, and thus a current $I_a$ is detected in the resistor. Then, the analog switch 1104 is switched to the band resistors $x_2$, $x_3$, ••, $x_n$ in that order, so that the currents $I_{a2}$, $I_{a3}$, ••, $I_{an}$ are sequentially detected by the voltage across the current detection resistor 1115 sequentially. When the band resistor $x_i$ is selected, the current is expressed as

$$I_{ai} = E/R \qquad (1)$$

The chronological change of this current is shown in Fig.85. Actually, a minute transient phenomenon can be observed due to a stray capacitance and is not shown in Fig.85.

The resistor is touched by the operator's finger 1111, and therefore the path from the finger to the ground through the human body makes up a sort of capacitor (with a capacitance of C). A related equivalent circuit is shown in Fig.86. Let the distance from the analog switch 1104 to the point of contact by the operator's finger 1111 be $y_{1i}$ (upper side in Fig.84), the resistance therebetween be $R_{1i}$, the distance from the point of contact by the operator's finger 1111 to the ground be $y_{2i}$ (lower side in Fig.84), and the resistance therebetween be $R_{2i}$. Then, the following relation is held.

$$R = R_{1i} + R_{2i} \qquad (2)$$
$$y_{1i} : y_{2i} = R_{1i} : R_{2i} \qquad (3)$$

Also, the current $I_{ai}$ is given as

$$I_{ai} = E(SCR_{2i} + 1) / [R_{1i}(SCR_{2i} + 1) + R_{2i}] \quad (4)$$

The related chronological change is shown in Fig.87.

Equation 4 shows that the current of $I_{ai} = E/R_{1i}$ can be detected at the time of touching the finger ($S = \infty$). Since E is known, $R_{1i}$ is determined, followed by determining $R_{2i}$ from Equation 2. The finger position along y axis is determined from Equation 3.

The flat portion of the current $I_{ai}$ actually observed corresponds to the portion of a sufficiently high frequency in transient response. More specifically, the exact position of y is where the capacitance in the contact area between the finger and a band resistor exceeds a certain value (the position where the time constant is met, i.e., where the length of the striped contact area of the band resistor from the upstream side exceeds a predetermined amount p), and does not represent the center of the finger contact section. This fact is shown further in Fig.90. For this reason, y undergoes a change when the finger is pressed strongly. Also, since the time constant is changed depending on the finger position along y axis, the predetermined value p itself becomes a function of y. As a consequence, in order to determine the actual center position of the finger, the position of the finger outline located upstream of the striped contact area is determined by calculations, after which it is necessary to calculate the center or perform the correcting operation using the x-axis data assuming that the finger contact area is circular. The current $I_{ai}$ is detected in such a fashion that an operational amplifier 1113 is actuated by the voltage across a current detecting resistor 1115 in which the current $I_{ai}$ flows, and the peak value ($I_{ai} = E/R_{1i}$ in Fig.87) is held by a sample-and-hold circuit 1114. The data thus sampled is applied through the A/D converter 1105 to the MPU 1106.

For the position detection along x axis, the band resistors $x_i$ are scanned and the one having a transient response more than the stray capacitance is selected. Of all the resistors $x_i$ touched by the finger, those resistors are selected for which a current $I_{ai} = E/R_{1i}$ more than a setting can be detected (which is hereinafter referred to as the "ON-resistor" for simplification). In order to secure a high detection accuracy, normally, band resistors are arranged with sufficiently small intervals as compared with the touch width of the finger. Therefore, there is not a single ON-resistor but there exist adjacent ON-resistors. The adjacent ON-resistors undergo a change in accordance with the finger pressure or the relative position of the finger along x axis.

The average of these x coordinate values or, by assuming a finger shape, the center position thereof is determined as an x-axis position where the finger is touched.

Also, when the tablet surface for designating a place is strongly pressed to depress the mechanical switch 1202 or when the cursor is held at a certain position with the finger detached, the contact area of the finger changes. In the process, the center position of the finger calculated is liable to be displaced, and therefore the immediately preceding value is held.

In the case where a plurality of points are touched by a plurality of fingers at the same time, an OFF-resistor being sandwiched by ON-resistors may be detected. With regard to each ON-resistor, therefore, the average value thereof or the center position is estimated, whereby a plurality of points can be simultaneously input and detected. A method of detection used for this purpose is shown as a flowchart in Fig.88.

In this way, the touch position of the operator's finger 1111 on the tablet 1101 can be detected. Further, it is possible to detect the position where pressure is applied on the tablet 1101. Fig.89 is a side view of the tablet 1101. In Fig.89, numeral 1202 designates a mechanical switch, and other component parts similar to those in the aforementioned embodiments are designated by the same reference numerals respectively as in other drawings.

In this embodiment, the mechanical switch 1202 is installed on the lower side of the tablet 1101 and turns on under the pressure applied thereto by the operator's finger 1111. In the process, the operator's finger 1111 is naturally in contact with the tablet surface, and therefore the contact position is detected as a position under pressure. Suppose the mechanical switch 1202 turns on, it is decided that the tablet 1101 is pressured, while if the mechanical switch 1202 is off, a simple touch is decided.

By use of this mechanism, instead of the conventional operation for entering a coordinate (by moving the mouse) and pressing a button on a pointing device such as the mouse, an equivalent operation can be performed by moving the finger on the tablet while in touch with it to enter a coordinate, and directly pressuring a tablet with the same finger.

Now, explanation will be made about another embodiment of a method for detecting the contact position of the operator's finger or the like with reference to Fig.91 and other drawings.

The main difference between the embodiment under consideration and the embodiment described above with reference to Fig.84 lies in the following.

Specifically, the above-mentioned embodiment uses an analog switch 1004 having 16 terminals corresponding to band resistors $x_1 \sim x_{16}$. According to this embodiment, in contrast, the band resistors $x_1 \sim x_{16}$ are divided into four groups (sets), and an analog switch is arranged on the upstream and downstream sides of these band resistors. In this way, a switch of a simpler structure can be used with a fewer number of terminals of the analog switch while maintaining the appropriate resolution. More specifically, as shown in Fig.91, the number of terminals of each analog switch is four.

In Fig.91, numeral 1101 designates a tablet, numeral 1121 an operator's finger, numeral 1122 a first analog switch, numeral 1123 a second analog switch, numeral 1124 a terminal, numeral 1125 a first current detecting resistor, numeral 1126 a first operational amplifier, numeral 1127 a first sample-and-hold circuit, numeral 1131 an A/D converter, numeral 1132 an MPU, numeral 1128 a second current detecting resistor, numeral 1129 a second operational amplifier, and numeral 1130 a second sample-and-hold circuit.

Band resistors $x_1 \sim x_m$ on the tablet 1101 are divided into sets of n to make up m sets of band resistors (Fig.91 shows the case in which m = 4 and n = 4). The upstream end of each resistor set is connected to the first analog switch 1122, and the contents of each set are switched by the second analog switch 1123 on the downstream side thereby to check the distribution corresponding to the capacitance of finger touch. This distribution ratio is checked by reading the value of the rise portion of a response waveform after the lapse of a predetermined length of time.

The aforementioned configuration leads to the basic operation described below.

More specifically, first, the current $I_a$ is measured, whereby which set of band resistors is touched by the finger is roughly checked, and once a set touched by the finger is detected, the current $I_b$ is measured for each band resistor included in the particular set. In this way, a resolution similar to that of the embodiment described above can be obtained.

The operation is explained below more specifically.

First, explanation will be made about a method of detecting the average finger position along y (vertical) axis for a particular set of band resistors touched by the operator's finger 1121 by detecting the particular set through an insulating material as shown in the drawing.

The connection of the first analog switch 1122 to terminals a, b, c, d is expressed by i ( = 1 to m), and the connection of the second analog switch 1123 to terminals e, f, g, h is given as j ( = 1 to n). The first analog switch 1122 is connected to the terminal a (i = 1), the band resistors $x_1 \sim x_4$ are selected, a voltage E is applied to the terminal 1124, a current is supplied to the band resistor set, and the upstream current $I_{ai}$ is checked to see whether it exceeds a threshold value.

In the case where the current $I_{ai}$ exceeds a threshold level, the connection of the first analog switch 1122 to a terminal remains in state i, while the second analog switch 1123 is sequentially switched to perform an operation similar to the one described above. In the process, the current $I_{ai}$ is detected by detecting the voltage across the first current detecting resistor 1125, and the current $I_{bij}$ by detecting the voltage across the second current detecting resistor 1128. In this case, if the only requirement is to specify a resistor set touched by the finger 1121, it is sufficient to detect only the upstream current $I_{ai}$ and check the variation thereof.

As a result, it is decided which resistor set is touched by the finger. The average position of the finger along y axis can be determined by the current $I_{ai}$ in a manner similar to the one described above. This average position, however, is affected by the circumventing current or the like not found in the aforementioned embodiments, and therefore is less accurate than the position along y axis determined in the above-mentioned embodiments.

The current $I_{bij}$ on downstream side, on the other hand, is given by Equation 5 as follows:

$$I_{bij} = E / (R_{1ij}R_{2ij}SC + R_{1ij} + R_{2ij}) \qquad (5)$$

A related equivalent circuit is shown in Fig.92, and the chronological change of the current $I_{bij}$ in Fig.93. Though not shown, according to still another embodiment, the resistance value dropping from the terminals e, f, g, h to the ground is dynamically changed to determine a more accurate distribution ratio. The contents of the above-mentioned embodiment are shown in the flowcharts of Figs.94 and 95.

With the embodiment explained with reference to Fig.91, a resistor 1140 for preventing flow-in is arranged at an end (on the second operational amplifier 1129 side in the drawing) of the second analog switch 1123. This is in order to prevent the current from flowing into the resistors during operation.

More preferably, a diode is added between the downstream terminal of each band resistor (specifically, each of the band resistors $x_5 \sim x_{16}$) and the intersection between each band resistor and each terminal e, f, g, h of the second analog switch 1123 in such a manner that the current flows in the forward direction from the band resistor to each terminal of the second analog switch 1123.

As a result, the unrequired current can be prevented from flowing into the resistors, thereby leading to the advantage of reducing the resistor 1140 for preventing current in-flow to a small value.

Now, a coordinate input system according to another embodiment of the invention will be explained with reference to Fig.96.

In Fig.96, characters e, f, g, h correspond to characters e, f, g, h in Fig.91 respectively, each being associated with one of the four band resistors included in each group. According to the embodiment shown in Fig.91, $I_b$ is selected by a switch circuit. In the present embodiment, by contrast, the differences e-f, f-g, g-h, i.e., the current ratio of each adjacent band resistors are directly observed by three operational amplifiers 2121 to 2123 thereby to determine the current distribution in each group. Each difference is sample-held as a voltage by the sample-and-hold circuits 2124 to 2126, and sent to a microprocessor 2128. As a result, an advantage similar to that of the above-mentioned embodiment is obtained.

An example application of the aforementioned embodiment is shown in Fig.97. Fig.97 shows an information input processing system in which band resistors $x_1 \sim x_{16}$ are provided on the input panel section of the single-hand-operated keyboard 201 shown in Fig.71, so that the keyboard function doubles as the function of a tablet capable of coordinate input as described above, thereby further facilitating information entry as described above than in the prior art.

## INDUSTRIAL APPLICABILITY

As described above, an information input processing system, a cover and a coordinate input system according to the present invention, as compared with the prior art, can be input with information or various types of data more easily. In the case where characters or pattern information are input, therefore, a single-hand entry is possible, thereby greatly contributing to the utility as an input processing system for various types of data.

## Claims

1. An information input apparatus comprising:
   a plurality of switch circuits;
   an array of keys for opening and closing the switch circuits through transmission of forces;
   a plurality of sensors for detecting direct touch or proximity of a finger to all or a part of the keys;
   a signal processing means for receiving and processing data outputs from the sensors and switch circuits;
   a first display means for displaying as a corresponding information code the direct touch or proximity of the finger to the specific key detected by the sensors; and
   a second display means for displaying, in a manner different from that of the first display means, a corresponding specific information code when the switch circuit is closed by pressing the specific key.

2. An information input apparatus comprising:
   a plurality of switch circuits;
   an array of keys for opening and closing the switch circuits through transmission of forces;
   a plurality of thumb proximity sensors for detecting direct touch or proximity of an object; and
   a signal processing means for receiving and processing data outputs from the thumb proximity sensors and switch circuits;
   said thumb proximity sensors being located in an upper, equal, or lower position to a face of the keys , wherein
   specifying one of the thumb proximity sensors by a detection of direct touch or proximity action of the thumb and specifying one of the keys by pressing of other finger or fingers than the thumb are executed and ,
   a plurality of information codes are made corresponding to combinations of both the specifyings and entry is executed.

3. An information input apparatus according to claim 2, wherein
   at least some of the thumb proximity sensors are mounted within an insertion hole of a lower part of a face of the array of the keys , the hole of which is provided for inserting the thumb from side face into the lower part of the array of the keys .

4. An information input apparatus according to claim 2, wherein
   each of the thumb proximity sensors has on surface a corresponding projection or recess of a tangible shape.

5. An information input apparatus comprising:
   a plurality of switch circuits;
   an array of keys for opening and closing the switch circuits through transmission of forces;
   a plurality of sensors for detecting direct touch or proximity of a finger to the key, each sensor being mounted on surface of all or a part of the keys or on separately of the keys;
   a signal processing means for receiving and processing data outputs from the sensors and switch circuits;
   a first display means for informing about a part or all of the direct touch or proximity of the finger detected by the sensors , with correspondence to a physical positions of the sensors;
   a second display means for displaying, in a manner different from that of the first display means, when the switch circuit is closed by pressing the specific key , a corresponding specific information code ; and
   a means for moving an indication produced by the first display means and an indication displayed by the second display means to a proximity of a position of a cursor which indicates a data entry on a screen.

6. An information input apparatus comprising:
   a plurality of switch circuits;
   an array of keys for opening and closing the switch circuits through transmission of forces;
   a plurality of finger sensors for detecting direct touch or proximity of a finger to all or a part of the keys;
   a plurality of thumb proximity sensors for detecting direct touch or proximity of an object;
   a signal processing means for receiving and processing data outputs from the finger sensors, thumb proximity sensors, and switch circuits;
   a first display means for informing about a part or all of the direct touch or proximity of the finger detected by the finger sensors , with correspondence to a physical positions of the sensors ;
   a second display means for displaying, in a manner different from that of the first display means, when the switch circuit is closed by pressing the specific key , a corresponding specific information code ; and wherein
   on a display screen for a plurality of information codes corresponding to the each keys , the first display means displays with a desired display manner information codes corresponding to one or more specific keys of direct touch or proximity, and further by specifying one of the thumb proximity sensors a part of the displayed information codes are selectively specified with a different display manner.

7. An information input apparatus according to claim 6, wherein
   the plurality of the information codes corresponding to the each keys are displayed separately in a form of a footprint-like sequence on the screen.

8. An information input apparatus comprising:
   a plurality of switch circuits;
   an array of keys for opening and closing the switch circuits through transmission of forces;

a sensor circuit means for detecting a degree of direct touch or proximity of a finger to all or a part of keys;

a data processing means for judging or predicting a intentional direct touch or proximity of the finger to a specific key by data processing of a value produced by the sensor circuit means or a change with time of the value, and thus obtaining information codes corresponding to the key;

a first display means for displaying the information codes obtained by the data processing means; and

a second display means for displaying, in a manner different from that of the first display means, when the switch circuit is closed by pressing the specific key , a corresponding specific information code ; and

9. An information input apparatus according to claim 8, wherein

when a plurality of the keys are made corresponding to the degree of the proximity, the degree of the proximity is indicated by designating the corresponding information codes to a physical positions of the keys and specific color or shape.

10. An information input apparatus according to claim 1, further comprising

switching circuits for producing a demand to perform a given data processing action,

process demand key for opening and closing the switching circuits through transmission of forces, and

a third display means for displaying a symbol or dialogue implying a type of the data processing action in response to a physical pattern of the keys, in which

when the process demand key is pressed ,

when the direct touch or proximity of the finger to the keys is detected, its corresponding symbol or dialogue implying a type of the data processing action is displayed by the third display means and when the keys are pressed, the corresponding data processing action can be performed.

11. An information input apparatus according to claim 10, further comprising

a fourth display means arranged to display a text explaining the demand while the symbol or dialogue implying the type of the data processing action being displayed by the third display means when the process demand key has been pressed and the direct touch or proximity of the finger to the keys has been detected.

12. An information input apparatus according to claim 1, wherein

each of the keys has a plurality of the sensors for detecting direct touch or proximity of a finger to the keys so that the direct touch or proximity of the finger to the keys can be expressed in a form of a detailed coordinate data.

13. An information input apparatus comprising:

a plurality of switch circuits;

an array of keys for opening and closing the switch circuits through transmission of forces;

a plurality of sensors for detecting direct touch or proximity of a finger to all or a part of keys;

a signal processing means for receiving and processing data outputs from the sensors and switch circuits;

a first display means for displaying in a certain form such as a bit map , the direct touch or proximity to the keys detected by the sensors in response to physical pattern of the sensors;

a detailed data command switch for commanding display of a detailed data; and

a detailed data display means responsive to the detailed data command switch for displaying in a more detailed form the keys to which the finger is in direct touch or proximity as detected by the sensors ,in response physical pattern of the sensors,

in which when the specific key is pressed and its switch circuit is closed, corresponding input information codes are entered.

14. An information input apparatus comprising:

a housing of a hand size having a palm-rest on a near side thereof;

a plurality of switch circuits and an array of peripheral keys for opening and closing the switch circuits through transmission of forces, those being mounted on a peripheral edge of the housing upwardly of the palm-rest;

an array of central keys mounted in a recess of the housing surrounded by the peripheral keys and the palm-rest;

a plurality of thumb proximity sensors mounted on a lower part of the housing for detecting direct touch or proximity of an object;

a plurality of proximity sensors for detecting direct touch or proximity of an object to the central keys;

a movement detecting means for detecting a movement of the housing;

an input data processing means for receiving and processing data outputs from the switch circuits, thumb proximity sensors, and movement detecting means;

a display means for displaying the data outputs; and

a communicating means for communicating with other apparatuses than the housing.

15. An information input apparatus according to claim 14, wherein

a set of thumb proximity sensors are further provided on an openable tab mounted on a side of the housing for detecting direct touch or proximity of an object.

16. An information input apparatus comprising:

a plurality of switch circuits;

an array of keys for opening and closing the switch circuits through transmission of forces;

a plurality of recesses provided in a peripheral edge of a housing for insertion of a finger;

a plurality of finger proximity sensors mounted in the recesses respectively for detecting direct touch or proximity of an object;

a plurality of thumb proximity sensors mounted on a peripheral edge of the housing for detecting direct touch or proximity of an object; and

a data processing means for receiving and processing data outputs from the finger proximity sensors, thumb proximity sensors, and switch circuits,

in which information codes data pattern assigned in relation to the switch circuits can be changed by a combination of the insertion or proximity of the object to one of the recesses and the insertion or proximity of the object to the thumb proximity sensor.

17. An information input apparatus comprising:

a housing of a hand size;

an array of keys;

a plurality of recesses provided about the keys at a distance accessible with a finger;

a plurality of position sensors for detecting the position of a finger across the keys;

a plurality of proximity sensors mounted in the recesses respectively;

a plurality of thumb proximity sensors mounted on the housing for detecting direct touch or proximity of an object; and

a data processing means for receiving and processing data outputs from the position sensors, proximity sensors, and thumb proximity sensors,

in which a visual pattern is determined by a combination of the insertion or proximity of the object to the recess , the insertion or proximity of the object to the thumb proximity sensor, and the position sensors.

18. An information input apparatus according to claim 14, wherein

a surface level of the keys mounted in the recess is lowered towards the palm-rest and raised towards the thumb proximity sensors.

19. An information input apparatus comprising:

a housing of a hand size;

an array of keys corresponding to information codes;

a plurality of position sensors for detecting the position of an object across the keys;

a movement detecting means for detecting a movement of the housing;

an input data processing means for receiving and processing data outputs from the position sensors and movement detecting means;

a display means : and

wherein the display means displays on its screen a coordinate pattern according to the keys in response to a data output from the input data processing means, points out a position in the coordinate pattern in response to a data output of the position sensor, and allows the coordinate pattern with its pointed position to be moved in response to a movement output of the movement detecting means.

20. An information input apparatus comprising:

a correct command switch for instructing a correcting action;

a plurality of switch circuits;

an array of keys for opening and closing the switch circuits through transmission of forces;

a plurality of proximity sensors for detecting direct touch or proximity of an object to the keys;

a first controlling means responsive to a command output of the correct command switch ,for displaying on a display screen a word or a partial character string of a word approximate to an inputted word or a partial character string of a word as candidates through citation with a built-in dictionary in response to the keys ; and

a second controlling means responsive to informations from the proximity sensors for identifying a candidate which corresponds to the keys determined by the direct touch or proximity of the object among the candidates on the screen ,

in which when the keys are pressed, their corresponding word or a partial character string a word is entered as a correct word or a partial character string of a word.

21. An information input apparatus according to claim 20, further comprising

a plurality of thumb proximity sensors for detecting direct touch or proximity of a thumb , wherein

while specifying one word or a partial character string among the displayed candidates by direct touch or proximity of the finger to the corresponding keys , a part of the word or a partial character string of the specified candidate is selected in color inverse manner and so on by sliding direct touch or proximity of the thumb to thumb proximity sensors , and when a desired part of the word or a partial character string is selected , an only desired character string is entered by pressing corresponding keys.

22. An information input apparatus comprising:

a plurality of switch circuits:

an array of keys for opening and closing the switch circuits through transmission of forces;

a plurality of finger proximity sensors for detecting direct touch or proximity of an object to the keys;

a first controlling means for predicting a candidate of character string which is to be next entered , by using a dictionary or grammatical rules from inputted characters and displaying them in response to a physical pattern of the keys;

a selection mode selector switch for shifting to a mode for selecting a candidate : and

a second controlling means responsive to outputs of the finger proximity sensors for specifying the plural displayed candidates by the switching of the selection mode selector switch ,

in which when the keys are pressed the candidate corresponding to the keys is entered .

23. An information input apparatus according to claim 22, further comprising

a plurality of thumb proximity sensors for detecting direct touch or proximity of a thumb , wherein

while specifying one word or a partial character string among the displayed candidates by direct touch or proximity of the finger to the corresponding keys , a part of the word or a partial character string of the specified candidate is selected in color inverse manner and so on by sliding direct touch or proximity of the thumb to thumb proximity sensors , and when a desired part of the word or a partial character string is selected , an only desired character string is entered by pressing corresponding keys.

24. An information input apparatus comprising:

a plurality of switch circuits:

an array of keys for opening and closing the switch circuits through transmission of forces;

a plurality of finger sensors for detecting direct touch or proximity of an object to all or a part of the keys;

a plurality of thumb sensors mounted separately of the finger sensors , for detecting direct touch or proximity of a thumb;

a signal processing means for receiving and processing data outputs of the finger sensors, thumb sensors, and switch circuits;

a display means (A) for displaying a plurality of information codes assigned to the keys;

a display means (B) for specifying selectively the information codes in response to an output of the finger sensor; and

a display means (C) for further specifying selectively the the information codes in response to an output of the thumb sensor.

25. An information input apparatus comprising:

a plurality of switch circuits:

an array of keys for opening and closing the switch circuits through transmission of forces;

a plurality of thumb proximity sensors for detecting direct touch or proximity of an object; and

a signal processing means for receiving and processing data outputs of the thumb proximity sensors and switch circuits, in which

specifying one of the thumb proximity sensors by a detection of direct touch or proximity action of the thumb and specifying one of the keys by pressing of other finger or fingers than the thumb are executed ,

a plurality of information codes are made corresponding to combinations of both the specifyings and entry is executed , and

the thumb proximity sensors are provided at an upper surface of a housing.

26. An information input apparatus comprising:

a plurality of switch circuits:

an array of keys for opening and closing the switch circuits through transmission of forces;

a plurality of thumb proximity sensors for detecting direct touch or proximity of an object; and

a signal processing means for receiving and processing data outputs of the thumb proximity sensors and switch circuits, in which

specifying one of the thumb proximity sensors by a detection of direct touch or proximity action of the thumb and specifying one of the keys by pressing of other finger or fingers than the thumb are executed ,

a plurality of information codes are made corresponding to combinations of both the specifyings and entry is executed , and

the thumb proximity sensors are provided on a switch plate set on an upper surface of a housing.

27. An information input apparatus comprising:

a plurality of switch circuits:

an array of keys for opening and closing the switch circuits through transmission of forces;

a plurality of thumb proximity sensors for detecting direct touch or proximity of an object; and

a signal processing means for receiving and processing data outputs of the thumb proximity sensors and switch circuits, in which

specifying one of the thumb proximity sensors by a detection of direct touch or proximity action of the thumb and specifying one of the keys by pressing of other finger or fingers than the thumb are executed ,

a plurality of information codes are made corresponding to combinations of both the specifyings and entry is executed , and

the each thumb proximity sensors for detecting a position of the thumb comprises a plurality of small sensors , the small sensors aligned lengthwisely of the thumb.

28. An information input apparatus according to any of claims 2 to 4, 6, 14 to 18, 21, and 23 to 27, wherein

a number of the thumb proximity sensors is not equal to a number of kinds of information specifying given with a position of the thumb.

29. An information input apparatus according to any of claims 2 to 4, 6, 14 to 18, 21, and 23 to 27, wherein

some of the thumb proximity sensors are replaced with a plurality of little finger proximity sensors for detecting direct touch or proximity of a little finger.

30. A cover for covering a main housing, characterized that as the cover is inwardly foldable at a center, its half separated from the other half by folding has an enlarging reflector mirror mounted on an inner side thereof and the other half has a display device mounted pivotably on the inner side thereof so that when the cover is opened , a folding part are folded , and the display device is opened , and thereby an image on the display device can clearly be viewed through the enlarging reflector mirror and when the cover is closed, the holding part is stretched and the display is stored inside the cover.

31. A cover according to claim 30, wherein

the cover is pivotably mounted to the main housing for opening and closing so that the enlarging reflector mirror is directly viewed from the near side when the cover is opened.

32. A cover according to claim 30 or 31, wherein

the cover is detachably mounted to the main housing and it can be detachably attached to a head band.

33. A cover according to claim 32, wherein

while the cover being attached to the head band, its half accompanied with the display apparatus is joined to a holder of the head band and the other half with the enlarging reflector mirror is folded as hangs down.

34. A cover according to any of claims 30 to 33, wherein

the main housing is a data entry apparatus defined in any one of claims 1 to 29.

35. An information input apparatus comprising:

proximity sensors for detecting direct touch or proximity of an object and producing a positional coordinate data of the object;

a tablet to which the proximity sensors are mounted respectively;

a touch degree judging means for determining that the touch of the object to the proximity sensors is greater than a predetermined degree; and

a touch indicating means for indicating in a physical form a fact that the touch of the object to the proximity sensors is greater than the predetermined degree as determined by the touch degree judging means, in which

when the touch degree of the object to the proximity sensors is not greater than the predetermined degree, a center position of the object is given as a coordinate data and when the touch degree is greater than the predetermined degree, information is issued as a selection of the positional coordinate .

36. An information input apparatus comprising:

proximity sensors for detecting direct touch or proximity of an object and producing a positional coordinate data of the object;

a tablet to which the proximity sensors are mounted respectively;

a touch degree judging means for determining that the touch of the object to the proximity sensors is greater than a predetermined degree;

a touch indicating means for indicating in a physical form a fact that the touch of the object to the proximity sensors is greater than the predetermined degree as determined by the touch degree judging means; and

a data switching means for selecting whether a positional coordinate data of the object is directly issued or is issued with correspondence to key positions which are beforehand allocated to the tablet, in which

when it is issued with correspondence to the key positions ,

only the corresponding key code position is issued when the touch degree of the object is not greater than the predetermined degree and

a selected information of the key code is issued when the touch degree is greater than the predetermined degree, and

when it is issued as the positional coordinate data itself ,

a center of the position of the object is issued when the touch degree of the object is not greater than the predetermined degree and

an information is issued as a selection of positional coordinate when the touch degree is greater than the predetermined degree.

37. An information input apparatus comprising:

a housing arranged of a hand-held type or for supporting a hand;

proximity sensors for detecting direct touch or proximity of an object and producing a positional coordinate data of the object;

a tablet on which the proximity sensors are mounted;

thumb proximity sensors mounted on a side of the housing for detecting direct touch or proximity of and horizontal position of the object;

a touch degree judging means for determining that the touch of the object to the proximity sensors is greater than a predetermined degree;

a touch indicating means for indicating in a physical form a fact that the touch of the object to the proximity sensors is greater than the predetermined degree as determined by the touch degree judging means;

a data switching means for selecting whether a positional coordinate data of the object is directly issued or is issued with correspondence to key positions which are beforehand determined by a combination of position data of the other four fingers than the thumb and the horizontal position of the thumb determined by the thumb proximity sensors, in which

when it is issued with correspondence to the key positions ,

only the corresponding key code position is issued when the touch degree of the four fingers to the tablet is not greater than the predetermined degree and

a selected information of the key code is issued when the touch degree is greater than the predetermined degree, and

when it is issued as the positional coordinate data itself ,

a center of the position of the object is issued when the touch degree of the object is not greater than the predetermined degree and

an information is issued as a selection of positional coordinate when the touch degree is greater than the predetermined degree.

38. An information input apparatus according to claim 35, 36, or 37, wherein

the touch indicating means is provided with resilient members mounted to the tablet for producing a simulated click action upon being pressed by a force of more than a predetermined degree so that when the degree of the direct touch of the object exceeds the predetermined degree, it can physically be expressed, and

the touch degree judging means is arranged to detect the fact that the touch of the object is greater than the predetermined degree by measuring a sensor signal change according to the degree of the direct touch of the object or a secondary sensor signal change derived from the direct touch of the object , triggered by the real touch action.

39. An information input apparatus according to claim 38, wherein

a first resilient piece is provided in response to predetermined positions of the key on the tablet,

a second resilient piece is provided at a predetermined boundary part of each key ,

a lock mechanism is linked to the second resilient piece for locking a face of the tablet, and

the lock mechanism locks the tablet when the positional coordinate data of the object is delivered in response to key position predetermined for the tablet and

the lock mechanism does not lock when the positional coordinate data itself is delivered .

**40.** An information input apparatus according to claim 37, wherein

the thumb proximity sensors is provided with a moving mechanism so that they can be moved forward and backward along a side of the housing and the distance of movement is adjustable with relation to a length of the thumb.

**41.** An information input apparatus according to claim 40, wherein

the moving mechanism is arranged detachable and can thus be attached to either a left or a right side of the housing.

**42.** An information input apparatus according to claim 37, wherein

the thumb proximity sensors are optical sensors, each comprising a light emitter region and a light receiver region and having a focusing lens for focusing light.

**43.** An information input apparatus according to claim 37, wherein

the thumb proximity sensor has at least two different types of hysteresis characteristic which are selectable with a selector means so that

when one of the two hysteresis types is selected, the distance between the thumb and a thumb proximity sensor when the thumb proximity sensor turns firstly OFF from ON state by an approaching thumb , is smaller than the distance between the thumb and a thumb proximity sensor when the thumb proximity sensor turns firstly ON from OFF state by an leaving thumb , and

when the other hysteresis is selected, the characteristic is reversed.

**44.** An information input apparatus according to claim 37, wherein

when the object moves towards a thumb proximity sensor,

a horizontal direction selection position which is given when a proximity degree exceeding the predetermined degree is detected at the horizontal direction selection position , is delivered, and

when the object departs from the thumb proximity sensor,

a horizontal direction selection position which is given when the degree becomes lower than a predetermined degree , is maintained.

**45.** An information input apparatus according to claim 37, wherein

when the object moves towards a thumb proximity sensor, a forward and backward direction selection is measured together with the horizontal direction selection .

**46.** An information input apparatus comprising:

a tablet having i-directional electrodes and j-directional electrodes which are insulated to each other;

a conductive object coordinate acquisition means for detecting direct touch or proximity of an object to the i-directional or j-directional electrode and producing a coordinate data of the object on the tablet through scanning; and

a coordinate conversion data output means for converting the coordinate data produced by the coordinate acquisition means to an orthogonal coordinate data in another coordinate determined by X and Y directions on the tablet and delivering it.

**47.** An information input apparatus comprising:

a thin film with flexibility;

a perforated plate bonded to a lower surface of the thin film;

key tops movably fitted into apertures of the perforated plate respectively;

a lock/resiliency selector drive mechanism for locking the key tops in their respective apertures ,thereby closing the apertures to flatness or for lifting up the key tops in the apertures to raise the thin film so that the key tops can be pressed in through a resiliency of the thin film; and

an object coordinate acquisition means for detecting direct touch or proximity of an object , provided to the thin film and producing a coordinate data of the object on the thin film by scanning.

**48.** An information input apparatus comprising:

a housing provided with a drive mechanism which can move upward and downward or with free rotating motion;

a set of a light receiver, a light emitter, and an optical system mounted to the drive mechanism;

a drive system position detecting means for detecting a position of the drive mechanism;

a communications circuit means for communicating

by detecting a predetermined signal system from outputs of the light receiver and

by driving the light emitter with inputted any informations under a predetermined signal system ; and

a direction controlling means for controlling the drive mechanism so that an output of the light receiver becomes optimum corresponding to irradiation of light from an external light source actuated by a predetermined signal system and simultaneously, making a path of communications from the light emitter to an external light receiver, in which

after the optical system in the housing is faced towards the external light source by an operator, a desired data is issued from the communications circuit means while a particular data about a direction of the housing relative to the external light source detected by the drive system position detecting means is transmitted as a pointing data to the external light source.

49. An information input apparatus according to claim 48, further comprising

an installation state detecting means for examining whether or not the housing is placed on a base and

a means for inverting a positive or negative sign of a quantity of a upward or downward movement .

50. An information input apparatus according to claim 48, wherein

with the optical system facing the external light source, sorts of information attributed to equipments linked to external optical receiving/transmitting device or to the housing can be communicated to each other to carry out initial communications through optical links.

51. An information input apparatus according to claim 48, wherein

the drive mechanism movable vertically or rotatable in all directions has another optical system for measuring a distance from the external light source, thus

allowing data of the distance between the housing and the external light source to be transmitted along with directional data of the housing.

52. A coordinate data input apparatus comprising:

stripes of resistors mounted on a tablet;

a current applying means for applying to the striped resistors a current including alternate current components;

an insulator layer for insulating the striped resistors; and

a current measuring means for measuring a current running across the striped resistors, in which

a coordinate data along a major axis of the striped resistors is given by measuring with the current measuring means a change in the current caused by that the alternate current components of the applied current by-passes a part of the striped resistor and flows through an earth capacitance of an object which moves towards the insulator layer, and

a coordinate data along a minor axis of the striped resistors is given by measuring a change in the current applied to a specific one of the striped resistors or a difference of the current between two adjacent striped resistors.

53. A coordinate data input apparatus according to claim 52, wherein

the striped resistors are grouped into M, each comprising N of near striped resistors,

the current applying means is arranged to apply the current including alternate components to the entire or part of N of the striped resistors in any of M at substantially the same time, and

the current measuring means is disposed on a downstream side of the striped resistors, while the current flowing from upstream to downstream, for measuring a current flown across each of the N striped resistors of each group.

54. A coordinate data input apparatus according to claim 52, wherein

the striped resistors are grouped into M, each comprising N of the near striped resistors,

the current applying means is arranged to apply the current including alternate components to the entire or part of N of the striped resistors in any of M at substantially the same time, and

the current measuring means is disposed on a downstream side of the striped resistors, while the current flowing from upstream to downstream, for measuring a difference between currents flown across neighboring striped resistors in each group .

**55.** A coordinate data input apparatus according to claim 53, wherein

the current measuring means has a switching circuit for selecting a current flown across a desired one of the N striped resistors and a diode for preventing the current from returning to N-1 of the other striped resistors which are not selected by the switching circuit.

**56.** An information input apparatus comprising:

a coordinate position sensor having a degree of resolution for detecting one finger in a direction parallel to the finger length and another degree of resolution for identifying fingers in a direction at a right angle to the finger length so that it is utilized to enter directly a coordinate data of the position of the finger or a data assigned to a region corresponding to the coordinate data in a sensing area of the coordinate position sensor.

**57.** An information input apparatus according to claim 56, wherein

the position of a desired one of the fingers is identified by a distance in at least one direction on a plane of tablet upon which the finger touch.

**58.** An information input apparatus according to claim 56, wherein

a threshold is used to determine whether the direct touch to the tablet is made with a pen or a finger by examining a ratio of the distances in at least one direction on a touch plane of a tablet.

**59.** An information input apparatus according to claim 56, wherein

the coordinate position sensor has proximity electrodes for detecting a pressure given on the sensor.

**60.** An information input apparatus according to claim 56 or 57, wherein

the coordinate position sensor has a degree of resolution which is higher in the direction at a right angle to the finger length than a size of a touch surface of the finger with respect to at least a widthwise direction of the touch surface of the finger and is provide with a means for predicting positions of the fingers extending in the right angle direction by examining the relation between the touch width of the finger and the detected finger position in the direction parallel to the finger length.

**61.** An information input apparatus comprising:

a coordinate data input tablet having a recess provided in a center thereof for entering a coordinate data;

a pressure sensor for detecting at least two directional pressures; and

a means for transmitting the pressure of an object against an inner edge of the coordinate data input tablet to the pressure sensor, in which

a position pointing in a certain area on a screen is indicated by a coordinate data of the coordinate data input tablet and a movement of the certain area on the screen is carried out using a coordinate data on the screen determined by the pressure.

**62.** An information input apparatus comprising:

a coordinate data input tablet for entering a coordinate data; and

a pressure sensor mounted around the coordinate data input tablet for detecting a movement of the coordinate data input tablet by measuring at least two directional pressures, in which

a position pointing in a certain area on a screen is indicated by a coordinate data on the coordinate data input tablet and a movement of the certain area on the screen is carried out using a coordinate data on the screen determined by the pressure.

**63.** An information input apparatus according to claim 61, wherein

the pressure of the object against the inner edge of the coordinate data input tablet is detected as divided into two, horizontal and vertical, components by using a curvature or friction of the inner edge of the coordinate data input tablet.

**64.** An information input apparatus according to any one of claims 1, 2, 5, 6, 13, 14, 19, 20, 22, 24, 25, 26, and 27, further comprising

a coordinate position sensor having a degree of resolution for detecting one finger in a direction parallel to the finger length and another degree of resolution for identifying fingers in a direction at a right angle to the finger length so that it is utilized to enter directly a coordinate data of the position of the finger or to enter a data assigned to a region on the coordinate position sensor, and thus

allowing at least some of the switch circuits and the keys for opening and closing by transmission of forces to the switch circuits ,to be replaced with an input action of the data of the region of the coordinate position sensor.

# F i g . 1

1     keytop

2     key switch

3     electrode

# F i g . 2

```
        ┌─────────────────────┐
        │  Interrupt input    │
        └─────────────────────┘
                   │
              ╱────────────╲
             ╱  Keyboard    ╲      N o
            ╱  touched or    ╲─────────────┐
            ╲  approached?   ╱              │
             ╲──────────────╱               │
                   │ Y e s                  │
        ┌─────────────────────┐             │
        │  Display step 1     │             │
        └─────────────────────┘             │
                   │                        │
              ╱────────────╲                │
             ╱  Keyboard    ╲      N o       │
            ╱  switch on?    ╲──────────┐    │
            ╲                ╱          │    │
             ╲──────────────╱           │    │
                   │ Y e s              │    │
        ┌─────────────────────┐         │    │
        │  Display step 2     │         │    │
        └─────────────────────┘         │    │
                   │                    │    │
        ┌─────────────────────┐         │    │
        │  Kana-kanji         │         │    │
        │  conversion         │         │    │
        └─────────────────────┘         │    │
                   │←───────────────────┘    │
                   │←────────────────────────┘
                   ▽
```

# F i g . 3

KEIZAI  .JSW     〈Word processor〉

この よ う に し て 、 日 本 凹 い

Character inputting                    確定連ガ漢

# Ｆｉｇ．４

| | が～ご¥ G/ : | さ～ぞ7 Z/ ; | だ～ど8 D/& | ば～ぽ9 B/V |
|---|---|---|---|---|
| | か～こ= K/Q | さ～そ4 S/J | た～と5 T/C | な～の6 N/X |
| | あ～お％ A/L | わ～を1 W/I | ら～ろ2 R/U | や～よ3 Y/E |
| | 「({<[@ ｣)}>]0 (/{ | 。・～!? ./～ | 、－＿" | |

11    photosensor

13    thumb insertion hole

# Fig. 5

(a)

| | あ〜お<br>PRS<br>Home  7 | か〜こ<br>TUV<br>⇧  8 | さ〜そ<br>WXY<br>PgUp  9 | BS<br>+ |
|---|---|---|---|---|
| HLP | = | / | Undo* | - | ESC |

| TAB | あ〜お<br>PRS<br>Home  7 | か〜こ<br>TUV<br>⇧  8 | さ〜そ<br>WXY<br>PgUp  9 | BS<br>+ |
|---|---|---|---|---|
| 変換 | た〜と<br>GHI<br>⇦  4 | な〜の<br>JKL<br>5 | は〜ほ<br>MNO<br>⇨  6 | RET |
| | ま〜も<br>End  1 | や〜よ<br>ABC<br>⇩  2 | ら〜ろ<br>DEF<br>PgDn  3 | |
| SPC | わ〜を<br>QZ<br>INS  O | 。<br>〜!?　，<br>DEL  . | 「（｛＜［<br>」）｝＞］<br>#  | |

〜23

A

13

11

23    housing

(b)

13

11

11

# Fig. 6

| | | | |
|---|---|---|---|
| ESC | TAB | SPC | RET | BS |

HLP

| GRP | が～ご¥<br>G/: | さ～そ7<br>Z/; | だ～ど8<br>D/& | ば～ぼ9<br>B/V |
|---|---|---|---|---|
| NUM | か～こ=<br>K/Q | さ～そ4<br>S/J | た～と5<br>T/C | な～の6<br>N/X |
| CTL | あ～お%<br>A/L | わ～を1<br>W/I | ら～ろ2<br>R/U | や～よ3<br>Y/E |
| SFT | 「({<[@」}〉]0<br>(/{ | 」)/} | 。・ ～!?,<br>,/_ !/? | 、-_‴<br>./～ |

ば～ぼ ー
P/|
は～ほ +
H/F
ま～も *
M/O
∧ #　／
／∧

ALT　変換

11　13　1

11　14

10

12

# Fig. 7

# Fig. 8

17'

I was □

| prs7 | tu▮8 | wxy9 |
| gh▮4 | jk15 | mno6 |
| ¥"⁻1 | abc2 | de▮3 |
| qz?0 | :;,. | ({<#[ |

10

16'

# F i g. 9

Fig. 10

Interrupt input

Keyboard approached by finger ?
(n fingers) → n = 0

n > 0

Decision on key with high proximity degree

Decision of chronological variation of proximity degree

Weighting, decision on intended key

Display step 1

Keyboard switch on? → No

Yes

Display step 2

# F i g . 1 1

Interrupt input

Keyboard approached by finger ? (n fingers) — n = 0

n > 0

Decision on key with high proximity degree

Decision of chronological variation of proximity degree

Weighting, decision on intended key

Proximity layout key information retrieved

Display step 1

Keyboard switch on? — No

Yes

Display step 2

Fig. 12

(a)

I was ▮
A S
Z X

10

(b)

I was ▮
| S

10

Fig. 13

# Fig. 14

```
KEIZAI  .JSW          <Word processor>
```

file | print | move | copy

delete

end

Character inputting                              確定連カナ漢

# Fig. 15

KEIZAI .JSW          〈Word processor〉

| file | print | move | copy |
|------|-------|------|------|
| delete | | | |
| | | | end |

Character inputting                    確定連カナ漢
Move data of pointed area

Fig. 16

# Fig. 17

Fig. 18

(a)

I was **r**

10

(b)

I was ■

| prs7 | tuv8 | wxy9 |
|------|------|------|
| ghi4 | jkl5 | mno6 |
| ¥"⁻1 | abc2 | def3 |
| qz?0 | :;,. | ({<#[ |

10

Fig. 19

2 5     palm rest

2 7     switch

Fig. 20

| あ〜お<br>PRS<br>Home 7 | か〜こ<br>TUV<br>⇧ 8 | さ〜そ<br>WXY<br>PgUp 9 |
|---|---|---|
| た〜と<br>GHI<br>⇦ 4 | な〜の<br>JKL<br>5 | は〜ほ<br>MNO<br>⇨ 6 |
| ま〜も<br>End 1 | や〜よ<br>ABC<br>⇩ 2 | ら〜ろ<br>DEF<br>PgDn 3 |
| わ〜を<br>QZ<br>INS 0 | 。〜!?、<br>DEL . | 「[{<[<br>」]}>]<br># |

28    accommodable tongue

49

# Fig. 21

| | あ～お<br>PRS<br>Home 7 | か～こ<br>TUV<br>⬆ 8 | さ～そ<br>WXY<br>PgUp 9 |
|---|---|---|---|
| | た～と<br>GHI<br>⬅ 4 | な～の<br>JKL<br>5 | は～ほ<br>MNO<br>➡ 6 |
| | ま～も<br>End 1 | や～よ<br>ABC<br>⬇ 2 | ら～ろ<br>DEF<br>PgDn 3 |
| | わ～を<br>QZ<br>INS 0 | 。～!?、<br>DEL 。 | 「｛｛＜[<br>」｝｝＞]<br># |

HLP  =  /  Undo*  -  ESC

TAB

変換

SPC

BS +

RET

# Fig. 22

29　　hole

30　　hole

Fig. 23

EP 0 689 122 A1

# Fig. 24

Fig. 25

```
        ┌─────────────────────┐
        │   Interrupt input   │
        └─────────────────────┘
                   │
                  ╱ ╲
                 ╱   ╲        N o
                ╱ Finger ╲────────────────────┐
                ╲ placed  ╱                    │
                 ╲on key? ╱                    │
                  ╲     ╱                      │
                   ╲   ╱                       │
                    Y e s                      │
        ┌─────────────────────────┐  ┌─────────────────────┐
        │Measurement of absolute  │  │                     │
        │position                 │  │                     │
        │Image processing →       │  │ A(x,y)→ ±0, ±0       │
        │  Determination of finger│  │                     │
        │  position               │  │                     │
        │A(x,y) →  ± 100,  ± 100   │  │                     │
        └─────────────────────────┘  └─────────────────────┘
                   │◄──────────────────────────┘
                   │
        ┌─────────────────────────┐
        │Relative position data   │
        │retrieved (acceleration  │
        │integration calculated)  │
        └─────────────────────────┘
                   │
        ┌─────────────────────────┐
        │  Absolute position data │
        │           +             │
        │  relative position data │
        └─────────────────────────┘
                   │
        ┌─────────────────────────┐
        │    Display step         │
        └─────────────────────────┘
                   │
                   ▽
```

Fig. 26

| | あ～お<br>PRS<br>Home 7 | か～こ<br>TUV<br>⇧ 8 | さ～そ<br>WXY<br>PgUp 9 | |
| --- | --- | --- | --- | --- |
| | た～と<br>GHI<br>⇦ 4 | な～の<br>JKL<br>5 | は～ほ<br>MNO<br>⇨ 6 | |
| | ま～も<br>ABC<br>End 1 | や～よ<br>ABC<br>⇩ 2 | ら～ろ<br>DEF<br>PgDn 3 | |
| | わ～を<br>QZ<br>INS 0 | . ～!? ,<br>DEL . | 「({〈[<br>」)}〉]<br># | |

HLP = / Undo* - ESC

TAB

変換

SPC

BS +

RET

## F i g .  2 7

```
                    ┌──────────────────────┐
                    │   Interrupt input    │
                    └──────────────────────┘
                               │
        ┌──────────────────────────────────────────┐
        │ Word analogous to struck word            │
        │ and grammar and collocation              │
        │ dictionaries are searched                │
        │ →  Determination of word                 │
        └──────────────────────────────────────────┘
                               │
           ┌──────────────────────────────────┐
           │   Twelve candidate words         │
           │   for correction proposed        │
           └──────────────────────────────────┘
                               │
                               ▼
   yes        ╱────────────────────────────────╲
 ◄──────────  ╲         Correction             ╱
              ╲     switch restruck?           ╱
               ╲──────────────────────────────╱
                          │ no
              ╱────────────────────────────╲      no
              ╲      Candidate word for     ╱ ──────────►
              ╲     correction selected?   ╱
               ╲──────────────────────────╱
                          │ yes
           ┌──────────────────────────────────┐
           │   Word corresponding to          │
           │   Keytop highlighted             │
           └──────────────────────────────────┘
                               │
               ╱──────────────────────╲     yes
               ╲    Thumb sensed?     ╱ ──────────┐
                ╲────────────────────╱            │
                          │ no                    ▼
                          │          ┌────────────────────────────┐
                          │          │ Corrected input character  │
                          ◄──────────│ →  Thumb position          │
                          │          └────────────────────────────┘
     no        ╱────────────────────╲
 ◄──────────  ╲    Keytop struck?   ╱
               ╲────────────────────╱
                          │ yes
           ┌──────────────────────────────────────┐
           │   Replacement with corrected word    │
           └──────────────────────────────────────┘
                               │
           ┌──────────────────────────────────────┐
           │            Display step              │
           └──────────────────────────────────────┘
                               │
                               ▼
```

# Fig. 28

| | | |
|---|---|---|
| あ〜お<br>PRS<br>Home　7 | か〜こ<br>TUV<br>⇧　　8 | さ〜そ<br>WXY<br>PgUp　9 |
| た〜と<br>GHI<br>⇦　　4 | な〜の<br>JKL<br>　　　5 | は〜ほ<br>MNO<br>⇨　　6 |
| ま〜も<br>　　<br>End　　1 | や〜よ<br>ABC<br>⇩　　2 | ら〜ろ<br>DEF<br>PgDn　3 |
| わ〜を<br>QZ<br>INS　　0 | 。〜!?、<br>　<br>DEL　　. | 「({<[<br>」)}>」<br>　　　# |

HLP　＝　／　Undo*　−　ESC

TAB　変換　SPC

BS +　RET

36　switch

37　switch

# Fig. 29

```
┌─────────────────────────┐
│     Interrupt input     │
└─────────────────────────┘
             │
┌─────────────────────────────────────────┐
│ Grammar and collocation dictionary       │
│ including retrieved characters searched   │
│  → Determination of word                  │
└─────────────────────────────────────────┘
             │
┌─────────────────────────────────────────────┐
│ Word dictionary search after word determination │
└─────────────────────────────────────────────┘
             │
┌─────────────────────────────────────┐
│   Twelve candidate words proposed     │
└─────────────────────────────────────┘
             │
    ◄────────┤◄──────────────────────┐
    yes      ◇                        │
    ┌──────< Character input? >       │
    │         ◇                       │
    │         │ no                    │
    │         ◇                       │
    │        < Candidate word selected? >──┐ no
    │         ◇                            │
    │         │ yes                        │
    │  ┌────────────────────┐              │
    │  │ Word corresponding to│             │
    │  │  keytop highlighted │              │
    │  └────────────────────┘              │
    │         │                            │
    │         ◇              yes           │
    │        < Thumb sensed? >──────────┐  │
    │         ◇                         │  │
    │         │ no        ┌─────────────────────────┐
    │         │           │ Partial input character │
    │         │           │  → Thumb position       │
    │         ├──────◄────└─────────────────────────┘
    │  no     ◇
    │  ┌─────< Keytop struck? >
    │  │      ◇
    │  │      │ yes
    │  │  ┌────────────────────────┐
    │  │  │ Corresponding word input│
    │  │  └────────────────────────┘
    │  │           │
    │  │  ┌────────────────┐
    │  │  │  Display step   │
    │  │  └────────────────┘
    │  │           │
    └──┴───────────┤
                   ▽
```

# Fig. 30

I was v ▮

| very  | viciou | votted |
|-------|--------|--------|
| variou | virtuo | vital |
| virgin | vivaci | victor |
| vigoro | volati | verita |

10

Fig. 31

Fig. 32

| PRS 7 Home | TUV 8 ⇧ | WXY 9 PgUp |
| あ〜お ぁ | か〜こ が | さ〜そ ざ |
| GHI 4 ⇦ | JKL 5 | MNO 6 ⇨ |
| た〜と だ | な〜の ば | は〜ほ ば |
| s'_ 1 End | ABC 2 ⇩ | DEF 3 PgDn |
| ま〜も ◁ | や〜よ ゃ | ら〜ろ ゃ |
| QZ ! 0 INS ? | | {{ < @ [ }} > # ] |
| わんっ〜を ▷ | ：；、。・ | 《「 < 「「 |

40 switch

Fig. 33

Fig. 34

# Ｆｉｇ．３５

| ＝<br>あたま<br>あだ。 | ／<br>かなや<br>がばゃ | ＊<br>さはら<br>ざばわ |
|---|---|---|
| PRS 7 Hm<br>いちみ<br>いぢ、 | TUV 8 ⇧<br>きにい<br>ぎびぃ | WXY 9 Hh<br>しひり<br>じぴん |
| GHI 4 ⇦<br>うつむ<br>っづ( | JKL 5<br>くすゅ<br>ぐぶゅ | MNO 6 ⇨<br>すふる<br>ずぶっ |
| ＃'＿ 1 End<br>えてめ<br>えで) ◁ | ABC 2 ⇩<br>けねえ<br>げべぇ | DEF 3 Hh<br>せへれ<br>ぜべー |
| QZ¦ 0 INS<br>おとも<br>ぉど・ ▷ | '/＾＼¨ 四<br>このよ<br>ごぽょ | 《(＜◆〔<br>そほろ<br>ぞほを |

23

43

42

11  11

4 2    little finger
       proximity sensor

**Fig. 36**

|  | Thumb remote | Lower sensor detects thumb | Upper sensor detects thumb |
|---|---|---|---|
| Little finger sensor does not detect | さしすせそ<br>かきくけこ<br>あいうえお | はひふへほ<br>なにぬねの<br>たちつてと | らりるれろ<br>やいゆえよ<br>まみむめも |
| Little finger sensor detects lowest stage or second stage from bottom | ざじずぜぞ<br>がぎぐげご<br>あいうえお | ばびぶべぼ<br>ぱぴぷぺぽ<br>だぢづでど | わんっーを<br>やいゆえよ<br>。、（）． |

Fig. 37

新しいインターフェイスは

らりるれろ
はひふへほ
なさしすせそ
たなかきくけこ
あいうえお

Fig. 38

新しいインターフェイスは過去か

らりるれろ
まやはひふへほ
なにぬねのは
たちつてとこそ
あいうえお

Fig. 39

新しいインターフェイスは過去から

Fig. 40

(a)

(b)

51

50

23

50

52

23

53

52

51

23

50   cover

Fig. 41

Fig. 42

5 5    display unit

5 7    concave magnification mirror

Fig. 43

Fig. 44

50

58

23

Fig. 45

Fig. 46

Fig. 47

50

52a    61a

61

60

60    head band

Fig. 48

Fig. 49

## Fig. 50

101

102

analog selector

103

A/D converter

104

microcomputer

106

105

personal computer

Fig. 51

```
                    ┌─────────────────┐
                    │      START      │
                    └─────────────────┘
                             │
     ┌───────────────────────┤
     │                       ▼
     │          ┌───────────────────────────┐
     │          │    Sensor data input      │─── S1
     │          └───────────────────────────┘
     │                       │
     │                       ▼
     │          ┌───────────────────────────┐
     │          │  Calculate center         │
     │          │  coordinate from          │─── S2
     │          │  sensor potential         │
     │          └───────────────────────────┘
     │                       │         S3
     │                       ▼
     │                    ╱──────────╲
     │                   ╱   Sum of   ╲      NO
     │                  ◁ sensor potential ▷──────────┐
     │                   ╲    > A?     ╱               │
     │                    ╲──────────╱                 │
     │                       │ YES                     │
     │                       ▼                         │
     │          ┌───────────────────────┐              │
     │          │  Driving of speaker   │─── S4        │
     │          └───────────────────────┘              │
     │                       │       S5          S6    │
     │                       ▼                   ▼
     │      ┌───────────────────────┐  ┌───────────────────────┐
     │      │ Selection information │  │ Only center           │
     │      │ and center coordinate │  │ coordinate position   │
     │      │ output and            │  │ output and            │
     │      │ transmitted           │  │ transmitted           │
     │      └───────────────────────┘  └───────────────────────┘
     │                       │                         │
     │                       └───────────┬─────────────┘
     └───────────────────────────────────┘
```

# Ｆｉｇ． ５２

Voltage detection
in a row direction

Prediction by calculation of
finger center gravity

Voltage detection in a column direction

# Fig. 53

101

analog selector — 102

A/D converter — 103

microcomputer — 104

107

108

personal computer — 105

# Fig. 54

```
          ┌──────────────┐
          │    Start      │
          └──────────────┘
                 │
    ┌────────────┤
    │      ┌──────────────────────┐
    │      │ Sensor data input     │──S1
    │      └──────────────────────┘
    │            │
    │      ┌──────────────────────────┐
    │      │ Calculate center coordinate│──S2
    │      │ from sensor potential      │
    │      └──────────────────────────┘
    │            │
    │         S3 ◇
    │      ╱ Tablet  ╲   no
    │     ◇ selection sw on? ◇────────────┐
    │      ╲          ╱                    │
    │           │ yes                ┌──────────────────────────┐
    │                                │ Select maximum thumb sensor│──S8
    │                                └──────────────────────────┘
    │       S4 ◇                          │
    │    ╱ Sum of   ╲  no           S9 ◇
    │   ◇ sensor      ◇───┐       ╱ Sum of    ╲  no
    │    ╲ potential > A? ╱        ◇ sensor      ◇───┐
    │           │ yes    │         ╲ potentials > A? ╱    │
    │      ┌──────────┐  │              │ yes             │
    │      │LED turned on│─S5           ┌──────────┐      │
    │      └──────────┘  │              │LED turned on│─S10 │
    │           │        │              └──────────┘      │
    │   ┌──────────────┐ │                   │            │
    │   │ Selection     │─S6          ┌──────────────────┐│
    │   │ information    │            │ Finger touch key  ││─S11
    │   │ and center     │            │ symbol and selected││
    │   │ coordinate     │            │ key symbol output ││
    │   │ output and     │            │ and transmitted   ││
    │   │ transmitted    │            └──────────────────┘│
    │   └──────────────┘ │                   │            │
    │        │     ┌──────────────────┐   ┌──────────────────┐
    │        │     │ Only center       │  │ Finger touch key  │
    │        │     │ coordinate        │  │ detected, finger  │
    │        │     │ position output   │  │ touch key symbol  │
    │        │     │ and transmitted   │  │ output and        │
    │        │     └──────────────────┘  │ transmitted       │
    │        │          S7               └──────────────────┘
    │        │           │                   │    S12
    └────────┴───────────┴───────────────────┘
```

# Fig. 55

# Fig. 56

| あ た ま か な や さ は ら | い ち み き に い し ひ り | 7<br>4<br>1 | う つ む く ぬ ゆ す ふ る | 8<br>5<br>2 | え て め け ね え せ へ れ | 9<br>6<br>3 | お と も こ の よ そ ほ ろ |
|---|---|---|---|---|---|---|---|

109,110

# F i g . 5 7

101'

111

# Fig. 58

# Fig. 59

| | | | | |
|---|---|---|---|---|
| あたま | 7 いちみ | 8 うつむ | 9 えてめ | おとも |
| かなや | 4 きにい | 5 くぬゆ | 6 けねえ | このよ |
| さはら | 1 しひり | 2 すふる | 3 せへれ | そほろ |

116

109, 110

EP 0 689 122 A1

Fig. 60

```
                                              ┌──────► S8
                                              ▼
                                         ╱ Thumb ╲      no
                                        ╱ approached? ╲────────┐
                                        ╲             ╱         ▼
    ┌─────────────┐                      ╲           ╱      ╱ Maximum ╲   S16
    │    Start    │                  yes  ╲  yes    ╱      ╱ thumb sensor ╲
    └─────┬───────┘                   ◄───────────────────╱ output i > a? ╲
          │                              ▼               ╲               ╱
     S1   ▼                          S9  │                ╲             ╱
    ┌──────────────┐              ┌──────────────┐         │  no   S17
    │Sensor data   │              │Maximum thumb │         ▼
    │   input      │              │sensor output,│    ┌──────────────┐
    └─────┬────────┘              │thumb sensor  │    │Read thumb    │
     S2   ▼                       │  selected    │    │sensor output │
    ┌──────────────┐              └──────┬───────┘    │    held      │
    │Calculate     │              S10    ▼            └──────┬───────┘
    │center        │              ┌──────────────┐          │
    │coordinate    │              │Hold thumb    │◄─────────┘
    │from sensor   │              │sensor output │
    │ potential    │              └──────┬───────┘
    └─────┬────────┘              S11    ▼
     S3   ▼                       ┌──────────────┐
     ╱ Tablet ╲    no            │Select maximum│
    ╱ selection ╲────┐           │ thumb sensor │
    ╲ sw on?    ╱     │           └──────┬───────┘
     ╲         ╱      │           S12    ▼
        │ yes         │           ╱ Sum of ╲    no
     S4 ▼             │          ╱ sensor   ╲────┐
     ╱ Sum of ╲   no  │          ╲ potentials ╱   │
    ╱ sensor   ╲──┐   │           ╲  > A?    ╱    │
    ╲ potential ╱  │  │        S13   │ yes        │
     ╲  > A?   ╱   │  │          ┌──────────┐     │
        │ yes      │  │          │LED turned│     │
    ┌────────┐     │  │          │   on     │     │
    │LED      │ S5 │  │          └────┬─────┘     │
    │turned on│    │  │        S14    ▼           │
    └───┬─────┘    │  │    ┌────────────────┐     │
        ▼          │  │    │Finger touch key│     │
┌────────────────┐ │  │    │symbol and      │     │
│Selection       │ │  │    │selected key    │     │
│information and  │ │  │    │symbol output   │     │
│center coordinate│ │  │    │and transmitted │     │
│output and       │ │  │    └────────┬───────┘     │
│transmitted      │ │  │             │             ▼
└────────────────┘ │  │    ┌──────────────┐ ┌────────────────┐
   S6              │  │    │Only center   │ │Finger touch key│
                   │  │    │coordinate    │ │detected, finger│
                   │  │    │position output│ │touch key symbol│
                   │  │    │and transmitted│ │output and      │
                   │  │    └──────┬───────┘ │transmitted     │
                   │  │    S7     │         └───────┬────────┘
                   │  │           │          S15    │
                   └──┴───────────┴─────────────────┘
```

# Fig. 61

# Fig. 62

117

102'

102'

A/D converter

## Fig. 63

```
              ┌──────────────────┐
              │      START       │
              └──────────────────┘
                       │
        ┌─────────────▶│
        │     ┌──────────────────────┐
        │     │  Sensor data input   │────  S1
        │     └──────────────────────┘
        │              │
        │     ┌──────────────────────┐
        │     │  Calculate center    │
        │     │  coordinate from     │────  S2
        │     │  sensor potential    │
        │     └──────────────────────┘
        │              │
        │     ┌──────────────────────┐
        │     │  rotate   coordinate │────  S3
        │     │  by 45 degree        │
        │     └──────────────────────┘
        │              │        S4
        │           ◇─────────◇
        │          ╱   Sum of    ╲        NO
        │         ◇ sensor potential ◇────────┐
        │          ╲    > A?     ╱            │
        │           ◇─────────◇               │
        │              │ YES      S5          │
        │     ┌──────────────────────┐        │
        │     │  Driving of speaker  │        │
        │     └──────────────────────┘        │
        │              │   S6        S7       │
        │     ┌─────────────────┐ ┌───────────────────┐
        │     │Selection        │ │Only center        │
        │     │information      │ │coordinate position│
        │     │and center       │ │output and         │
        │     │coordinate output│ │transmitted        │
        │     │and transmitted  │ └───────────────────┘
        │     └─────────────────┘        │
        │              │                 │
        └──────────────┴─────────────────┘
```

91

# Fig. 64

## (a)

118

120   119

111

## (b)

120   119

111

Fig. 65

# Fig. 66

# Fig. 67

# Fig. 68

START

S1
External light
signal level input

NO

YES

S2
Cancel low power
consumption mode

S5
low power
consumption mode

S3
Transmit and receive
equipment attribute
information

S4
Communication process

Fig. 69

Fig. 70

# Fig. 71

| | | | | |
|---|---|---|---|---|
| | | | | Enter |
| あたまか | いちみ　7 | うつむ　8 | えてめ　9 | おともこ |
| かなや | きにい　4 | くぬゆ　5 | けねえ　6 | このよ |
| さはら | しひり　1 | すふる　2 | せへれ　3 | そほろ |
| | | | Enter | |

~201

203

202

~204

~203

side view

# F i g . 7 2

SW

on

off

distance

301

SW

on

off

distance

302

Fig. 73

401

402

403

401

(a)

401

402

403

401

(b)

Fig. 74

501

502

503

502

502    501

Fig. 75

VCC

A/D    MPU

172    173

171

(a)

183

screen surface

relative-
positional
operation

182

Coordinate 1:1
correspondence
→ absolute-positional
operation

181

tablet surface

(b)

Fig. 76

601

602

603

# Fig. 77

702

701

703

Fig. 78

```
                    ┌─────────────┐
                    │    Start    │
                    └──────┬──────┘
                           │
                           ▼
      ┌──────────────────────────────────────────┐   S1001
      │ Detect touch position for each resistor  │
      └──────────────────────┬───────────────────┘
                             │
                             ▼
                         S1002
                    ◇ Detected ◇          no
                    resistors continuous? ────────┐
                           │ yes                   │
                           ▼                        │
                         S1003                      │
                    ◇ Difference   ◇                │
                    between adjacent    no          ▼
                    positions not more than ──►  ┌──────────────────────┐  S1006
                    threshold α ?                │ Decide on a touch by  │
                           │ yes                 │ a plurality of areas  │
                           ▼     S1004           └───────────┬──────────┘
      ┌──────────────────────────┐                          │   S1007
      │ Decide a touch in an area│              ┌────────────▼─────────┐
      └──────────┬───────────────┘              │ Calculate each contact│
                 │                               │ area and center position│
                 ▼                               └───────────┬──────────┘
      ┌──────────────────────┐  S1005                        │
      │ Calculate contact area│                              │
      │ and center position   │◄─────────────────────────────┘
      └──────────┬───────────┘
                 ▼
             S1008                              S1009
        ◇ Area more than ◇    no       ┌──────────────────────┐
        threshold β ?      ────────►   │ Decide that the area │
             │ yes                     │ is a pen             │
             ▼     S1010               └───────────┬──────────┘
      ┌──────────────────┐                         │
      │ Decide that the  │            ┌────────────▼────┐
      │ area is a finger │──────────► │      End        │
      └──────────────────┘            └─────────────────┘
```

Fig. 79

803    803

801

802

803

804

F i g . 8 0

```
        ┌─────────────┐
        │    START    │
        └──────┬──────┘
               │
               ▼
    ┌────────────────────┐
    │ Detect contact     │
    │ position at each   │──── S1101
    │ resistor           │
    └──────────┬─────────┘
               │
               ▼                  S1102
          ╱─────────╲                        S1105
        ╱ Contact    ╲                          │
      ╱  position     ╲    Yes   ┌───────────────────┐
     ╱ in an area that ╲────────▶│ Decide on the     │
      ╲ can be touched ╱         │ contact by finger │
        ╲ by finger? ╱           │ or pen            │
          ╲────┬────╱            └─────────┬─────────┘
         S1103 │ No                        │  S1106
               ▼                           ▼
    ┌────────────────────┐      ┌───────────────────┐
    │    Decide on       │      │ Calculate contact │
    │    selection       │      │ area and center   │
    │    operation       │      │ position          │
    └──────────┬─────────┘      └─────────┬─────────┘
               │  S1104                    │
               ▼                           ▼
    ┌────────────────────┐         ╭──────────────╮
    │ Determine the      │         │     END      │
    │ position of        │────────▶│              │
    │ selection          │         ╰──────────────╯
    │ operation based on │
    │ immediately-       │
    │ preceding contact  │
    │ area calculation   │
    └────────────────────┘
```

Fig. 81

Fig. 82

START

Decide each contact
position of
i-2, i-1, i and i+1

Difference
at each position not
more than threshold
α ?

Yes → Decide that a single
finger is in touch

→ Calculate contact
area and center
position

No

Decide that plural
fingers are in touch

Decide on a touch by
single finger regarding
those below threshold
as a group
(i-2~i, for example)

Reconstruct those
displaced from threshold
as another group from
immediately-preceding area
information (i, i+1, for
example)

Calculate each
contact area and
center position

→ END

110

Fig. 83

Fig. 84

Fig. 85

$$I_{ai}$$

$$\frac{E}{R}$$

on          off          $t$

Fig. 86

$$E \quad R_{1i} \quad R_{2i}$$

$$\overrightarrow{I_{ai}} \qquad C$$

Fig. 87

$$I_{ai}$$

$$\frac{E}{R_{1i}}$$

$$\frac{E}{R_{1i}+R_{2i}}$$

$$on \qquad off \qquad t$$

# F i g . 8 8

```
┌──────────────┐
│    Start     │
└──────┬───────┘
       │
┌──────────────────────────────────────────────┐
│ Initialize:  Finger = 0, i = 1, flag = FALSE  │
└──────────────────────┬───────────────────────┘
       │
┌──────────────────────────────────────────────────────┐
│ Apply pulse E to ith resistor and detect $I_{ai} = E/R_{11}$ │
└──────────────────────┬───────────────────────────────┘
```

Finger touched on ith resistor? $I_{ai} >$ specified value? — no

$i=i+1$

yes

Finger touched on (i-1)th resistor?, flag = TRUE? — no

Finger touched on (i-1)th resistor?, flag = TRUE? — no

yes

yes

Finger touches ith resistor: flag = TRUE i represents extreme left of contact surface left = i

i represents extreme right of contact surface: right = i flag = FALSE Number of fingers touching tablet: finger = finger + 1 From $I_{ai}$(left) to $I_{ai}$(right), calculate coordinate of finger contact position and correct finger center position x(finger), Y(finger)

Tablet surface completely scanned?, i ≧ n? — no

yes

Fingers in touch with x(finger) and Y(finger) Transfer finger coordinate position and mechanical switch information to host

Previously-measured finger contact width considerably changed? — no

End

yes

Employ previous measurement

115

# Fig. 89

# Fig. 91

# F i g .  9 0

≒ length p (area constant)

Fig. 92

$$E \quad R_{1ij} \quad R_{2ij}$$

$$C \quad \overrightarrow{I_{bij}}$$

Fig. 93

$$I_{bij}$$

$$\frac{E}{R_{1ij} + R_{2ij}}$$

on    off    $t$

118

# Fig. 94

```
                      ┌──────────────┐
                      │    Start     │
                      └──────┬───────┘
                             │
     ┌───────────────────────┴───────────────────────┐
     │ Initialize:  Finger = 0, i = 1, flag = FALSE   │
     └───────────────────────┬───────────────────────┘
```

Apply pulse E to ith resistor set and detect $I_{ai} = E/R_{11}$

Finger touched on ith resistor set ? $I_{ai}$ > specified value?

no

Finger touched on (i-1)th resistor set ?, flag = TRUE?

no

yes

Finger touched on (i-1)th resistor set ?, flag = TRUE?

no

yes

i=i+1

Finger touches ith resistor:
flag = TRUE
i represents extreme left of contact surface
left = i

Finger touches ith resistor:
right = i flag = FALSE
i represents candidate extreme right of contact surface

Measure distribution in (i-1)th resistor set and transfer to calculation subroutine:
x(finger), Y(finger)

Tablet surface completely scanned?, $i \geqq M$?

no

yes

Fingers in touch with x(finger) and Y(finger) Transfer finger coordinate position and mechanical switch information to host

Previously-measured finger contact width considerably changed?

no

yes

End

Employ previous measurement

# Fig. 95

Subroutine start

Initialize: j=1

Apply pulse E to ith resistor set, change over second analog sw to j and detect $I_{bij}$

Finger in touch with jth resistor? $I_{bij}$ < specified value?

— no →

j =j+1

Finger in touch with (j-1)th resistor?: flag = TRUE ?

Finger in touch with (j-1)th resistor?: flag = TRUE ?

Finger in touch with jth resistor of set i: flag = TRUE j represents extreme left of contact surface left = i ,j

Finger in touch with jth resistor of set i: right = i,j    flag = FALSE i represents extreme right of contact surface, add contact finger: finger = finger + 1 Calculate finger center position from $I_a$(left) to $I_a$(right) and $I_b$ (left) to $I_b$(right), and correct x(finger), Y(finger)

Scanning measurement complete for distribution of jth resistor set?: j ≥ N?

Subroutine end

# Fig. 96

Fig. 97

201

$X_{16}$

$X_{15}$

$X_1$

International application No.

PCT/JP95/00062

**A. CLASSIFICATION OF SUBJECT MATTER**

Int. Cl$^6$ G06F3/02

According to International Patent Classification (IPC) or to both national classification and IPC

**B. FIELDS SEARCHED**

Minimum documentation searched (classification system followed by classification symbols)

Int. Cl$^6$ G06F3/02, G06F3/023

Documentation searched other than minimum documentation to the extent that such documents are included in the fields searched

Jitsuyo Shinan Koho 1975 - 1994
Kokai Jitsuyo Shinan Koho 1975 - 1994

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, A, 5-189110 (Fanuc Ltd.), July 7, 1993 (07. 07. 93)(Family: none) | 1 - 64 |
| A | JP, A, 5-11900 (Osamu Hirai), January 22, 1993 (22. 01. 93)(Family: none) | 1 - 64 |
| A | JP, A, 63-36322 (Laurent Guyot-Sionnest), February 17, 1988 (17. 02. 88) & FR, B1, 2585487 & EP, B1, 213022 & AT, E, 67907 & DE, C0, 3681660 & US, A, 5087910 | 1 - 64 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| April 25, 1995 (25. 04. 95) | May 23, 1995 (23. 05. 95) |

| Name and mailing address of the ISA/ | Authorized officer |
|---|---|
| Japanese Patent Office | |
| Facsimile No. | Telephone No. |

Form PCT/ISA/210 (second sheet) (July 1992)